(19) Europäisches Patentamt
European Patent Office
Office européen des brevets

(11) EP 0 992 667 B1

(12) EUROPEAN PATENT SPECIFICATION

(45) Date of publication and mention of the grant of the patent:
**18.08.2004 Bulletin 2004/34**

(51) Int Cl.[7]: **F02D 41/38**, F02D 21/08, F02D 41/26

(21) Application number: **99119686.6**

(22) Date of filing: **05.10.1999**

(54) **Internal combustion engine**

Brennkraftmaschine

Moteur à combustion interne

(84) Designated Contracting States:
**DE FR GB**

(30) Priority: **06.10.1998 JP 28412398**
**11.11.1998 JP 32090798**

(43) Date of publication of application:
**12.04.2000 Bulletin 2000/15**

(73) Proprietor: **TOYOTA JIDOSHA KABUSHIKI KAISHA**
**Aichi-ken 471-8571 (JP)**

(72) Inventors:
- **Sasaki, Shizuo**
  **Toyota-shi, Aichi-ken, 471-8571 (JP)**
- **Gotoh, Masato**
  **Toyota-shi, Aichi-ken,471-8571 (JP)**
- **Ito, Takekazu**
  **Toyota-shi, Aichi-ken, 471-8571 (JP)**
- **Yoshizaki, Kouji**
  **Toyota-shi, Aichi-ken, 471-8571 (JP)**
- **Murata, Hiroki**
  **Toyota-shi, Aichi-ken, 471-8571 (JP)**
- **Abe, Tsukasa**
  **Toyota-shi, Aichi-ken, 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**EP-A- 0 732 485**
**EP-A- 0 803 645**
**EP-A- 0 824 188**
**DE-A- 4 333 424**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the invention

The present invention relates to an internal combustion engine according to the preamble of claim 1, which has a combustion chamber into which inert gas is introduced so as to cause combustion.

2. Description of the Related Art

Conventionally, in an internal combustion engine, for example, in a diesel engine, in order to restrict generation of NOx, it is structured such that an engine exhaust passage and an engine intake passage are connected by an exhaust gas recirculation (hereinafter, referred to as an EGR) so as to recirculate an exhaust gas, that is, an EGR gas into the engine intake passage via the EGR passage. In this case, since the EGR gas has a relatively high specific heat and accordingly can absorb a large amount of heat, a combustion temperature within the combustion chamber is lowered as an amount of the EGR gas is increased, that is, a rate of the EGR (EGR gas amount/(EGR gas amount + intake air amount)) is increased. When the combustion temperature is lowered, a generation amount of NOx is lowered. Thus, the more the EGR rate is increased, the less the generation amount of NOx becomes.

As mentioned above, it has been conventionally known that the generation amount of NOx can be lowered when the EGR rate is increased. However, in the case where the EGR rate is increased, a generation amount of a soot, that is, a smoke suddenly starts increasing abruptly when the EGR rate exceeds a certain limit. With respect to this point, it has been conventionally considered that the smoke is unlimitedly increased when the EGR rate is increased further, so that it has been considered that the EGR rate at which the smoke suddenly starts increasing is the maximum allowable limit of the EGR rate.

Accordingly, the EGR rate has been conventionally set below the maximum allowable limit. The maximum allowable limit of the EGR rate is significantly different depending on a type of the engine and a fuel, however, is within a range between about 30 % and 50 %. Therefore, in the conventional diesel engine, the EGR rate is restricted to the range between about 30 % and 50 % at the maximum.

As mentioned above, since it has been conventionally considered that the maximum allowable limit exists with respect to the EGR rate, the EGR rate has been defined within the range which is not over the maximum allowable limit and so that the generation amount of the smoke becomes as small as possible. However, even when the EGR rate is defined so that the generation amount of NOx and the smoke becomes as small as possible, the reduction of the generation amount of NOx and the smoke has a limit, so that actually a significant amount of NOx and smoke are still generated.

However, in a process of researching a combustion in the diesel engine, it has been found that when making the EGR rate greater than the maximum allowable limit, the smoke is suddenly increased as mentioned above, however, the generation amount of the smoke has a peak, and when further increasing the EGR rate to exceed the peak, then the smoke suddenly starts reducing at this time, so that when setting the EGR rate to a value equal to or more than 70 % at a time of an idling operation or strongly cooling the EGR gas, the smoke becomes substantially 0, that is, the soot is hardly generated when setting the EGR rate to a value equal to or more than 55 %. Further, it has been found that the generation amount of NOx becomes a significantly small amount at this time. Thereafter, on the basis of this information, a consideration has been performed with respect to a reason why the soot is not generated, as a result, a new combustion system which has not been obtained and can simultaneously reduce the soot and NOx has been constructed. The new combustion system will be in detail described below. In a word, it is based on a principle that a growth of a hydrocarbon is stopped in the middle of step by which the hydrocarbon grows the soot.

That is, it is ascertained as a result of many experiments and researches that the growth of the hydrocarbon stops in the middle of the step before becoming the soot when a temperature of the fuel and the ambient gas at a time of combustion within the combustion chamber is equal to or less than a certain temperature, and that the hydrocarbon grows up to become the soot at a stroke when the temperature of the fuel and the ambient gas reach a certain temperature. In this case, the temperature of the fuel and the ambient gas is greatly influenced by an endothermic effect of the gas surrounding the fuel at a time when the fuel is burned, so that it is possible to control the temperature of the fuel and the ambient gas by adjusting the heat absorption amount of the gas surrounding the fuel in correspondence to the generation amount at a time of the combustion of the fuel.

Accordingly, when restricting the temperature of the fuel and the ambient gas at a time of the combustion within the combustion chamber to a level equal to or less than the temperature at which the growth of the hydrocarbon stops on the way, the soot is not generated. Therefore, it is possible to restrict the temperature of the fuel and the ambient gas at a time of the combustion within the combustion chamber to a level equal to or less than the temperature at which the growth of the hydrocarbon stops on the way by adjusting the heat absorption amount of the gas surrounding the fuel. On the contrary, the hydrocarbon that has stopped growing before becoming the soot can be easily purified by means of a posttreatment that uses an oxidation catalyst or the like.

This is a basic principle of the new combustion system. The internal combustion engine employing the new combustion system has been already filed under the application number of EP-A-879,946 by the present applicant.

However, in an internal combustion engine structured such that an injection time corresponding to an operation state of the engine is previously stored and a fuel injection is performed on the basis of the stored injection time, when a nozzle port of the fuel injection valve is clogged even to a low degree caused by, for example, an accumulation of a deposit and the like, an actual fuel injection amount becomes less than a target injection amount. As mentioned above, in the case where the actual injection amount is shifted from the target injection amount, it is necessary to correct the injection time so that the actual injection amount becomes the target injection amount.

However, in the conventional compression ignition type internal combustion engine, it is difficult to perform an operation in a state of setting the air fuel ratio to the stoichiometric air fuel ratio. That is, because the compression ignition type internal combustion engine generally generates a large amount of smoke at a time of combustion unless the air fuel ratio is in a lean state. When increasing the injected fuel with respect to the air from the normal lean operation state so as to set the stoichiometric air fuel ratio, a rate of the fuel burned in a state of not being sufficiently mixed with the air among the injected fuel is increased, so that a most part of the fuel becomes the smoke. Accordingly, it is impossible to correct the injection time by setting the air fuel ratio to the stoichiometric air fuel ratio as mentioned above.

However, in the new combustion mentioned above, in the case of performing the new combustion in the compression ignition type internal combustion engine, it is possible to perform the operation in a state where the air fuel ratio is set to the stoichiometric air fuel ratio. That is, in the new combustion, since the part which is not sufficiently mixed with the air among the fuel finishes a reaction at a stage before growing up to become the soot and is discharged from the combustion chamber. It is purified by an oxidizing catalyst in the downstream so that the smoke is hardly discharged into the ambient air. Accordingly, when using the new combustion , it is possible to correct the injection time so that the actual injection amount becomes the target injection amount by setting the air fuel ratio to the stoichiometric air fuel ratio.

EP-A-0 803 645 discloses a generic internal combustion engine structured such that a generation amount of a soot is gradually increased to a peak when increasing an amount of an inactive gas supplied within a combustion chamber, comprising: memory means for storing an injection time $\tau$ in accordance with an operating state of the engine by increasing the amount of inactive gas supplied within the combustion chamber to be more than that of the inactive gas when the generation amount of the soot becomes peak; intake air amount detecting means for detecting an amount of intake air; and injection amount calculating means for calculating an actual injection amount from the intake air amount when the air fuel ratio is controlled to the stoichiometric air fuel ratio.

EP-A-0 824 188 discloses another internal combustion engine.

The object of the present invention is to coincide an injection amount with a target injection amount even in the case where an engine is used for a long time.

The above object is solved by combination of features of the claim 1, the sub-claims disclose further advantageous embodiments of the invention.

In order to achieve the object as mentioned above, according to the present invention, there is provided an internal combustion engine structured such that a generation amount of a soot is gradually increased to a peak when increasing an amount of an inert gas supplied within a combustion chamber, wherein an amount of an inert gas supplied within a combustion chamber is increased to be more than an amount of the inert gas when the generation amount of the soot becomes peak. The internal combustion engine is provided with memory means for storing an injection time in accordance with an operating state of the engine, intake air amount detecting means for detecting an amount of an intake air, air fuel ratio control means for controlling an air fuel ratio to a stoichiometric air fuel ratio, injection amount calculating means for calculating an actual injection amount from the intake air amount when the air fuel ratio is controlled to the stoichiometric air fuel ratio, and correcting means for correcting an injection time on the basis of the actual injection amount so that the injection amount at a time of injecting the fuel on the basis of the stored injection time becomes the target injection amount in accordance with the operation state of the engine.

This summary of the invention does not necessarily describe all necessary features so that the invention may also reside in a sub-combination of these described features.

## BRIEF DESCRIPTION OF THE DRAWINGS

Fig. 1 is a total view of a compression ignition type internal combustion engine which shows an embodiment according to the present invention;

Fig. 2 is a graph which shows a change of an opening degree of a throttle valve, an EGR rate, a generation amount of a smoke, HC, CO and NOx in correspondence to a change of an air fuel ratio;

Figs. 3A and 3B are graphs which show a combustion pressure with respect to a change of the air fuel ratio;

Fig. 4 is a view which shows a molecule of a fuel;

Fig. 5 is a graph which shows a relation between a generation amount of a smoke and an EGR rate;
Fig. 6 is a graph which shows a relation between a total amount of a suction gas and a required load;
Fig. 7 is a graph which shows a first operation area I and a second operation area II;
Fig. 8 is a graph which shows an output of an air fuel ratio sensor;
Fig. 9 is a graph which shows an opening degree of a throttle valve, an opening degree of an EGR control valve, an EGR rate, an air fuel ratio, an injection timing and an injection amount in the required load;
Figs. 10A and 10B are graphs which show a required torque;
Fig. 11 is a graph which shows a target air fuel ratio in the first operation area I;
Figs. 12A and 12B are views which show a map of a target injection amount and injection timing;
Figs. 13A to 13C are graphs which show a map of a target opening degree of a throttle valve, a target opening degree of the EGR control valve, a target fuel pressure;
Fig. 14 is a graph which shows a target air fuel ratio in the second operation area II;
Figs. 15A and 15B are views which show a map of the target injection amount and injection timing;
Figs. 16A to 16C are views which show a map of the target opening degree of the throttle valve and the target opening degree of the EGR control valve and a target fuel pressure;
Figs. 17A and 17B are graphs which show a relation between an actual injection amount and an injection time;
Fig. 18 is a flow chart for controlling an operation of an engine;
Fig. 19 is a flow chart for controlling an injection amount;
Fig. 20 is a flow chart for controlling an injection amount;
Fig. 21 is a flow chart for controlling an injection amount;
Fig. 22 is a flow chart for controlling an injection amount;
Fig. 23 is a flow chart for controlling an operation of an engine;
Fig. 24 is a flow chart for controlling an injection amount;
Fig. 25 is a flow chart for controlling an injection amount;
Fig. 26 is a total view of a compression ignition type internal combustion engine which shows another embodiment;
Fig. 27 is a graph which shows an air fuel ratio in the first operation area I;
Figs. 28A and 28B are views which show a map of a target opening degree of a throttle valve and a target opening degree of an EGR control valve;
Fig. 29 is a graph which shows a target air fuel ratio in a second operation area II;
Figs. 30A and 30B are views which show a map of a target opening degree of the throttle valve and a target opening degree of the EGR control valve;
Fig. 31 is a flow chart for controlling an operation of an engine;
Fig. 32 is a flow chart of an embodiment for controlling the throttle valve;
Fig. 33 is a graph which shows a relation between an opening degree STa of a throttle valve and an effective flow area S;
Fig. 34 is a flow chart of another embodiment for controlling the throttle valve;
Fig. 35 is a flow chart of an embodiment for controlling an EGR control valve;
Fig. 36 is a view which shows a map of a pressure within a surge tank;
Fig. 37 is a graph which shows a relation between an opening degree SEa of the EGR control valve and an effective flow area Se;
Fig. 38 is a part of a flow chart of the other embodiment for controlling the EGR control valve;
Fig. 39 is a part of the flow chart of the other embodiment for controlling the EGR control valve;
Fig. 40 is a flow chart of the other embodiment for controlling the EGR control valve;
Fig. 41 is a view which shows a map of a normal pressure within a combustion chamber at a predetermined crank angle during a compression stroke;
Fig. 42 is a part of a flow chart of the other embodiment for controlling the EGR control valve; and
Fig. 43 is a part of the flow chart of the other embodiment for controlling the EGR control valve.

DESCRIPTION OF THE PREFERRED EMBODIMENT

Fig. 1 shows an embodiment in which the present invention is applied to a 4-stroke compression ignition type internal combustion engine.

With reference to Fig. 1, reference numeral 1 denotes a main body of an engine, reference numeral 2 denotes a cylinder block, reference numeral 3 denotes a cylinder head, reference numeral 4 denotes a piston, reference numeral 5 denotes a combustion chamber, reference numeral 6 denotes a electrically controlled type fuel injection valve, reference numeral 7 denotes an intake valve, reference numeral 8 denotes an intake port, reference numeral 9 denotes an exhaust valve, and reference numeral 10 denotes an exhaust port, respectively. The intake port 8 is connected to a surge tank 12 via a corresponding intake branch pipe 11, and the surge tank 12 is connected to a supercharger, for example, an outlet portion of a compressor 16 of an exhaust turbo charger 15 via an intake duct 13 and an inter cooler 14. An inlet portion of the compressor 16 is connected to an air cleaner 18 via an air intake pipe 17, and a throttle valve 20 driven by step motor 19 is arranged within the air intake pipe 17. Further, a mass flow amount detecting device 21 for detecting a mass flow amount of a suction air is arranged within the air intake pipe 17 disposed upward the throttle valve 20.

On the contrary, the exhaust port 10 is connected to an inlet portion of an exhaust turbine 23 of the exhaust turbo charger 15 via an exhaust manifold 22, and an outlet portion of the exhaust turbine 23 is connected to a catalytic converter 26 containing a catalyst 25 having an oxidation function therewithin via an exhaust pipe 24. An air fuel ratio sensor 27 is arranged within the exhaust manifold 22.

An exhaust pipe 28 connected to an outlet portion of the catalytic converter 26 and the air intake pipe 17 disposed downstream of the throttle valve 20 are connected to each other via an exhaust gas recirculation (hereinafter, referred to as an EGR) passage 29, and an EGR control valve 31 driven by step motor 30 is arranged within the EGR passage 29. Further, an intercooler 32 for cooling an EGR gas flowing within the EGR passage 29 is arranged within the EGR passage 29. In the embodiment shown in Fig. 1, an engine cooling water is introduced into the inter cooler 32, and the EGR gas is cooled by the engine cooling water.

On the contrary, the fuel injection valve 6 is connected to a fuel reservoir, so-called a common rail 34 via a fuel supply pipe 33. A fuel is supplied into the common rail 34 from an electrically controlled type fuel pump 35 in which a discharge amount is variable, and the fuel supplied into the common rail 34 is supplied to the fuel injection valve 6 via each of the fuel supply pipe 33. A fuel pressure sensor 36 for detecting a fuel pressure within the common rail 34 is mounted to the common rail 34, so that a discharge amount of the fuel pump 35 can be controlled so that the fuel pressure within the common rail 34 becomes a target fuel pressure on the basis of an output signal of the fuel pressure sensor 36.

An electronic control unit 40 is constituted by a digital computer, and is provided with a read only memory (ROM) 42, a random access memory (RAM) 43, a microprocessor (CPU) 44, an input port 45 and an output port 46 mutually connected by a two way bus 41. An output signal of the mass flow amount detecting device 21 is input to the input port 45 via a corresponding AD converter 47, and output signals of the air fuel ratio sensor 27 and the fuel pressure sensor 36 are also input to the input port 45 via the corresponding AD converter 47, respectively. A load sensor 51 for generating an output voltage in proportion to a depression stroke L of an accelerator pedal 50 is connected to the accelerator pedal 50, and an output voltage of the load sensor 51 is input to the input port 45 via the corresponding AD converter 47. Further, a crank angle sensor 52 for generating an output pulse every time when the crank shaft rotates, for example, at 30 degrees is connected to the input port 45. On the contrary, the output port 46 is connected to the fuel injection valve 6, the throttle valve controlling step motor 19, the EGR control valve controlling step motor 30 and the fuel pump 35.

Fig. 2 represents an experimental embodiment which shows a change of an output torque and a change of a discharge amount of a smoke, HC, CO and NOx when changing an air fuel ratio A/F (an axis of abscissas in Fig. 2) by changing an opening degree of the throttle valve 20 and the EGR rate at a time of operating the engine at a low load. As is understood from Fig. 2, in this experimental embodiment, the smaller the air fuel ratio A/F becomes, the greater the EGR rate is, and the EGR rate becomes equal to or more than 65 % when the air fuel ratio is equal to or less than a stoichiometric air fuel ratio (nearly equal 14.6).

As shown in Fig. 2, in the case of making the air fuel ratio A/F smaller by increasing the EGR rate, the generation amount of the smoke starts increasing when the EGR rate becomes near 40 % and the air fuel ratio A/F takes the value of about 30. Next, when further increasing the EGR rate and making the air fuel ratio A/F smaller, the generation amount of the smoke is suddenly increased to a peak. Next, when further increasing the EGR rate and making the air fuel ratio A/F smaller, the smoke is suddenly reduced at this time, and when the air fuel ratio A/F becomes near 15.0 with setting the EGR rate to a value equal to or more than 65 %, the smoke is substantially 0. That is, the soot is hardly generated. At this time, the output torque of the engine is slightly reduced and the generation amount of NOx is significantly reduced. On the contrary, a generation amount of HC and CO starts increasing at this time.

Fig. 3A shows a change of a combustion pressure within the combustion chamber 5 when the air fuel ratio A/F is near 21 and the generation amount of the smoke is the largest, and Fig. 3B shows a change of a combustion pressure within the combustion chamber 5 when the air fuel ratio A/F is near 18 and the generation amount of the smoke is substantially 0. As is understood from comparison between Figs. 3A and 3B, the combustion pressure in the case shown in Fig. 3B where the generation amount of the smoke is substantially 0 is lower than that shown in Fig. 3A that the generation amount of the smoke is large.

The following results can be derived from the experimental results shown in Figs. 2 and 3. That is, at first, when the air fuel ratio A/F is equal to or less than 15.0 and the generation amount of the smoke is substantially 0, the generation amount of NOx is significantly reduced as shown in Fig. 2. A reduction of the generation amount of NOx means a reduction of the combustion temperature within the combustion chamber 5, so that it is said that the combustion temperature within the combustion chamber 5 becomes low when the soot is hardly generated. The same matter can be said from Fig. 3. That is, in a state shown in Fig. 3B where the soot is hardly generated, the combustion pressure becomes low, so that the combustion temperature within the combustion chamber 5 becomes low.

Secondly, when the generation amount of the smoke, that is, the generation amount of the soot becomes substantially 0, the discharge amount of HC and CO is increased as shown in Fig. 2. This means that the hydrocarbon is discharged without growing up to the soot. That is, in a straight chain hydrocarbon or an aromatic hydrocarbon shown in Fig. 4 and contained in the fuel, when the temperature is increased in an oxygen poor state, a precursor of the soot is formed due to a thermal decomposition, and the soot containing a solid mainly formed by an aggregation of carbon atoms is produced. In this case, a process of actually producing the soot is complex and it is indefinite what aspect the precursor of the soot forms, however, in any event, the hydrocarbon shown in Fig. 4 grows up to the soot via the precursor of the soot. Accordingly, as mentioned above, when the generation amount of the soot becomes substantially 0, the discharge amount of HC and CO is increased as shown in Fig. 2, however, HC at this time corresponds to the precursor of the soot or the hydrocarbon in the preceding state.

Putting in order the considerations on the basis of the experimental results shown in Figs. 2 and 3, when the combustion temperature within the combustion chamber 5 is low, the generation amount of the soot becomes substantially 0, so that the precursor of the soot or the hydrocarbon in the preceding state is discharged from the combustion chamber 5. As a result of further performing the experiments and researches with respect to the matter in detail, it becomes clear that the growing process of the soot stops on the way, that is, no soot is generated, in the case where the temperature of the fuel and the ambient gas within the combustion chamber 5 is equal to or lower than a certain temperature, and the soot is generated when the temperature of the fuel and the ambient gas within the combustion chamber 5 is equal to or higher than a certain temperature.

In this case, since the temperature of the fuel and the ambient gas when the growing process of the hydrocarbon stops in a state of the precursor of the soot, that is, the certain temperature mentioned above is changed due to various reasons such as a kind of the fuel, a compression ratio of the air fuel ratio and the like, it is not said what degree the temperature is. However, the certain temperature has a great relation to the generation amount of NOx, so that the certain temperature can be defined by the generation amount of NOx at a certain level. That is, as the EGR rate is increased, the temperature of the fuel and the ambient gas at a time of combustion is reduced, so that the generation amount of NOx is reduced. At this time, the soot is hardly generated when the generation amount of NOx becomes near 10 p.p.m.(g/t) or less. Accordingly, the certain temperature mentioned above substantially coincides with the temperature when the generation amount of NOx becomes near 10 p.p.m.(g/t) or less.

Once the soot is generated, the soot can not be purified according to the after treatment using the catalyst having an oxidation function. On the contrary, the precursor of the soot or the hydrocarbon in the preceding state can be easily purified according to the after treatment using the catalyst having an oxidation function. As mentioned above, considering the after treatment by the catalyst having an oxidation function, there is a significantly great difference between the case of discharging the hydrocarbon from the combustion chamber 5 as the precursor of the soot or the preceding state, and the case of discharging the hydrocarbon from the combustion chamber 5 as the soot. The new combustion system employed in the present invention is mainly structured so as to discharge the hydrocarbon from the combustion chamber 5 as the precursor of the soot or the preceding state without generating the soot within the combustion chamber 5 and oxidize the hydrocarbon by the catalyst having the oxidation function.

Further, in order to stop the growth of the hydrocarbon in the state prior to generation of the soot, it is necessary to restrict the temperature of the fuel and the ambient gas at a time of the combustion within the combustion chamber 5 to a temperature lower than the temperature at which the soot is generated. In this case, it is clearly understood that an endothermic effect of the gas around the fuel when the fuel is burned affects restriction of the temperature of the fuel and the ambient gas at a significantly large amount.

That is, when only an air exists around the fuel, the evaporated fuel immediately reacts with an oxygen in the air so as to be burned. In this case, the temperature of the air apart from the fuel is not increased so much, only the temperature around the fuel becomes locally increased in a significant manner. That is, at this time, the air apart from the fuel hardly performs the endothermic effect of the combustion heat in the fuel. In this case, since the combustion temperature becomes locally high in a significant manner, an unburned hydrocarbon to which the combustion heat is applied generates the soot.

On the contrary, in the case where the fuel exists in the mixed gas containing a large amount of inert gas and a small amount of air, the condition is slightly different. In this case, the evaporated fuel diffuses to the periphery and reacts with an oxygen contained in the inert gas in a mixed manner so as to burn. In this case, since the combustion heat is absorbed into the peripheral inert gas, the combustion temperature is not increased so much. That is, it is possible to restrict the combustion temperature to a low level. That is, in order to restrict the combustion temperature, the existence of the inert gas performs an important part, so that it is possible to restrict the combustion temperature to a low level due to the endothermic effect of the inert gas.

In this case, in order to restrict the temperature of the fuel and the ambient gas to be lower than the temperature at which the soot is generated, the inert gas amount sufficient for absorbing an enough amount of heat to do so is necessary. Accordingly, when the fuel amount increases, the necessary inert gas amount increases in accordance therewith. Here, in this case, the greater the specific heat of the inert gas is, the stronger the endothermic effect becomes, so that a gas having a great specific heat is preferable for the inert gas. In view of this point, since $CO_a$ and the EGR gas have a relatively great specific heat, it can be said that it is preferable to employ the EGR gas as the inert gas.

Fig. 5 shows a relation between the EGR rate and the smoke when using the EGR gas as the inert gas and changing the cooling degree of the EGR gas. That is, in Fig. 5, a curve A shows a case of strongly cooling the EGR gas so as to maintain the EGR gas temperature to a substantially 90°C, a curve B shows a case of cooling the EGR gas by a compact cooling apparatus and a curve C shows a case of not forcibly cooling the EGR gas.

As shown by the curve A in Fig. 5, in the case of strongly cooling the EGR gas, the generation amount of the soot becomes peak when the EGR rate is a little lower than 50 %, and in this case, the soot is hardly generated when setting the EGR rate to a level equal to or more than substantially 55 %. On the contrary, as shown by the curve B in Fig. 5, in the case of a little cooling the EGR gas, the generation amount of the soot becomes peak when the EGR rate is little higher than 50 %, and in this case, the soot is hardly generated when setting the EGR rate to the level equal to or higher than substantially 65 %.

Further, as shown by the curve C in Fig. 5, in the case of not forcibly cooling the EGR gas, the generation amount of the soot becomes peak when the EGR rate is near 55 %, and in this case, the soot is hardly generated when setting the EGR rate to the level equal to or more than substantially 70 %.

In this case, Fig. 5 shows a generation amount of the smoke when the engine load is comparatively high, when the engine load becomes small, the EGR rate at which the generation amount of the soot becomes peak is slightly reduced, and a lower limit of the EGR rate at which the soot is hardly generated is slightly reduced. As mentioned above, the lower limit of the EGR rate at which the soot is hardly generated changes in correspondence to a cooling degree of the EGR gas and the engine load.

Fig. 6 shows a mixed gas amount of the EGR gas and an air necessary for making the temperature of the fuel and the ambient gas at a time of combustion in the case of employing the EGR gas for the inert gas lower than the temperature at which the soot is generated, a rate of the air in the mixed gas, and a rate of the EGR gas in the mixed gas. Here, in Fig. 6, an axis of ordinates shows a total intake gas amount admitted within the combustion chamber 5, and a chain line Y shows a total intake gas amount capable of being admitted within the combustion chamber 5 when a supercharging is not performed. Further, an axis of abscissas shows a required load.

With reference to Fig. 6, the rate of the air, that is, the air amount in the mixed gas shows an amount of the air necessary for completely burning the injected fuel. That is, in the case shown in Fig. 6, a ratio between the air amount and the injection fuel amount corresponds to a stoichiometric air fuel ratio. On the contrary, in Fig. 6, the rate of the EGR gas, that is, the EGR gas amount in the mixed gas shows the EGR gas amount necessary at the lowest for setting the temperature of the fuel and the ambient gas to the temperature lower than the temperature at which the soot is formed when the injected fuel is burned. The EGR gas amount is equal to or more than 55 % of the EGR rate, and that of the embodiment shown in Fig. 6 is equal to or more than 70 %. That is, when setting the total intake gas amount admitted into the combustion chamber 5 to a solid line X in Fig. 6 and setting the rate between the air amount and the EGR gas amount among the total intake gas amount X to a rate shown in Fig. 6, the temperature of the fuel and the ambient gas becomes lower than the temperature at which the soot is generated, and accordingly the soot is not completely generated. Further, the generation amount of NOx at this time is about 10 p.p.m. (g/t) or less, so that the generation amount of NOx is significantly small.

Since the amount of heat generated when the fuel is burned is increased as the fuel injection amount is increased, in order to maintain the temperature of the fuel and the ambient gas to the temperature lower than the temperature at which the soot is generated, it is necessary to increase the absorption amount of the heat due to the EGR gas. Accordingly, as shown in Fig. 6, the EGR gas amount should be increased in accordance that the injection fuel amount is increased. That is, the EGR gas amount should be increased as a required load becomes high.

Here, in the case where the supercharging is not performed, an upper limit of the amount X of the total intake gas admitted into the combustion chamber 5 is Y, so that in Fig. 6, in an area having a required load larger than $L_0$, the air fuel ratio can not be maintained to the stoichiometric air fuel ratio unless the EGR gas rate is reduced in accordance that the required load becomes greater. In other words, when the air fuel ratio is intended to be maintained to the stoichiometric air fuel ratio in the area having the desired load larger than $L_0$ when the supercharging is not performed, the EGR rate is reduced in accordance that the required load becomes high, and accordingly, in the area having the desired load larger than $L_0$, it is impossible to maintain the temperature of the fuel and the ambient gas to the temperature lower than the temperature at which the soot is produced.

However, as shown in Fig. 1, when recirculating the EGR gas into the inlet side of the supercharger, that is, the air intake pipe 17 of the exhaust turbo charger 15 via the EGR passage 29, in the area having the required load larger than $L_0$, it is possible to maintain the EGR rate to the level equal to or higher than 55 %, for example, 70 %, so that it is possible to maintain the temperature of the fuel and the ambient gas to the temperature lower than the temperature at which the soot is produced. That is, when recirculating the EGR gas so that the EGR rate within the air intake pipe 17 becomes, for example, 70 %, the EGR rate of the intake gas having a pressure increased by the compressor 16 of the exhaust turbo charger 15 also becomes 70 %, so that it is possible to maintain the temperature of the fuel and the ambient gas to the temperature at which the soot is produced until boosting is performed by the compressor 16. Accordingly, it is possible to expand an operation range of the engine which allows for the low temperature combustion. When setting the EGR rate to the level equal to or more than 55 % in the area having the required load larger than $L_0$, the EGR control valve 31 is fully opened and the throttle valve 20 is slightly closed.

As mentioned above, Fig. 6 shows the case of burning the fuel at the stoichiometric air fuel ratio, however, even when setting the air amount to the level less than the air amount shown in Fig. 6, that is, setting the air fuel ratio rich, it is possible to restrict the generation amount of NOx near to 10 p.p.m. (g/t) or less while restricting generation of the soot, and further, even when setting the air amount to the level more than the air amount shown in Fig. 6, that is, setting an average value of the air fuel ratio to a lean value such as 17 to 18, it is possible to restrict the generation amount of NOx near to 10 p.p.m. (g/t) or less while restricting the generation of the soot.

That is, when the air fuel ratio is made rich, the fuel becomes excessive, however, since the combustion temperature is restricted to a low temperature, the excessive fuel does not grow up to the soot. The soot, thus, is not produced. Further, at this time, a significantly small amount of NOx is only produced. On the contrary, when the average air fuel ratio is lean, or even when the air fuel ratio is the stoichiometric air fuel ratio, a small amount of soot is produced if the combustion temperature becomes high. However, according to the present invention, since the combustion temperature is restricted to the low temperature, the soot is not produced at all. Further, a significantly small amount of NOx is only generated.

As mentioned above, when the low temperature combustion is performed, the soot is not produced irrespective of the air fuel ratio, that is, whether the air fuel ratio is rich or the stoichiometric air fuel ratio, or whether the average air fuel ratio is lean, so that the generation amount of NOx is significantly small. Accordingly, in view of an improvement of a specific fuel consumption, it can be said that it is preferable to make the average air fuel ratio lean.

In this case, it is limited to an engine middle or low load operation at which the amount of heat generated by the combustion is relatively small to restrict the temperature of the fuel and the ambient gas at a time of combustion within the combustion chamber to the level equal to or less than the temperature at which the growth of the hydrocarbon stops on the way. Accordingly, in the embodiment according to the present invention, at a time of operating the engine at middle or low load, the temperature of the fuel and the ambient gas at a time of combustion is restricted to the temperature equal to or less than the temperature at which the growth of the hydrocarbon stops on the way so as to perform the first combustion, that is, the low temperature combustion, and at a time of operating the engine at high load, the second combustion, that is, the conventionally performed combustion is performed. In this case, the first combustion, that is, the low temperature combustion means the combustion in which the amount of the inert gas within the combustion chamber is greater than the amount of the inert gas at which the generation amount of the soot becomes peak and the soot is hardly generated, as is apparent from the explanation as mentioned above. The second combustion, that is, the conventionally performed combustion means the combustion in which the amount of the inert gas within the combustion chamber is smaller than the amount of the inert gas at which the generation amount of the soot becomes peak.

Fig. 7 shows a first operation area I in which the first combustion, that is, the low temperature combustion is performed and a second operation area II in which the second combustion, that is, the combustion according to the conventional combustion method is performed. In this case, in Fig. 7, an axis of ordinates L (TQ) indicates a depression stroke of the acceleration pedal 50, that is, a required load, and an axis of abscissas N indicates an engine speed. Further, in Fig. 7, X (N) shows a first boundary between the first operation area I and the second operation area II, and Y(N) shows a second boundary between the first operation area I and the second operation area II. A change of the operation area from the first operation area I to the second operation area II is judged on the basis of the first boundary X(N), and a change of the operation area from the second operation area II to the first operation area I is judged on the basis of the second boundary Y(N).

That is, when the required load L exceeds the first boundary X(N) corresponding to a function of the engine speed N when the operation state of the engine is in the first operation area I and the low temperature combustion is performed, it is judged that the operation area is moved to the second operation area II, so that the combustion according to the conventional combustion method is performed. Next, when the required load L becomes lower than the second boundary Y(N) corresponding to a function of the engine speed N, it is judged that the operation area goes to the first operation area I, so that the low temperature combustion is performed again.

As mentioned above, two boundaries including the first boundary X(N) and the second boundary Y(N) close to the lower load than the first boundary X(N) are provided for the following two reasons. The first reason is that since the combustion temperature is relatively high in a side of the high load in the second operation area II, the low temperature combustion can not be performed immediately even when the required load L becomes lower than the first boundary X(N) at this time. That is, because the low temperature combustion is started only when the required load L becomes significantly low, that is, lower than the second boundary Y(N). The second reason is that a hysteresis is provided with respect to the change of the operation area between the first operation area I and the second operation area II.

In this case, when the engine operation state exists in the first operation area I and the low temperature combustion is performed, the soot is hardly generated, and in place thereof, unburned hydrocarbon is discharged from the combustion chamber 5 as the precursor of the soot or the state prior thereto. At this time, the unburned hydrocarbon discharged from the combustion chamber 5 is well oxidized by the catalyst 25 having an oxidization function. As the catalyst 25, an oxidation catalyst, a three way catalyst or an NOx absorbent can be employed. The NOx absorbent has a function of absorbing NOx when the average air fuel ratio within the combustion chamber 5 is lean and discharging NOx when the average air fuel ratio within the combustion chamber 5 becomes rich.

The NOx absorbent is structured such that, for example, an alumina is used as a carrier and a noble metal such as a platinum Pt and at least one selected from the group consisting of an alkaline metal such as a potassium K, a sodium Na, a lithium Li and a cesium Cs, an alkaline earth metal such as a barium Ba and a calcium Ca and a rare earth metal such as a lanthanum La and an yttrium Y are carried on the carrier.

As well as the oxidation catalyst, the three way catalyst and the NOx absorbent have an oxidation function, so that as mentioned above, the three way catalyst and the NOx absorbent can be used as the catalyst 25.

Fig. 8 shows a relation between an output voltage V of the air fuel ratio sensor 27 and the air fuel ratio A/F. As shown in Fig. 8, when the air fuel ratio sensor 27 generates an output voltage V at about 0.9 (V) when the air fuel ratio A/F is smaller than the stoichiometric air fuel ratio, and generates an output voltage V at about 0.1 (V) when the air fuel ratio A/F becomes greater than the stoichiometric air fuel ratio. That is, the air fuel ratio sensor 27 is constituted by a sensor of the type that the output voltage V is suddenly changed at the stoichiometric air fuel ratio. The air fuel ratio sensor 27 generates a stable output voltage V for a long time, so that it is possible to accurately detect from the output voltage V of the air fuel ratio sensor 27 whether or not the air fuel ratio is lean or rich.

Next, the description will be explained with respect to an operation control in the first operation area I and the second operation area II with reference to Fig. 9.

Fig. 9 shows an opening degree of the throttle valve 20 with respect to the required torque TQ, an opening degree of the EGR control valve 31, an EGR rate, an air fuel ratio, an injection timing and an injection amount. As shown in Fig. 9, in the first operation area I at a low required torque TQ, the opening degree of the throttle valve 20 is gradually increased to about two-thirds opening degree from a nearly full close state as the required torque TQ is increased, and the opening degree of the EGR control valve 31 is gradually increased to a full open state from a nearly full closed state as the required torque TQ is increased. Further, in the embodiment shown in Fig. 9, the EGR rate is set to substantially 70 % in the first operation area I, and the air fuel ratio is set to a lean air fuel ratio which is slightly leaner.

In other words, in the first operation area I, the opening degree of the throttle valve 20 and the opening degree of the EGR control valve 31 are controlled so that the EGR rate becomes substantially 70 % and the air fuel ratio becomes the lean air fuel ratio which is slightly lean. Further, in the first operation area I, a fuel injection is performed prior to a compression top dead center TDC. In this case, an injection start timing θS is delayed in accordance that the required load L becomes high, and an injection end timing θE is also delayed in accordance that the injection start timing θS is delayed.

Further, at a time of an idling operation, the throttle valve 20 is closed near to a full closed state, and at this time, the EGR control valve 31 is also closed near to a full closed state. When closing the throttle valve 20 near to the full closed state, a pressure within the combustion chamber 5 at the beginning of the compression becomes low, so that the compression pressure becomes small. When the compression pressure becomes small, the compression work by the piston 4 becomes small. As a result, a vibration of the engine main body 1 is reduced. That is, at a time of the idling operation, in order to restrict the vibration of the engine main body 1, the throttle valve 20 is closed near to the fully closed state.

On the contrary, the operation area of the engine changes from the first operation area I to the second operation area II, the opening degree of the throttle valve 20 is increased from about two-thirds opening degree to the fully open direction step by step. At this time, in the embodiment shown in Fig. 9, the EGR rate is reduced from substantially 70 % to 40 % or less step by step and the air fuel ratio is increased step by step. That is, since the EGR rate flies over the EGR rate range (Fig. 5) in which a large amount of smoke is generated, a large amount of smoke is not generated when the operation area of the engine changes from the first operation area I to the second operation area II.

In the second operation area II, the second combustion, that is, the conventionally performed combustion is performed. According to the combustion method, only a small amount of the soot and NOx are generated, however, in comparison with the low temperature combustion, a heat efficiency is high, so that when the operation area of the engine is changed to the second operation area II from the first operation area I, the injection amount is reduced step by step as shown in Fig. 9. In this second operation area II, the throttle valve 20 is kept in the fully open state except a portion thereof, and the opening degree of the EGR control valve 31 is gradually reduced as the required torque TQ becomes high. Further, in this operation area II, the EGR rate becomes low as the required torque TQ becomes high, and the air fuel ratio becomes small as the required torque TQ becomes high. However, the air fuel ratio is set to the lean air fuel ratio even when the required torque TQ becomes high. Further, in the second operation area II, the injection start timing θS is set near the compression top dead center TDC.

Fig. 10A shows a relation among the required torque TQ, a depression stroke L of the acceleration pedal 50 and an engine speed N. In this case, in Fig. 10A, each of the curves expresses a constant torque curve, a curve indicated by a formula TQ = 0 shows that the torque is zero, and in the remaining curves, the required torque becomes subsequently higher in the order of formulas TQ = a, TQ = b, TQ = c and TQ = d. The required torque TQ shown in Fig. 10A is previously stored in the ROM 42 in the form of a map as a relation between the depression stroke L of the acceleration pedal 50 and the engine speed N as shown in Fig. 10B. According to the present invention, the required torque TQ corresponding to the depression stroke L of the acceleration pedal 50 and the engine speed N is at first calculated from the map shown in Fig. 10B, and the fuel injection amount and the like are calculated on the basis of the required torque TQ.

Fig. 11 shows an air fuel ratio A/F in the first operation area I. In Fig. 11, curves indicated by A/F = 15.5, A/F = 16, A/F = 17 and A/F = 18 respectively show states having air fuel ratios 15.5, 16, 17 and 18, each of the air fuel ratios between the curves is defined according to a proportional allotment. As shown in Fig. 11, the air fuel ratio becomes lean in the first operation area I, and further, in the first operation area I, the air fuel ratio A/F is made lean in accordance that the required torque TQ becomes low.

That is, the amount of heat generated by the combustion is reduced as the required torque TQ becomes low. Accordingly, the low temperature combustion can be performed even when lowering the EGR rate as the required torque TQ becomes low. When lowering the EGR rate, the air fuel ratio becomes large, so that as shown in Fig. 11, the air fuel ratio A/F is made large as the required torque TQ becomes low. As the target air fuel ratio A/F is increased, the specific fuel consumption is improved, so that in order to make the air fuel ratio as lean as possible, according to the embodiment of the present invention, the air fuel ratio A/F is made large as the required torque TQ becomes low.

Fig. 12A shows a target injection amount Q in the first operation area I, and Fig. 12B shows an injection time τ in the first operation area I. As shown in Fig. 12A, the target injection amount Q in the first operation area I is previously stored within the ROM 42 as a function of the required torque TQ and the engine speed N in the form of a map, and as shown in Fig. 12B, the injection time τ in the first operation area I is previously stored within the ROM 42 as a function of the target fuel pressure P within the common rail 34 and the target injection amount Q in the form of a map.

Further, a target opening degree ST of the throttle valve 20 necessary for setting the air fuel ratio to the target air fuel ratio as shown in Fig. 11 is previously stored within the ROM 42 as a function of the required torque TQ and the engine speed N in the form of a map as shown in Fig. 13A, and a target opening degree SE of the EGR control valve 31 necessary for setting the air fuel ratio to the target air fuel ratio shown in Fig. 11 is previously stored within the ROM 42 as a function of the required torque TQ and the engine speed N in the form of a map as shown in Fig. 13B. Still further, the fuel injection pressure in the first operation area I, that is, the target fuel pressure P within the common rail 34 is previously stored within the ROM 42 as a function of the required torque TQ and the engine speed N in the form of a map as shown in Fig. 13C.

Fig. 14 shows a target air fuel ratio when the second combustion, that is, the combustion according to the conventional combustion method is performed. In this case, in Fig. 14, curves indicated by A/F = 24, A/F = 35, A/F = 45 and A/F = 60 respectively show states having target air fuel ratios 24, 35, 45 and 60.

Fig. 15A shows an injection amount Q in the second operation area II and Fig. 15B shows an injection time in the second operation area II. The injection amount Q in the second operation area II is previously stored within the ROM 42 as a function of the required torque TQ and the engine speed N in the form of a map as shown in Fig. 15A, and the injection time τ in the second operation area II is previously stored within the ROM 42 as a function of the target fuel pressure P within the common rail 34 and the target injection amount Q in the form of a map as shown in Fig. 15B.

Further, a target opening degree ST of the throttle valve 20 necessary for setting the air fuel ratio to the target air fuel ratio as shown in Fig. 14 is previously stored within the ROM 42 as a function of the required torque TQ and the engine speed N in the form of a map as shown in Fig. 16A, and a target opening degree SE of the EGR control valve 31 necessary for setting the air fuel ratio to the target air fuel ratio as shown in Fig. 14 is previously stored within the ROM 42 as a function of the required torque TQ and the engine speed N in the form of a map as shown in Fig. 16B. Still further, the fuel injection pressure in the second operation area II, that is, the target fuel pressure P within the common rail 34 is previously stored within the ROM 42 as a function of the required torque TQ and the engine speed N in the form of a map as shown in Fig. 16C.

Next, a relation between an actual injection amount Qf and an injection time $\tau$ will be described below with reference to Figs. 17A and 17B.

The actual injection amount Qf is basically in proportion to the injection time $\tau$, and accordingly, when a constant of proportion is set to K, the actual injection amount Qf can be expressed by a formula $Qf = K \times \tau$ as shown by a solid line E. When the engine is new, the actual injection amount Qf coincides with the target injection amount Q as shown in Fig. 12A by performing the fuel injection according to the injection time $\tau$ calculated on the basis of the map shown in Fig. 12B, and the actual injection amount Qf coincides with the target injection amount Q as shown in Fig. 15A by performing the fuel injection according to the injection time $\tau$ calculated on the basis of the map shown in Fig. 15B.

However, when the fuel injection valve 6 is used for a long time, the relation between the actual injection amount Qf and the injection time $\tau$ becomes a different relation from the relation $Qf = K \times \tau$ shown by the solid line E due to a plug in the nozzle port of the fuel injection valve 6 and the like as shown by a solid line F in Figs. 17A and 17B. In this case, it is understood that the actual injection amount Qf is different between the cases that the relation between the actual injection amount Qf and the injection time $\tau$ is indicated by the solid line E and it is indicated by the solid line F even when the injection time $\tau$ is the same.

As shown in Fig. 17A, the solid line F does not generally pass through the origin 0, and accordingly, the actual injection amount Qf when it is shown by the solid line F can be expressed by the following formula.

$$Qf = K \times (A \times \tau + B)$$

When the above formula is determined, that is, the values A and B are determined, an injection time TAU necessary for setting the actual injection amount Qf to the target injection amount Q can be determined on the basis of the above formula.

That is, since a relation Q = Qf is established when setting the injection time to T in a state shown by the solid line E, the following formula is established.

$$Q = K \times \tau$$

On the contrary, the injection time TAU necessary for achieving the relation Q = Qf in the case shown by the solid line F can be expressed by the following formula.

$$Q = K \times (A \times TAU + B)$$

The injection time TAU is expressed as follows on the basis of two formulas mentioned above.

$$TAU = (1/A) \times (\tau - B)$$

When calculating the values A and B in the manner mentioned above, it is possible to coincide the actual injection amount Qf with the target injection amount Q. In this case, as mentioned above, under the first combustion, it is possible to set the air fuel ratio to the stoichiometric fuel ratio. On the contrary, when setting the air fuel ratio to the stoichiometric air fuel ratio, it is possible to calculate the actual injection amount Qf on the basis of a mass flow amount of the intake air detected by the mass flow amount meter 21 (hereinafter, simply refer to as an intake air amount). Accordingly, when determining the actual injection amount Qf in two operation states having different injection amounts, it is possible to determine coefficients A and B of correction by using the injection time T at that time.

Fig. 17B shows the case in which the solid line F passes through the origin 0. Since this case corresponds to the case that the formula B = 0 is set in the solid line F of Fig. 17A, the injection time TAU necessary for setting the injection amount Qf expressed by the solid line to the target injection amount Q will be expressed by the following formula.

$$TAU = (1/A) \times \tau$$

That is, this case corresponds to that the coefficient K of correction is corrected to a value K/A.

In this case, in the embodiment shown below, the description will be given of the case of calculating the injection timing TAU according to the method explained on the basis of Fig. 17A.

Next, an operation control will be described below with reference to Fig. 18.

With reference to Fig. 18, at first, in step 100, the engine speed N is added to a value $\Sigma N$. Accordingly, the value $\Sigma N$ indicates an integrated value of the engine speed N, and the integrated value $\Sigma N$ is stored within a back up RAM 43a. Next, in step 101, it is judged whether or not a flag I is set showing that the operation area of the engine is in the first operation area I. When the flag I is set, that is, the operation area of the engine is in the first operation area I, the operation goes to step 102 where it is judged whether or not the required torque TQ becomes greater than the first boundary X1 (N). When a relation $TQ \leq X1(N)$ is established, the operation goes to step 104, and the low temperature combustion is performed.

That is, in step 104, the required torque TQ is calculated on the basis of the map shown in Fig. 10B. Next, in step 105, the target opening degree ST of the throttle valve 20 is calculated on the basis of the map shown in Fig. 13A. Next, in step 106, the target opening degree SE of the EGR control valve 31 is calculated on the basis of the map shown in Fig. 13B. Next, in step 107, the target injection amount Q is calculated on the basis of the map shown in Fig. 12A. Next, in step 108, the target fuel pressure within the common rail 34, that is, the injection pressure P is calculated on the basis of the map shown in Fig. 13C. Next, in step 109, the injection time $\tau$ is calculated on the basis of the map shown in Fig. 12B from the target injection amount Q and the target fuel pressure P. Next, in step 110, the actual injection time TAU is calculated according to the following formula.

$$TAU = (1/A) \times (T - B)$$

Next, in step 111, the injection amount correction is performed. A first embodiment of this injection amount correction is shown in Figs. 19 and 20.

On the contrary, in step 102, when it is judged that the relation L < Y(N) is established, the operation goes to step 103 where the flag I is reset, and the operation goes to step 114 where the second combustion is performed.

That is, in step 114, the required torque TQ is calculated on the basis of the map shown in Fig. 10B. Next, in step 115, the target opening degree ST of the throttle valve 20 is calculated on the basis of the map shown in Fig. 16A. Next, in step 116, the target opening degree SE of the EGR control valve 31 is calculated on the basis of the map shown in Fig. 16B. Next, in step 117, the target injection amount Q is calculated on the basis of the map shown in Fig. 15A. Next, in step 118, the target fuel pressure within the common rail 34, that is, the injection pressure P is calculated on the basis of the map shown in Fig. 16C. Next, in step 119, the injection time $\tau$ is calculated on the basis of the map shown in Fig. 15B from the target injection amount Q and the target fuel pressure P. Next, in step 120, the actual injection time TAU is calculated according to the following formula.

$$TAU = (1/A) \times (\tau - B)$$

When the flag I is reset, in the next operation cycle, the operation goes to step 112 from step 101 and it is judged whether or not the required torque TQ becomes lower than the second boundary Y(N). When the relation TQ ≥ Y(N) is established, the operation goes to step 114 where the second combustion is performed. On the contrary, in step 112, when it is judged that the relation TQ < Y(N) is established, the operation goes to step 113 where the flag I is set, and the operation goes to step 104 where the low temperature combustion is performed.

Next, the description will be given with respect to an injection amount correction routine executed in step 111 of Fig. 18 with reference to Figs. 19 and 20.

With reference to Figs. 19 and 20, at first, in step 200, it is judged whether or not the integrated value $\Sigma N$ of the engine speed is greater than a predetermined value No. When relation $\sum N \leq N_0$ is established, the operation cycle is finished. On the contrary, when the relation $\sum N >$ No is established, the operation goes to step 201 where it is judged whether or not a completion flag is set. Since the completion flag is reset at an initial stage, the operation goes to step 202.

In step 202, it is judged whether or not the target injection amount Q is between a predetermined lower limit value a and a predetermined upper limit value b. When the relation a < Q < b is established, the operation goes to step 203 where it is judged whether or not the output voltage V of the air fuel ratio sensor 27 is equal to or less than 0.45 (V), that is, whether or not the air fuel ratio is lean. When the air fuel ratio is lean, the operation goes to step 204 where a fixed value $\alpha$ is subtracted from a correction value $\Delta ST$ with respect to the throttle valve 20, and next, the operation goes to step 206. On the contrary, when the air fuel ratio is rich, the operation goes to step 205 where the fixed value $\alpha$ is added to the correction value AST, and the operation goes to step 206.

In step 206, a final target opening degree ST (= ST + $\Delta$ST) of the throttle valve 20 is calculated by adding the correction value $\Delta ST$ to the target opening degree ST of the throttle valve 20 calculated in step 105. That is, according to this embodiment, the air fuel ratio is feedback controlled to the stoichiometric air fuel ratio by controlling the opening degree of the throttle valve 20. Next, in step 207, it is judged whether or not the feedback control mentioned above is continuously executed for a fixed time. When the feedback control is not continuously executed for the fixed time, the operation goes to step 224 where the injection time is set to a value $\tau$, and when it is continuously executed for the fixed time, the operation goes to step 208.

In step 208, an intake air amount Ga detected by the mass flow amount meter 21 is read in. Next, in step 209, a current actual injection amount Q1 is calculated on the basis of the intake air amount Ga and the stoichiometric air fuel ratio. Next, in step 210, the current injection $\tau$ is set to a value $\tau 1$. Next, in step 211, the completion flag is set. Then the operation goes to step 224.

When the completion flag is set, the operation goes to step 212 from step 201 and it is judged whether or not the target injection amount Q is between a predetermined lower limit value c (> b) and a predetermined upper limit value d. When the relation c < Q < d is established, the operation goes to step 213 where it is judged whether or not the output voltage V of the air fuel ratio sensor 27 is equal to or less than 0.45 (V), that is, whether or not the air fuel ratio is lean. When the air fuel ratio is lean, the operation goes to step 214 where a fixed value α is subtracted from a correction value ΔST with respect to the throttle valve 20, and next, the step goes to step 216. On the contrary, when the air fuel ratio is rich, the step goes to step 215 and the fixed value a is added to the correction value ΔST, and the operation goes to step 216.

In step 216, a final target opening degree ST (= ST + ΔST) of the throttle valve 20 is calculated by adding the correction value ΔST to the target opening degree ST of the throttle valve 20 calculated in step 105. That is, also at this time, the air fuel ratio is feedback controlled to the stoichiometric air fuel ratio by controlling the opening degree of the throttle valve 20. Next, in step 217, it is judged whether or not the feedback control mentioned above is continuously executed for a fixed time. When the feedback control is not continuously executed for the fixed time, the operation goes to step 224, and when it is continuously executed for the fixed time, the operation goes to step 218.

In step 218, an intake air amount Ga detected by the mass flow amount meter 21 is read in. Next, in step 219, a current actual injection amount Q2 is calculated on the basis of the intake air amount Ga and the stoichiometric air fuel ratio. Next, in step 220, the current injection time τ is set to a value τ2. Next, in step 221, constants A and B of coefficient are calculated according to the formulas Q1 = (1/A) × (τ1 - B) and Q2 = (1/A) × (τ2 - B). Here, a description of this calculating method will be omitted. Next, in step 222, the completion flag is reset, and next, in step 223, the value ΣN is cleared.

Next, the description will be given of a second embodiment of an injection amount correction routine executed in step 111 of Fig. 18 with reference to Figs. 21 and 22.

With reference to Figs. 21 and 22, at first, in step 300, it is judged whether or not the integrated value ΣN of the engine speed is greater than a predetermined value $N_0$. When relation $\sum N \le$ No is established, the operation cycle is finished. On the contrary, when the relation $\sum N >$ No is established, the operation goes to step 301 where it is judged whether or not a completion flag is set. Since the completion flag is reset at an initial stage, the operation goes to step 302.

In step 302, it is judged whether or not the target injection amount Q is between a predetermined lower limit value a and a predetermined upper limit value b. When the relation a < Q < b is established, the operation goes to step 303 where it is judged whether or not the output voltage V of the air fuel ratio sensor 27 is equal to or less than 0.45 (V), that is, whether or not the air fuel ratio is lean. When the air fuel ratio is lean, the operation goes to step 304 where a fixed value β is added to a correction value Δτ with respect to the injection time, and next, the operation goes to step 306. On the contrary, when the air fuel ratio is rich, the operation goes to step 305 where the fixed value β is subtracted from the correction value Δτ, and the operation goes to step 306.

In step 306, a final target injection time τ (= τ + Δr) is calculated by adding the correction value Δτ to the injection time τ calculated in step 109. Next, in step 307, the injection time is set to a value τ. That is, according to this embodiment, the air fuel ratio is feedback controlled to the stoichiometric air fuel ratio by controlling the injection time τ. Next, in step 308, it is judged whether or not the feedback control mentioned above is continuously executed for a fixed time. When the feedback control is continuously executed for the fixed time, the operation goes to step 309.

In step 309, an intake air amount Ga detected by the mass flow amount meter 21 is read in. Next, in step 310, a current actual injection amount Q1 is calculated on the basis of the intake air amount Ga and the stoichiometric air fuel ratio. Next, in step 311, an injection time τ1 when the air fuel ratio is set to the stoichiometric air fuel ratio is calculated by dividing the stoichiometric air fuel ratio 14.6 by the target air fuel ratio A/F as shown in Fig. 11. Next, in step 312, the completion flag is set.

When the completion flag is set, the operation goes to step 313 from step 301 and it is judged whether or not the target injection amount Q is between a predetermined lower limit value c (> b) and a predetermined upper limit value d. When the relation c < Q < d is established, the operation goes to step 314 where it is judged whether or not the output voltage V of the air fuel ratio sensor 27 is equal to or less than 0.45 (V), that is, whether or not the air fuel ratio is lean. When the air fuel ratio is lean, the operation goes to step 315 where a fixed value β is added to the correction value Δτ, and next, the operation goes to step 317. On the contrary, when the air fuel ratio is rich, the operation goes to step 316 where the fixed value β is subtracted from the correction value Δτ, and then, the operation goes to step 317.

In step 317, a final target injection time τ (= τ + Δτ) is calculated by adding the correction value Δτ to the injection time τ calculated in step 109. Next, in step 318, the injection time is set to a value τ. That is, also at this time, the air fuel ratio is feedback controlled to the stoichiometric air fuel ratio by controlling the injection time τ. Next, in step 319, it is judged whether or not the feedback control mentioned above is continuously executed for a fixed time, and when the feedback control is continuously executed for the fixed time, the operation goes to step 320.

In step 320, an intake air amount Ga detected by the mass flow amount meter 21 is read in. Next, in step 321, a current actual injection amount Q2 is calculated on the basis of the intake air amount Ga and the stoichiometric air fuel ratio. Next, in step 322, an injection τ2 when the air fuel ratio is set to the stoichiometric air fuel ratio is calculated by dividing the stoichiometric air fuel ratio 14.6 by the target air fuel ratio A/F as shown in Fig. 11. Next, in step 323, the coefficients A and B of correction are calculated according to the formulas Q1 = (1/A) × (τ1 - B) and Q2 = (1/A) × (τ2 - B). Here, the description of this calculating method will be omitted. Next, in step 324, the completion flag is reset and in step 325, the value ΣN is cleared.

Another embodiment will be shown in Figs. 23 to 25. According to this embodiment, the structure is made such that the second combustion is normally performed and the first combustion is performed at a time when the injection amount should be corrected.

At first, an operation control will be described below with reference to Fig. 23.

With reference to Fig. 23, at first, in step 400, the engine speed N is added to the value ΣN. Accordingly, the value ΣN expresses an integrated value of the engine speed N, and the integrated value ΣN is stored within the backup RAM 43a. Next, in step 401, it is judged whether or not the integrated value ΣN of the engine speed is greater than the predetermined value No. When the relation $\sum N \leq N_0$ is established, the operation goes to step 411 where the second combustion is performed.

That is, in step 411, the required torque TQ is calculated on the basis of the map shown in Fig. 10B. Next, in step 412, the target opening degree ST of the throttle valve 20 is calculated on the basis of the map shown in Fig. 16A. Next, in step 413, the target opening degree SE of the EGR control valve 31 is calculated on the basis of the map shown in Fig. 16B. Next, in step 414, the target injection amount Q is calculated on the basis of the map shown in Fig. 15A. Next, in step 415, the target fuel pressure within the common rail 34, that is, the injection pressure P is calculated on the basis of the map shown in Fig. 16C. Next, in step 416, the injection time τ is calculated on the basis of the map shown in Fig. 15B from the target injection amount Q and the target fuel pressure P. Next, in step 417, the actual injection time TAU is calculated according to the following formula.

$$TAU = (1/A) \times (\tau - B)$$

On the contrary, when the relation $\sum N > No$ is established, the operation goes to step 402 from step 401 and it is judged whether or not the required torque TQ is lower than the second boundary Y(N). When the relation TQ ≥ Y(N) is established, the operation goes to step 411. On the contrary, when the relation TQ < Y(N) is established, the operation goes to step 403 where the low temperature combustion is performed.

That is, in step 403, the required torque TQ is calculated on the basis of the map shown in Fig. 10B. Next, in step 404, the target opening degree ST of the throttle valve 20 is calculated on the basis of the map shown in Fig. 13A. Next, in step 405, the target opening degree SE of the EGR control valve 31 is calculated on the basis of the map shown in Fig. 13B. Next, in step 406, the target injection amount Q is calculated on the basis of the map shown in Fig. 12A. Next, in step 407, the target fuel pressure within the common rail 34, that is, the injection pressure P is calculated on the basis of the map shown in Fig. 13C. Next, in step 408, the injection time τ is calculated on the basis of the map shown in Fig. 12B from the target injection amount Q and the target fuel pressure P. Next, in step 409, the actual injection time TAU is calculated according to the following formula.

$$TAU = (1/A) \times (\tau - B)$$

Next, in step 410, the injection amount correction is performed. A routine for this injection amount correction is shown in Figs. 24 and 25.

Next, the description will be given with respect to an injection amount correction routine executed in step 410 of Fig. 23 with reference to Figs. 24 and 25.

With reference to Figs. 24 and 25, at first, in step 500, it is judged whether or not the completion flag is set. Since the completion flag is reset at an initial stage, the operation goes to step 501. In step 501, it is judged whether or not the target injection amount Q is between a predetermined lower limit value a and a predetermined upper limit value b. When the relation a < Q < b is established, the operation goes to step 502 where it is judged whether or not the output voltage V of the air fuel ratio sensor 27 is equal to or less than 0.45 (V), that is, whether or not the air fuel ratio is lean. When the air fuel ratio is lean, the operation goes to step 503 where a fixed value β is added to a correction value Δτ with respect to the injection time, and next, the operation goes to step 505. On the contrary, when the air fuel ratio is rich, the operation goes to step 504 where the fixed value β is subtracted from the correction value Δτ, and the operation goes to step 505.

In step 505, a final injection time τ (= τ + Δτ) is calculated by adding the correction value Δτ to the injection τ calculated in step 408. Next, in step 506, the injection time is set to the value τ. That is, according to this embodiment, the air fuel ratio is feedback controlled to the stoichiometric air fuel ratio by controlling the injection time τ. Next, in step 507, it is judged whether or not the feedback control mentioned above is continuously executed for a fixed time, and when the feedback control is continuously executed for the fixed time, the operation goes to step 508.

In step 508, an intake air amount Ga detected by the mass flow amount meter 21 is read in. Next, in step 509, a current actual injection amount Q1 is calculated on the basis of the intake air amount Ga and the stoichiometric air fuel ratio. Next, in step 510, the injection τ1 when the air fuel ratio is set to the stoichiometric air fuel ratio is calculated by dividing the stoichiometric air fuel ratio 14.6 by the target air fuel ratio A/F shown in Fig. 11. Next, in step 511, the completion flag is set.

When the completion flag is set, the operation goes to step 512 from step 500 and it is judged whether or not the target injection amount Q is between a predetermined lower limit value c (> b) and a predetermined upper limit value d. When the relation c < Q < d is established, the operation goes to step 513 where it is judged whether or not the output voltage V of the air fuel ratio sensor 27 is equal to or less than 0.45 (V), that is, whether or not the air fuel ratio is lean. When the air fuel ratio is lean, the operation goes to step 514 where the fixed value $\beta$ is added to the correction value $\Delta\tau$, and next, the operation goes to step 516. On the contrary, when the air fuel ratio is rich, the operation goes to step 514 where the fixed value $\beta$ is subtracted from the correction value $\Delta\tau$, and next, the operation goes to step 516.

In step 516, a final injection time $\tau$ (= $\tau + \Delta\tau$) is calculated by adding the correction value $\Delta\tau$ to the injection time $\tau$ calculated in step 408. Next, in step 517, the injection time is set to the value $\tau$. That is, also at this time, the air fuel ratio is feedback controlled to the stoichiometric air fuel ratio by controlling the injection time $\tau$. Next, in step 518, it is judged whether or not the feedback control as mentioned above is continuously executed for a fixed time, and when the feedback control is continuously executed for the fixed time, the operation goes to step 519.

In step 519, an intake air amount Ga detected by the mass flow amount meter 21 is read in. Next, in step 520, a current actual injection amount Q2 is calculated on the basis of the intake air amount Ga and the stoichiometric air fuel ratio. Next, in step 521, the injection time 2 when the air fuel ratio is set to the stoichiometric air fuel ratio is calculated by dividing the stoichiometric air fuel ratio 14.6 by the target air fuel ratio A/F shown in Fig. 11. Next, in step 522, constants A and B of coefficient are calculated according to the formulas $Q1 = (1/A) \times (\tau 1 - B)$ and $Q2 = (1/A) \times (\tau 2 - B)$. Here, the description of this calculating method will be omitted. Next, in step 523, the completion flag is reset, and next, in step 524, the value $\Sigma N$ is cleared.

In this case, the new combustion which corresponds to the assumption of the present invention is performed under a condition in which a large amount of EGR gas is supplied. Accordingly, the deposit is easily accumulated on the throttle valve for controlling the intake air amount and the EGR control valve for controlling the EGR gas amount, so that the relation between the opening degree and the flow amount of the throttle valve and the EGR control valve is changed at the elapse of time. However, under the new combustion, it is necessary to finely control the intake air amount and the EGR gas amount, so that since there is a risk that it is impossible to secure a good new combustion for a long time when the relation between the opening degree and the flow amount of the throttle valve and the EGR control valve is changed, the description will be given of a technology of correcting the opening degree of the throttle valve for controlling the intake air amount and the EGR control valve for controlling the EGR gas amount.

Fig. 26 shows the case that the present invention is applied to a 4-stroke compression ignition type internal combustion engine corresponding to an embodiment of the technique mentioned above.

The same reference numerals as those of the structure shown in Fig. 1 are attached to the same elements shown in Fig. 26, and an explanation thereof will be omitted.

The exhaust manifold 22 and the surge tank 12 are connected to each other via the EGR passage 29, and the EGR control valve 31 driven by the step motor 30 is arranged within the EGR passage 29.

Pressure sensors 36, 37 and 38 are respectively arranged within the surge tank 12, the intake air passage disposed in an upstream portion of the throttle valve 20 and the EGR passage 29 disposed in an upstream portion of the EGR control valve 31, and output signals of the pressure sensors 36, 37 and 38 are input to an input port 45 within an electronic control unit 40 via corresponding AD converters 47.

Further, a pressure sensor 39 for detecting a pressure within the combustion chamber 5 is arranged within the combustion chamber 5. An output signal of the pressure sensor 39 is input to the input port 45 via the respective corresponding AD converters 47. Still further, an opening degree sensor 20a for detecting an opening degree of the throttle valve 20 is mounted to the throttle valve 20, and an opening degree sensor 31a for detecting an opening degree of the EGR control valve 31 is mounted to the EGR control valve 31. Output signals of the opening degree sensors 20a and 31a are input to the input port 45 via the corresponding AD converters 47.

In the embodiment mentioned above, the control is performed on the basis of the required torque TQ, however, according to the present embodiment, the control is performed on the basis of a required load L.

Fig. 27 shows an air fuel ratio A/F in the first operation area I. In Fig. 27, curves indicated by A/F = 15.5, A/F = 16, A/F = 17 and A/F = 18 respectively show states having air fuel ratios 15.5, 16, 17 and 18, each of the air fuel ratios between the curves is defined according to a proportional allotment. As shown in Fig. 27, the air fuel ratio becomes lean in the first operation area I, and further, in the first operation area I, the air fuel ratio A/F is made lean in accordance that the required load L becomes low.

That is, the amount of heat generated by the combustion is reduced as the required load L becomes low. Accordingly, the low temperature combustion can be performed even when lowering the EGR rate as the required load L becomes low. When lowering the EGR rate, the air fuel ratio becomes large, so that as shown in Fig. 27, the air fuel ratio A/F is made large as the required load L becomes low. As the target air fuel ratio A/F is increased, the specific fuel consumption is improved, so that in order to make the air fuel ratio as lean as possible, according to the embodiment of the present invention, the air fuel ratio A/F is made large as the required load L becomes low.

In this case, a target opening degree ST of the throttle valve 20 necessary for setting the air fuel ratio to the target air fuel ratio as shown in Fig. 27 is previously stored within the ROM 42 as a function of the required load L and the engine speed N in the form of a map as shown in Fig. 28A, and a target opening degree SE of the EGR control valve 31 necessary for setting the air fuel ratio to the target air fuel ratio shown in Fig. 27 is previously stored within the ROM 42 as a function of the required load L and the engine speed N in the form of a map as shown in Fig. 28B.

Fig. 29 shows a target air fuel ratio when the second combustion, that is, the combustion according to the conventional combustion method is performed. In this case, in Fig. 29, curves indicated by A/F = 24 , A/F = 35, A/F = 45 and A/F = 60 respectively show states having target air fuel ratios 24, 35, 45 and 60. A target opening degree ST of the throttle valve 20 necessary for setting the air fuel ratio to this target air fuel ratio is previously stored within the ROM 42 as a function of the required load L and the engine speed N in the form of a map as shown in Fig. 30A, and a target opening degree SE of the EGR control valve 31 necessary for setting the air fuel ratio to this target air fuel ratio is previously stored within the ROM 42 as a function of the required load L and the engine speed N in the form of a map as shown in Fig. 30B.

Next, the description will be given of the operation control with reference to Fig. 31.

With reference to Fig. 31, at first, in step 600, it is judged whether or not a flag I is set showing that the operation area of the engine is in the first operation area I. When the flag I is set, that is, the operation area of the engine is in the first operation area I, the operation goes to step 601 where it is judged whether or not the required load L becomes greater than the first boundary X1 (N). When a relation L ≤ X1 (N) is established, the operation goes to step 603.

In step 603, the throttle valve 20 is controlled so that the intake air amount becomes a normal intake air amount. Next, in step 604, the EGR control valve 31 is controlled so that the EGR gas amount becomes a normal EGR gas amount. Processes performed in steps 603 and 604 will be described later. Next, in step 605, the fuel injection is performed so as to obtain the air fuel ratio shown in Fig. 27. At this time, the low temperature combustion is performed.

On the contrary, in step 601, when it is judged that the relation L > X(N) is established, the operation goes to step 602 where a flag I is reset and then the operation goes to step 608 where the second combustion is performed.

That is, in step 608, the target opening degree ST of the throttle valve 20 is calculated from a map shown in Fig. 30A, and the opening degree of the throttle valve 20 is set to the target opening degree ST. Next, in step 609, the target opening degree SE of the EGR control valve 31 is calculated from a map shown in Fig. 30B, and the opening degree of the EGR control valve 31 is set to the target opening degree SE. Next in step 610, the fuel injection is performed so as to obtain the lean air furl ratio as shown in Fig. 29.

When the flag I is reset, in the next process cycle, the operation goes to step 606 from step 600 and it is judged whether or not the required load L becomes lower than the second boundary Y(N). When the relation L ≥ Y(N) is established, the operation goes to step 608 where the second combustion is performed. On the contrary, when it is judged in step 606 that the relation L < Y(N) is established, the operation goes to step 607 where the flag I is set, and next, the operation goes to step 603 where the low temperature combustion is performed.

Next, the description will be given with respect to an embodiment of a control of the throttle valve performed in step 603 as shown in Fig. 31 with reference to Fig. 32.

According to this embodiment, a normal intake air amount Ga0 under a predetermined operation state of the engine in which the EGR control valve 31 is closed, for example, under a condition that the required load L is $L_0$ and the engine speed N is No is previously measured. The intake air amount Ga0 is, for example, set to a value measured by the mass flow amount meter 21 immediately after the engine is assembled, and accordingly, the intake air amount Ga0 expresses the normal intake air amount when the required load L is $L_0$ and the engine speed N is $N_0$.

According to this embodiment, when the low temperature combustion is performed, the opening degree of the throttle valve 20 is set to the target opening degree ST shown in Fig. 28A. However, when the deposit is accumulated in the throttle valve 20 at this time, the intake air amount does not become the normal intake air amount, so that the air fuel ratio and the EGR rate are shifted from the target values. Then, according to the embodiment, the structure is made such that in the case where the mass flow amount of the intake air (hereinafter, simply referred to as an intake air amount) Ga detected by the mass flow amount meter 21 when the EGR control valve 31 is closed, the required load L is $L_0$ and the engine speed N is $N_0$ no longer coincides with a normal intake air amount Ga0, the target opening degree ST of the throttle valve 20 is corrected so that the detected intake air amount Ga coincides with the normal intake air amount Ga0.

With reference to Fig. 32, at first, in step 700, the target opening degree ST of the throttle valve 20 is calculated on the basis of the map shown in Fig. 28A. Next in step 701, it is judged whether or not a condition for correcting the opening degree of the throttle valve is established. For example, when a fixed period has passed after the preceding correction, it is judged that the condition for the correction is established. Next in step 702, it is judged whether or not the required load L is $L_0$ and the engine speed N is $N_0$. When the relation $L = L_0$ and $N = N_0$ is established, the operation goes to step 703 where the intake air amount Ga detected by the mass flow amount meter 21 is taken in. Next in step 704, it is judged whether or not the detected intake air amount Ga is greater than the normal intake air amount Ga0.

When the relation Ga > Ga0 is established, the operation goes to step 705 where a fixed value a is subtracted from the correction value ΔST with respect to the target opening degree of the throttle valve 20. On the contrary, when the relation Ga ≤ Ga0 is established, the operation goes to step 706 where the fixed value a is added to the correction value AST. Next, the operation goes to step 707 where the correction value AST is added to the target opening degree ST of the throttle valve 20. On the contrary, when it is judged in step 701 that the correction condition is not established, or it is judged in step 702 that the relation $L = L_0$ and $N = N_0$ is not established, the operation jumps to step 707.

That is, when the relation Ga < Ga0 becomes established, for example, by the accumulation of the deposit in the throttle valve 20, the correction amount ΔST is increased until the value Ga becomes substantially equal to the value Ga0. As a result, the actual intake air amount is going to coincide with the normal intake air amount when controlling the throttle valve 20 on the basis of the map shown in Fig. 28A.

Next, the description will be given with respect to the other embodiment of the control of the throttle valve which is performed in step 603 of Fig. 31 below with reference to Figs. 33 and 34.

According to the embodiment, a relation between an actual opening degree STa of the throttle valve 20 and a normal effective flow area S as shown in Fig. 33 is previously determined, and the relation is previously stored within the ROM 42. Further, a differential pressure ΔP between front and rear portions of the throttle valve 20 is calculated on the basis of the output signal of the pressure sensors 36 and 37. If the effective flow area of the throttle valve 20 is the normal effective area S and the differential pressure between the front and rear portions of the throttle valve 20 is the value ΔP, it is expected that the intake air amount Ga0 at this time is obtained by a formula S × (the square root of ΔP).

Accordingly, in the case where the actual intake air amount Ga does not coincide with the value Ga0, the effective flow area of the throttle valve 20 does not become the normal flow area S, for example, due to the accumulation of the deposit. Then, according to the embodiment, the structure is made such that the target opening degree ST of the throttle valve 20 is reduced when the relation Ga > Ga0 is established, and the target opening degree ST of the throttle valve 20 is increased when the relation Ga ≤ Ga0 is established, whereby the actual intake air amount coincides with the normal intake air amount when controlling the throttle valve 20 on the basis of the map shown in Fig. 28A.

Next, the description will be given with respect to a control routine of the throttle valve for executing this embodiment below with reference to Fig. 34.

With reference to Fig. 34, at first, in step 800, the target opening degree ST of the throttle valve 20 is calculated on the basis of the map shown in Fig. 28A. Next in step 801, it is judged whether or not the correction condition for the throttle valve opening degree is established. For example, when a fixed period has passed after the preceding correction, it is judged that the correction condition is established. Next in step 802, it is judged whether or not the operation state of the engine is a predetermined operation state. When the operation state of the engine is the predetermined operation state, the operation goes to step 803 where the intake air amount Ga detected by the mass flow amount meter 21 is taken in. Next in step 804, the actual opening degree STa of the throttle valve 20 detected by the opening degree sensor 20a is taken in.

Next in step 805, the correction value ΔST with respect to the target opening degree of the throttle valve 20 is added to the actual opening degree STa of the throttle valve 20. Next, in step 806, the normal effective flow area S with respect to the value STa (= STa + ΔST) is calculated on the basis of the relation shown in Fig. 33. Next in step 807, the differential pressure ΔP between the front and rear portions of the throttle valve 20 is calculated on the basis of the output signals of the pressure sensors 36 and 37. Next, in step 808, the intake air amount Ga0 (= S × (the square root of ΔP)) on the assumption that the effective flow area of the throttle valve 20 is the normal flow area S is calculated. Next in step 809, it is judged whether or not the detected intake air amount Ga is larger than the intake air amount Ga0.

When the relation Ga > Ga0 is established, the operation goes to step 810 where a fixed value b is subtracted from the correction value ΔST with respect to the target opening degree of the throttle valve 20. On the contrary, when the relation Ga ≤ Ga0 is established, the operation goes to step 811 where the fixed value b is added to the correction value ΔST. Next, the step goes to step 812 and the correction value ΔST is added to the target opening degree ST of the throttle valve 20. On the contrary, when it is judged in step 801 that the correction condition is not established, or when it is judged in step 802 that the operation state of the engine is not a predetermined operation state, the operation jumps to step 812.

Next, the description will be given of an embodiment for controlling an EGR control valve which is performed in step 604 as shown in Fig. 31 below.

A pressure within the intake air passage disposed in a downstream portion of the throttle valve 20, for example, a pressure within the surge tank 12 will be defined to a certain value when the intake air amount and the amount of the EGR gas is defined. According to the embodiment, since the target opening degree of the throttle valve 20 and the target opening degree of the EGR control valve 31 are determined so that the air fuel ratio becomes the target air fuel ratio and the EGR rate becomes the target EGR rate, the pressure within the surge tank 12 becomes a certain normal pressure PM0 when the intake air amount becomes the normal intake air amount and the EGR gas amount becomes the normal EGR gas amount. According to the embodiment, a normal pressure PM0ij with respect to a required load Li (i = 1, 2, ...) and an engine speed Nj (j = 1, 2, ...) is previously stored within the ROM 42.

In this case, according to the embodiment, the intake air amount is made to coincide with the normal intake air amount due to the control of the throttle valve 20 performed in step 603 as shown in Fig. 31. Accordingly, in the case where the actual pressure PM within the surge tank 12 does not coincide with the normal pressure PM0ij when the required load L is a value Li and the engine speed N is a value Nj, the EGR gas amount does not become the normal EGR gas amount due to the accumulation of the deposit and the like. In this case, the EGR gas amount is more than the normal EGR gas amount when the relation PM > PM0ij is established, and the EGR gas amount is less than the normal EGR gas amount when the relation PM < PM0ij is established.

Then, according to this embodiment, the structure is made such that the target opening degree SE of the EGR control valve 31 is reduced when the relation PM > PM0ij is established, and the target opening degree SE of the EGR control valve 31 is increased when the relation PM ≤ PM0ij is established, thereby coinciding the EGR gas amount with the normal EGR gas amount.

Next, the description will be given with respect to a control routine of the EGR control valve for executing the embodiment below with reference to Fig. 35.

With reference to Fig. 35, at first in step 900, the target opening degree SE of the EGR control valve 31 is calculated on the basis of the map shown in Fig. 28B. Next in step 901, it is judged whether or not the correction condition for the opening degree of the EGR control valve is established. For example, when a fixed period has passed after the preceding correction, it is judged that the correction condition is established. Next in step 902, it is judged whether or not the required load L is a value Li and the engine speed N is a value Nj. When the relation L = Li and N = Nj is established, the operation goes to step 903 where a normal pressure PM0ij within the surge tank 12 is calculated. Next in step 904, it is judged whether or not the pressure PM within the surge tank 12 detected by the pressure sensor 36 is higher than the normal pressure PM0ij.

When the relation PM > PM0ij is established, the operation goes to step 905 where a fixed value c is subtracted from the correction value ΔSE with respect to the target opening degree of the EGR control valve 31. On the contrary, when the relation PM ≤ PM0ij is established, the operation goes to step 906 where the fixed value c is added to the correction value ΔSE. Next, the step goes to step 907 where the correction value ΔSE is added to the target opening degree SE of the EGR control valve 31. On the contrary, when it is judged in step 901 that the correction condition is not established, or when it is judged in step 902 that the relation L = Li and N = Nj is not established, the operation jumps to step 907.

Next, the description will be given with respect to the other embodiment for controlling the EGR control valve which is performed in step 604 as shown in Fig. 31 below with reference to Figs. 36 to 39.

As mentioned above, when the intake air amount Ga and the EGR gas amount Ge are defined, the pressure within the surge tank 12 is determined to a certain value. Then according to the embodiment, the pressure PM0 within the surge tank 12 when the intake air amount is a value Ga and the EGR gas amount is a value Ge is previously stored within the ROM 42 as a function of the intake air amount Ga and the EGR gas amount Ge in the form of a map as shown in Fig. 36.

On the contrary, according to the embodiment, the relation between the actual opening degree SEa of the EGR control valve 31 and the normal effective flow area Se as shown in Fig. 36 is previously determined and the relation is stored previously within the ROM 42. Further, the differential pressure APe between the front and rear portions of the EGR control valve 31 is calculated on the basis of the output signals of the pressure sensors 36 and 38. If it is supposed that the effective flow area of the EGR control valve 31 is the normal effective flow area Se and the differential pressure between the front and rear portions of the EGR control valve 31 is the value ΔPe, it is expected that the EGR gas amount Ge0 supplied at this time is expressed by the formula Se × (the square root of APe) and the pressure PM within the surge tank 12 becomes the value PM0 on the map shown in Fig. 36 at a time of setting the value Ge0 to the value Ge.

Accordingly, in the case where the pressure PM within the surge tank 12 does not coincide with the value PM0 on the map shown in Fig. 36 at this time, it is defined that the effective flow area of the EGR control valve 31 is not the normal flow area Se, for example, due to the accumulation of the deposit. Then, according to this embodiment, the structure is made such that the target opening degree SE of the EGR control valve 31 is reduced when the relation PM > PM0 is established, and the target opening degree SE of the EGR control valve 31 is increased when the relation PM ≤ PM0 is established, whereby the actual EGR gas amount coincides with the normal EGR gas amount when controlling the EGR control valve 31 on the basis of the map shown in Fig. 28B.

Next, the description will be given with respect to a control routine of the EGR control valve for executing this embodiment below with reference to Figs. 38 and 39.

With reference to Figs. 38 and 39, at first, in step 1000, the target opening degree SE of the EGR control valve 31 is calculated on the basis of the map shown in Fig. 28B. Next in step 1001, it is judged whether or not the correction condition for the opening degree of the EGR control valve is established. For example, when a fixed period has passed after the preceding correction, it is judged that the correction condition is established. Next in step 1002, it is judged whether or not the operation state of the engine is a predetermined operation state. When the operation state of the engine is the predetermined operation state, the operation goes to step 1003 where the actual opening degree SEa of the EGR control valve 31 detected by the opening degree sensor 31a is taken in.

Next in step 1004, the correction value ΔSE with respect to the target opening degree of the EGR control valve 31 is added to the actual opening degree SEa of the EGR control valve 31. Next, in step 1005, the normal effective flow area Se with respect to the value SEa (= SEa + ΔSE) is calculated on the basis of the relation shown in Fig. 37. Next in step 1006, the differential pressure ΔPe between the front and rear portions of the EGR control valve 31 is calculated on the basis of the output signals of the pressure sensors 36 and 38. Next in step 1007, the EGR gas amount Ge0 (= Se × (the square root of ΔPe) on the assumption that the effective flow area of the EGR control valve 31 is the normal flow area Se is calculated. Next in step 1008, the intake air amount Ga detected by the mass flow amount meter 21 is taken in. Next in step 1009, the normal pressure PM0 within the surge tank 12 is calculated on the basis of the map shown in Fig. 36 by setting the value Ge0 to the value Ge. Next in step 1010, it is judged whether or not the pressure PM within the surge tank 12 detected by the pressure sensor 36 is larger than the normal pressure PM0.

When the relation PM > PM0 is established, the operation goes to step 1011 where a fixed value d is subtracted from the correction value ΔSE with respect to the target opening degree of the EGR control valve 31. On the contrary, when the relation PM ≤ PM0 is established, the step goes to step 1012 and the fixed value d is added to the correction value ΔSE. Next, the operation goes to step 1013 where the correction value ΔSE is added to the target opening degree SE of the EGR control valve 31. On the contrary, when it is judged in step 1001 that the correction condition is not established, or when it is judged in step 1002 that the operation state of the engine is not a predetermined operation state, the operation jumps to step 1013.

Next, the description will be given with respect to the other embodiment for controlling an EGR control valve which is performed in step 604 shown in Fig. 31 below.

A pressure within the combustion chamber 5 at a predetermined crank angle during a compression stroke will be defined to a certain value when the amount of the intake air and the amount of the EGR gas are defined. According to the embodiment, since the target opening degree of the throttle valve 20 and the target opening degree of the EGR control valve 31 are determined so that the air fuel ratio becomes the target air fuel ratio and the EGR rate becomes the target EGR rate, the pressure within the combustion chamber 5 at the predetermined crank angle during the compression stroke becomes a certain normal pressure CP0 when the intake air amount becomes the normal intake air amount and the EGR gas amount becomes the normal EGR gas amount. According to the embodiment, a normal pressure CP0ij with respect to a required load Li (i = 1, 2, ...) and an engine speed Nj (j = 1, 2, ...) is previously stored within the ROM 42.

In this case, according to the embodiment, the intake air amount is made to coincide with the normal intake air amount due to the control of the throttle valve 20 performed in step 603 as shown in Fig. 31. Accordingly, in the case where the actual pressure CP within the combustion chamber 5 at the predetermined crank angle during the compression stroke does not coincide with the normal pressure CP0ij when the required load L is a value Li and the engine speed is a value Nj, the EGR gas amount does not become the normal EGR gas amount due to the accumulation of the deposit and the like. In this case, the EGR gas amount is more than the normal EGR gas amount when the relation CP > CP0ij is established, and the EGR gas amount is less than the normal EGR gas amount when the relation CP < CP0ij is established.

Then, according to this embodiment, the structure is made such that the target opening degree SE of the EGR control valve 31 is reduced when the relation CP > CP0ij is established, and the target opening degree SE of the EGR control valve 31 is increased when the relation CP ≤ CP0ij is established, thereby coinciding the EGR gas amount with the normal EGR gas amount.

Next the description will be given of a control routine of the EGR control valve for executing the embodiment below with reference to Fig. 40.

With reference to Fig. 40, at first in step 1100, the target opening degree SE of the EGR control valve 31 is calculated on the basis of the map shown in Fig. 28B. Next in step 1101, it is judged whether or not the correction condition for the opening degree of the EGR control valve is established. For example, when a fixed period has passed after the preceding correction, it is judged that the correction condition is established. Next in step 1102, it is judged whether or not the required load L is a value Li and the engine speed N is a value Nj. When the relation L = Li and N = Nj is established, the operation goes to step 1103 where a normal pressure CP0ij is calculated. Next in step 1104, it is judged whether or not the pressure CP within the combustion chamber 5 at the predetermined crank angle during the compression stroke detected by the pressure sensor 39 is higher than the normal pressure CPOij.

When the relation CP > CP0ij is established, the operation goes to step 1105 where a fixed value e is subtracted from the correction value ASE with respect to the target opening degree of the EGR control valve 31. On the contrary, when the relation CP ≤ CP0ij is established, the operation goes to step 1106 where the fixed value e is added to the correction value ΔSE. Next, the operation goes to step 1107 where the correction value ΔSE is added to the target opening degree SE of the EGR control valve 31. On the contrary, when it is judged in step 1101 that the correction condition is not established, or when it is judged in step 1102 that the relation L = Li and N = Nj is not established, the operation jumps to step 1107.

Next the description will be given with respect to an embodiment for controlling the EGR control valve which is performed in step 604 as shown in Fig. 31 below with reference to Figs. 41 to 43.

As mentioned above, when the intake air amount Ga and the EGR gas amount Ge are defined, the pressure within the combustion chamber 5 at the predetermined crank angle during the compression stroke is determined to a certain value. Then, according to the embodiment, the pressure CP0 within the combustion chamber 5 at the predetermined crank angle during the compression stroke when the intake air amount is a value Ga and the EGR gas amount is a value Ge is previously stored within the ROM 42 as a function of the intake air amount Ga and the EGR gas amount Ge in the form of a map as shown in Fig. 41.

On the contrary, according to the embodiment, the relation between the actual opening degree SEa of the EGR control valve 31 and the normal effective flow area Se as shown in Fig. 37 is previously determined and the relation is stored previously within the ROM 42. Further, the differential pressure APe between the front and rear portions of the EGR control valve 31 is calculated on the basis of the output signals of the pressure sensors 36 and 38. If it is supposed that the effective flow area of the EGR control valve 31 is the normal effective flow area Se and the differential pressure between the front and rear portions of the EGR control valve 31 is the value APe, it is expected that the EGR gas amount Ge0 supplied at this time is expressed by the formula Se × (the square root of ΔPe) and the pressure CP within the combustion chamber 5 at the predetermined crank angle during the compression stroke becomes the value CP0 on the map shown in Fig. 41 at a time of setting the value Ge0 to the value Ge.

Accordingly, in the case where the pressure CP does not coincide with the value CP0 on the map as shown in Fig. 41 at this time, it is defined that the effective flow area of the EGR control valve 31 is not the normal flow area Se, for example, due to the accumulation of the deposit. Then, according to this embodiment, the structure is made such that the target opening degree SE of the EGR control valve 31 is reduced when the relation CP > CP0 is established, and the target opening degree SE of the EGR control valve 31 is increased when the relation CP ≤ CP0 is established, whereby the actual EGR gas amount coincides with the normal EGR gas amount when controlling the EGR control valve 31 on the basis of the map as shown in Fig. 28B.

Next the description will be given with respect to a control routine of the EGR control valve for executing this embodiment below with reference to Figs. 42 and 43.

With reference to Figs. 42 and 43, at first in step 1200, the target opening degree SE of the EGR control valve 31 is calculated on the basis of the map shown in Fig. 28B. Next in step 1201, it is judged whether or not the correction condition for the opening degree of the EGR control valve is established. For example, when a fixed period has passed after the preceding correction, it is judged that the correction condition is established. Next in step 1202, it is judged whether or not the operation state of the engine is a predetermined operation state. When the operation state of the engine is the predetermined operation state, the operation goes to step 1203 where the actual opening degree SEa of the EGR control valve 31 detected by the opening degree sensor 31a is taken in.

Next in step 1204, the correction value ΔSE with respect to the target opening degree of the EGR control valve 31 is added to the actual opening degree SEa of the EGR control valve 31. Next in step 1205, the normal effective flow area Se with respect to the value SEa (= SEa + ASE) is calculated on the basis of the relation shown in Fig. 37. Next in step 1206, the differential pressure ΔPe between the front and rear portions of the EGR control valve 31 is calculated on the basis of the output signals of the pressure sensors 36 and 38. Next in step 1207, the EGR gas amount Ge0 (= Se × (the square root of ΔPe)) on the assumption that the effective flow area of the EGR control valve 31 is the normal flow area Se is calculated. Next in step 1208, the intake air amount Ga detected by the mass flow amount meter 21 is taken in. Next in step 1209, the normal pressure CP0 is calculated on the basis of the map shown in Fig. 41 by setting the value Ge0 to the value Ge. Next in step 1210, it is judged whether or not the pressure CP within the combustion chamber 5 at the predetermined crank angle during the compression stroke detected by the pressure sensor 39 is larger than the normal pressure CP0.

When the relation CP > CP0 is established, the operation goes to step 1211 where a fixed value f is subtracted from the correction value ΔSE with respect to the target opening degree of the EGR control valve 31. On the contrary, when the relation CP ≤ CP0 is established, the operation goes to step 1212 where the fixed value f is added to the correction value ΔSE. Next, the operation goes to step 1213 where the correction value ASE is added to the target opening degree SE of the EGR control valve 31. On the contrary, when it is judged in step 1201 that the correction condition is not established, or when it is judged in step 1202 that the operation state of the engine is not a predetermined operation state, the operation jumps to step 1213.

A selective switching is performed between a first combustion mode in which the combustion chamber (5) contains EGR gas of an amount larger than an amount where a generation amount of soot reaches its peak, so that soot is hardly generated, and a second combustion mode in which the combustion chamber (5) contains EGR gas of an amount smaller than an amount where a generation amount of soot reaches its peak. The injection time $\tau$ in accordance with the operating state of the engine is stored. During the first combustion mode, the air fuel ratio is controlled to the stoichiometric air fuel ratio, at which the actual injection amount is derived from the intake air amount. The injection time $\tau$ is corrected based on the actual injection amount such that the injection amount at a time of injecting the fuel based on the stored injection time reaches the target injection amount in accordance with the operating state of the engine.

A selective switching is performed between a first combustion mode in which the combustion chamber (5) contains EGR gas of an amount larger than an amount where a generation amount of soot reaches its peak, so that soot is hardly generated, and a second combustion mode in which the combustion chamber (5) contains EGR gas of an amount smaller than an amount where a generation amount of soot reaches its peak. The injection time $\tau$ in accordance with the operating state of the engine is stored. During the first combustion mode, the air fuel ratio is controlled to the stoichiometric air fuel ratio, at which the actual injection amount is derived from the intake air amount. The injection time $\tau$ is corrected based on the actual injection amount such that the injection amount at a time of injecting the fuel based on the stored injection time reaches the target injection amount in accordance with the operating state of the engine.

## Claims

**1.** An internal combustion engine structured such that a generation amount of a soot is gradually increased to a peak when increasing an amount of an inactive gas supplied within a combustion chamber (5), comprising:

memory means for storing an injection time $\tau$ in accordance with an operating state of the engine by increasing the amount of inactive gas supplied within the combustion chamber to be more than that of the inactive gas when the generation amount of the soot becomes peak;

intake air amount detecting means (21) for detecting an amount of intake air; and

injection amount calculating means for calculating an actual injection amount from the intake air amount when the air fuel ratio is controlled to the stoichiometric air fuel ratio,

**characterized by**

air fuel ratio control means (27) for controlling an air fuel ratio to a stoichiometric air fuel ratio;

correcting means for correcting the injection time $\tau$ on the basis of the actual injection amount so that the injection amount at a time of injecting the fuel on the basis of the stored injection time becomes the target injection amount Q in accordance with the operation state of the engine.

**2.** An internal combustion engine according to claim 1, wherein:

the target injection amount Q is preliminarily stored and the injection time $\tau$ is stored as a function of the target injection amount Q.

**3.** An internal combustion engine according to claim 2, wherein:

the injection time $\tau$ is stored as a function of the target injection amount Q and an injection pressure P.

**4.** An internal combustion engine according to claim 1, wherein:

a throttle valve (20) is disposed within an engine intake passage (17); and

an air fuel ratio control means (27) controls the air fuel ratio to the stoichiometric air fuel ratio by controlling an opening degree of the throttle valve (20).

**5.** An internal combustion engine according to claim 4, wherein:

an air fuel ratio sensor (27) is disposed within an engine exhaust passage (24); and

the air fuel ratio control means (27) executes feedback control of an opening degree of the throttle valve (20) based on an output signal of the air fuel ratio sensor (27).

**6.** An internal combustion engine according to claim 5, wherein:

the air fuel ratio sensor (27) is formed of a sensor of a type in which an output voltage sharply changes at the stoichiometric air fuel ratio.

**7.** An internal combustion engine according to claim 1, wherein:

the air fuel ratio control means (27) controls the air fuel ratio to the target air fuel ratio by controlling the injection time $\tau$.

**8.** An internal combustion engine according to claim 7, wherein:

an air fuel ratio sensor (27) is disposed within an engine exhaust passage (24), the air fuel ratio control means (27) executes feedback control of the injection time $\tau$ on the basis of an output signal of the air fuel ratio sensor (27) such that the air fuel ratio becomes the target air fuel ratio.

**9.** An internal combustion engine according to claim 8, wherein:

the air fuel ratio sensor (27) is formed of the sensor of a type in which an output voltage sharply changes at the stoichiometric air fuel ratio.

**10.** An internal combustion engine according to claim 1, wherein:

a relation between an actual injection amount Qf and the injection time $\tau$ is expressed by a formula $Q = K \times (A\tau + B)$ using correction factors K, A and B;
the correcting means corrects the correction factors A and B based on the actual injection amount Qf; and
the actual injection time is expressed by a formula of $(1/A) \times (\tau - B)$.

**11.** An internal combustion engine according to claim 10, wherein:

correction factors A and B are calculated using the actual injection amount Qf and the injection time $\tau$ at two different predetermined operating states of the engine.

**12.** An internal combustion engine according to claim 1, wherein:

a relation between the actual injection amount Qf and the injection time $\tau$ is expressed by a formula of $Q = K \times t$ using the correction factor K; and
the correcting means corrects the correcting factor K based on the actual injection amount Qf.

**13.** An internal combustion engine according to claim 1, wherein:

the internal combustion engine is provided with a device (29, 31) for recirculating exhaust gas discharged from the combustion chamber (5) within an engine intake passage (17); and
the inactive gas is composed of the recirculated exhaust gas.

**14.** An internal combustion engine according to claim 13, wherein:

the ratio of exhaust gas recirculation is controlled to about 55% or higher.

**15.** An internal combustion engine according to claim 1, wherein:

a catalyst (25) having the function of oxidation is disposed within the engine exhaust passage (24).

**16.** An internal combustion engine according to claim 15, wherein:

the catalyst (25) is composed of at least one of an oxidizing catalyst, a three-way catalyst and an NOx absorber.

**17.** An internal combustion engine according to claim 1, wherein:

the internal combustion engine is provided with switching means for selectively switching between a first combustion mode and a second combustion mode, wherein during the first combustion mode, the combustion chamber (5) contains inactive gas of an amount larger than an amount where a generation amount of soot reaches its peak, so that soot is hardly generated, and wherein during the second combustion mode, the combustion chamber (5) contains inactive gas of an amount smaller than an amount where a generation amount of soot reaches its peak.

**18.** An internal combustion engine according to claim 17, wherein an operation area of the engine is divided into a first operation area I on a low-load side and a second operation area II on a high-load side and the first combustion is carried out in the first operation area I and the second combustion is carried out in the second operation area II.

**Patentansprüche**

1. Brennkraftmaschine, die so aufgebaut ist, dass eine erzeugte Menge an Ruß allmählich auf einen Spitzenwert vergrößert wird, wenn eine Menge eines inaktiven Gases vermehrt wird, das in eine Brennkammer (5) zugeführt wird, mit:

    einer Speichereinrichtung zum Speichern einer Einspritzzeit τ gemäß einem Betriebszustand der Kraftmaschine beim Vermehren der Menge des inaktiven Gases, das in die Brennkammer zugeführt wird, die größer ist als jene Menge des inaktiven Gases, wenn die erzeugte Menge des Rußes den Spitzenwert hat;
    einer Einlassluftmengenerfassungseinrichtung (21) zum Erfassen einer Einlassluftmenge; und
    einer Einspritzmengenberechnungseinrichtung zum Berechnen einer tatsächlichen Einspritzmenge aus der Einlassluftmenge, wenn das Luft/Kraftstoff-Verhältnis auf das stöchiometrische Luft/Kraftstoff-Verhältnis gesteuert ist,

    **gekennzeichnet durch**
    eine Luft/Kraftstoff-Verhältnissteuereinrichtung (27) zum Steuern eines Luft/Kraftstoff-Verhältnisses auf ein stöchiometrisches Luft/Kraftstoff-Verhältnis;
    eine Korrektureinrichtung zum Korrigieren der Einspritzzeit τ auf der Grundlage der tatsächlichen Einspritzmenge, so dass die Einspritzmenge während eines Einspritzens des Kraftstoffes auf der Grundlage der gespeicherten Einspritzzeit die Soll-Einspritzmenge Q gemäß dem Betriebszustand der Kraftmaschine wird.

2. Brennkraftmaschine gemäß Anspruch 1, wobei:

    die Soll-Einspritzmenge Q vorläufig gespeichert wird und die Einspritzzeit τ als eine Funktion der Soll-Einspritzmenge Q gespeichert wird.

3. Brennkraftmaschine gemäß Anspruch 2, wobei:

    die Einspritzzeit i als eine Funktion der Soll-Einspritzmenge Q und eines Einspritzdruckes P gespeichert wird.

4. Brennkraftmaschine gemäß Anspruch 1, wobei:

    ein Drosselventil (20) innerhalb eines Kraftmaschineneinlasskanals (17) angeordnet ist; und eine Luft/Kraftstoff-Verhältnissteuereinrichtung (27) das Luft/Kraftstoff-Verhältnis auf das stöchiometrische Luft/Kraftstoff-Verhältnis dadurch steuert, dass ein Öffnungsgrad des Drosselventils (20) gesteuert wird.

5. Brennkraftmaschine gemäß Anspruch 4, wobei:

    ein Luft/Kraftstoff-Verhältnissensor (27) innerhalb eines Kraftmaschinenabgaskanals (24) angeordnet ist; und
    die Luft/Kraftstoff-Verhältnissteuereinrichtung (27) eine Regelung eines Öffnungsgrades des Drosselventils (20) auf der Grundlage eines Abgabesignals von dem Luft/Kraftstoff-Verhältnissensor (27) ausführt.

6. Brennkraftmaschine gemäß Anspruch 5, wobei:

    der Luft/Kraftstoff-Verhältnissensor (27) aus einem Sensor jener Bauart gebildet ist, bei dem sich eine abgegebene elektrische Spannung bei dem stöchiometrischen Luft/Kraftstoff-Verhältnis abrupt ändert.

7. Brennkraftmaschine gemäß Anspruch 1, wobei:

    die Luft/Kraftstoff-Verhältnissteuereinrichtung (27) das Luft/Kraftstoff-Verhältnis auf das Soll-Luft/Kraftstoff-Verhältnis dadurch steuert, dass die Einspritzzeit τ gesteuert wird.

8. Brennkraftmaschine gemäß Anspruch 7, wobei:

    ein Luft/Kraftstoff-Verhältnissensor (27) innerhalb eines Kraftmaschinenabgaskanals (24) angeordnet ist, wobei die Luft/Kraftstoff-Verhältnissteuereinrichtung (27) eine Regelung der Einspritzzeit τ auf der Grundlage eines Abgabesignals von dem Luft/Kraftstoff-Verhältnissensor (27) so ausführt, dass das Luft/Kraftstoff-Verhältnis zu dem Soll-Luft/Kraftstoff-Verhältnis wird.

9. Brennkraftmaschine gemäß Anspruch 8, wobei:

    der Luft/Kraftstoff-Verhältnissensor (27) aus dem Sensor jener Bauart gebildet ist, bei dem sich eine abgegebene elektrische Spannung bei dem stöchiometrischen Luft/Kraftstoff-Verhältnis abrupt ändert.

10. Brennkraftmaschine gemäß Anspruch 1, wobei:

    eine Beziehung zwischen einer tatsächlichen Einspritzmenge Qf und der Einspritzzeit τ durch eine Formel $Q = K \times (A\tau + B)$ unter Verwendung von Korrekturfaktoren K, A und B ausgedrückt wird;
    die Korrektureinrichtung die Korrekturfaktoren A und B auf der Grundlage der tatsächlichen Einspritzmenge Qf korrigiert; und

die tatsächliche Einspritzzeit durch eine Formel (1/A) × (τ - B) ausgedrückt wird.

**11.** Brennkraftmaschine gemäß Anspruch 10, wobei:

Korrekturfaktoren A und B unter Verwendung der tatsächlichen Einspritzmenge Qf und der Einspritzzeit τ bei zwei unterschiedlichen vorbestimmten Betriebszuständen der Kraftmaschine berechnet werden.

**12.** Brennkraftmaschine gemäß Anspruch 1, wobei:

eine Beziehung zwischen der tatsächlichen Einspritzmenge Qf und der Einspritzzeit τ durch eine Formel Q = K × t unter Verwendung des Korrekturfaktors K ausgedrückt wird; und
die Korrektureinrichtung den Korrekturfaktor K auf der Grundlage der tatsächlichen Einspritzmenge Qf korrigiert.

**13.** Brennkraftmaschine gemäß Anspruch 1, wobei:

die Brennkraftmaschine mit einer Vorrichtung (29, 31) zum Rückführen von Abgas, das aus der Brennkammer (5) ausgelassen wird, in einen Kraftmaschineneinlasskanal (17) versehen ist; und
das inaktive Gas aus dem rückgeführten Abgas besteht.

**14.** Brennkraftmaschine gemäß Anspruch 13, wobei:

das Verhältnis der Abgasrückführung auf ungefähr 55% oder mehr gesteuert wird.

**15.** Brennkraftmaschine gemäß Anspruch 1, wobei:

ein Katalysator (25) mit der Oxidationsfunktion innerhalb des Kraftmaschinenabgaskanals (24) angeordnet ist.

**16.** Brennkraftmaschine gemäß Anspruch 15, wobei:

der Katalysator (25) zumindest aus einem Oxidationskatalysator, einem Drei-Wege-Katalysator oder einem NOx-Absorber besteht.

**17.** Brennkraftmaschine gemäß Anspruch 1, wobei:

die Brennkraftmaschine mit einer Schalteinrichtung zum wahlweisen Schalten zwischen einem ersten Verbrennungsmodus und
einem zweiten Verbrennungsmodus versehen ist, wobei während des ersten Verbrennungsmodus die Brennkammer (5) inaktives Gas mit einer Menge enthält, die größer ist als jene Menge, bei der eine erzeugte Menge an Ruß ihren Spitzenwert erreicht, so dass kaum Ruß erzeugt wird, und wobei während des zweiten Verbrennungsmodus die Brennkammer (5) inaktives Gas mit einer Menge enthält, die kleiner ist als jene Menge, bei der eine erzeugte Menge an Ruß ihren Spitzenwert erreicht.

**18.** Brennkraftmaschine gemäß Anspruch 17, wobei ein Betriebsbereich der Kraftmaschine in einen ersten Betriebsbereich I an einer Niedriglastseite und in einen zweiten Betriebsbereich II in einer Hochlastseite aufgeteilt ist, und die erste Verbrennung wird in dem ersten Betriebsbereich I durchgeführt und die zweite Verbrennung wird in dem zweiten Betriebsbereich II durchgeführt.

**Revendications**

**1.** Moteur à combustion interne structuré de telle sorte qu'une quantité de génération de suie est graduellement augmentée jusqu'à un pic lors de l'augmentation d'une quantité d'un gaz inerte fourni à l'intérieur d'une chambre de combustion (5), comprenant :

un moyen de mémoire pour stocker un temps d'injection τ en conformité avec un état de fonctionnement du moteur en augmentant la quantité du gaz inerte fourni à l'intérieur de la chambre de combustion qui doit être supérieure à celle du gaz inerte lorsque la quantité de génération de suie atteint un pic ;

un moyen de détection de quantité d'admission d'air (21) pour détecter une quantité d'admission d'air ; et

un moyen de calcul de quantité d'injection pour calculer une quantité d'injection réelle d'après la quantité d'admission d'air lorsque le rapport air - carburant est commandé au rapport air - carburant stoechiométrique,

**caractérisé par**
un moyen de commande de rapport air - carburant (27) pour commander un rapport air - carburant à un rapport air - carburant stoechiométrique ;
un moyen de correction pour corriger le temps d'injection τ à partir de la quantité d'injection réelle de telle sorte que la quantité d'injection pendant l'injection du carburant d'après le temps d'injection stocké devient la quantité d'injection cible Q selon l'état de fonctionnement du moteur.

**2.** Moteur à combustion interne selon la revendication 1, dans lequel :

la quantité d'injection cible Q est, de façon préliminaire, stockée et le temps d'injection $\tau$ est stocké en tant que fonction de la quantité d'injection cible Q.

**3.** Moteur à combustion interne selon la revendication 2, dans lequel :

le temps d'injection $\tau$ est stocké en tant que fonction de la quantité d'injection cible Q et d'une pression d'injection P.

**4.** Moteur à combustion interne selon la revendication 1, dans lequel :

un papillon des gaz (20) est disposé à l'intérieur d'un conduit d'admission de moteur (17) ; et

un moyen de commande de rapport air - carburant (27) commande le rapport air - carburant au rapport air - carburant stoechiométrique en commandant un degré d'ouverture du papillon des gaz (20).

**5.** Moteur à combustion interne selon la revendication 4, dans lequel :

un détecteur de rapport air - carburant (27) est disposé à l'intérieur d'un conduit d'admission de moteur (24) ; et

le moyen de commande de rapport air - carburant (27) exécute une commande asservie d'un degré d'ouverture du papillon des gaz (20) à partir d'un signal de sortie du détecteur de rapport air - carburant (27).

**6.** Moteur à combustion interne selon la revendication 5, dans lequel :

le détecteur de rapport air - carburant (27) est formé d'un détecteur d'un type dans lequel une tension de sortie change nettement au rapport air - carburant stoechiométrique.

**7.** Moteur à combustion interne selon la revendication 1, dans lequel :

le moyen de commande de rapport air - carburant (27) commande le rapport air - carburant au rapport air - carburant cible en commandant le temps d'injection $\tau$.

**8.** Moteur à combustion interne selon la revendication 7, dans lequel :

un détecteur de rapport air - carburant (27) est disposé à l'intérieur d'un conduit d'admission de moteur (24), le moyen de commande de rapport air - carburant (27) exécute une commande asservie du temps d'injection $\tau$ à partir d'un signal de sortie du détecteur de rapport air - carburant (27) de telle sorte que le rapport air - carburant devient le rapport air - carburant cible.

**9.** Moteur à combustion interne selon la revendication 8, dans lequel :

le détecteur de rapport air - carburant (27) est formé du détecteur d'un type dans lequel une tension de sortie change nettement au rapport air - carburant stoechiométrique.

**10.** Moteur à combustion interne selon la revendication 1, dans lequel :

une relation entre une quantité d'injection réelle Qf et le temps d'injection $\tau$ est exprimée par une formule $Q = K \times (A\tau + B)$ utilisant les facteurs K, A et B ;

le moyen de correction corrige les facteurs de correction A et B à partir de la quantité d'injection réelle Qf ; et

le temps d'injection réel est exprimé par une formule de $(1/A) \times (\tau - B)$.

**11.** Moteur à combustion interne selon la revendication 10, dans lequel :

les facteurs de correction A et B sont calculés en utilisant la quantité d'injection réelle Qf et le temps d'injection $\tau$ aux deux différents états de fonctionnement prédéterminés du moteur.

**12.** Moteur à combustion interne selon la revendication 1, dans lequel :

une relation entre la quantité d'injection réelle Qf et le temps d'injection $\tau$ est exprimée par une formule $Q = K \times \tau$ utilisant le facteur K ; et

le moyen de correction corrige le facteur de correction K à partir de la quantité d'injection réelle Qf.

**13.** Moteur à combustion interne selon la revendication 1, dans lequel :

le moteur à combustion interne est pourvu d'un dispositif (29, 31) pour faire recirculer les gaz d'échappement refoulés de la chambre de combustion (5) à l'intérieur d'un conduit d'admission de moteur (17) ; et

le gaz inerte est composé du gaz d'échappement remis en circulation.

**14.** Moteur à combustion interne selon la revendication 13, dans lequel :

le rapport de la recirculation des gaz d'échappement est commandé à environ 55 % ou plus élevé.

**15.** Moteur à combustion interne selon la revendication 1, dans lequel :

un catalyseur (25) ayant la fonction d'oxydation est disposé à l'intérieur du conduit d'admission de moteur (24).

**16.** Moteur à combustion interne selon la revendication 15, dans lequel :

le catalyseur (25) est composé d'au moins un d'un catalyseur d'oxydation, d'un catalyseur à trois voies et d'un absorbeur de NOx.

**17.** Moteur à combustion interne selon la revendication 1, dans lequel :

le moteur à combustion interne est pourvu d'un moyen de commutation pour commuter sélectivement entre un premier mode de combustion et un second mode de combustion, dans lequel, pendant le premier mode de combustion, la chambre de combustion (5) contient un gaz inerte en une quantité plus importante qu'une quantité où une quantité de génération de suie atteint son pic de telle sorte que de la suie est à peine générée et dans lequel, pendant le second mode de combustion, la chambre de combustion (5) contient un gaz inerte en une quantité plus faible qu'une quantité où une quantité de génération de suie atteint son pic.

**18.** Moteur à combustion interne selon la revendication 17, dans lequel une zone de fonctionnement du moteur est divisée en une première zone de fonctionnement I sur un côté à charge faible et une seconde zone de fonctionnement II sur un côté à charge élevée et la première combustion est effectuée dans la première zone de fonctionnement I et la seconde combustion est effectuée dans la seconde zone de fonctionnement II.

FIG. 1

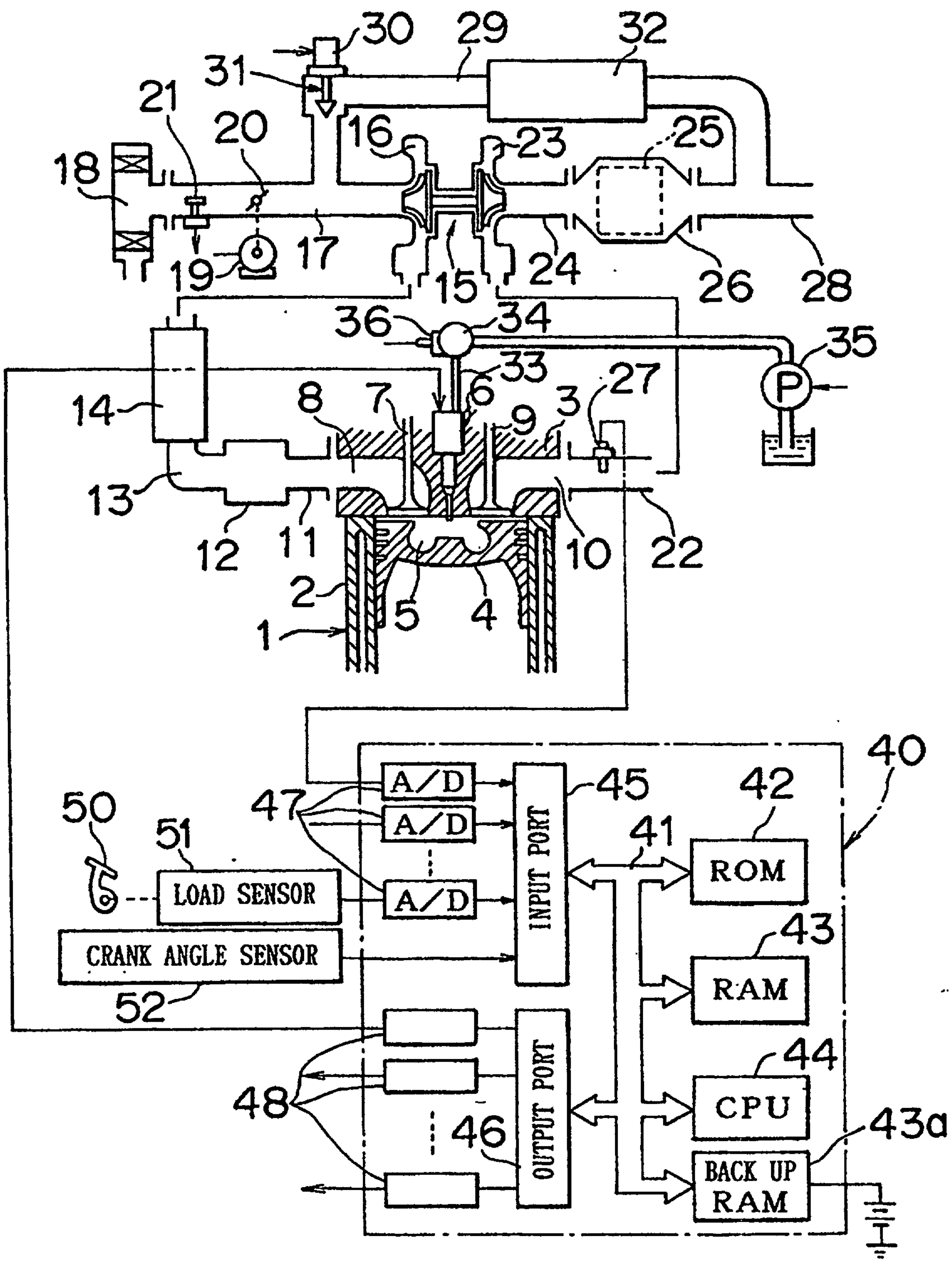
30
29
32
31
21
20
16
23
25
18
17
19
15
24
26
28
36
34
35
P
33
14
8
7
6
9
3
27
13
12
11
10
22
2
5
4
1
40
A/D
45
42
47
A/D
41
INPUT PORT
ROM
50
51
LOAD SENSOR
A/D
43
CRANK ANGLE SENSOR
RAM
52
44
OUTPUT PORT
48
CPU
46
43a
BACK UP RAM

FIG. 2

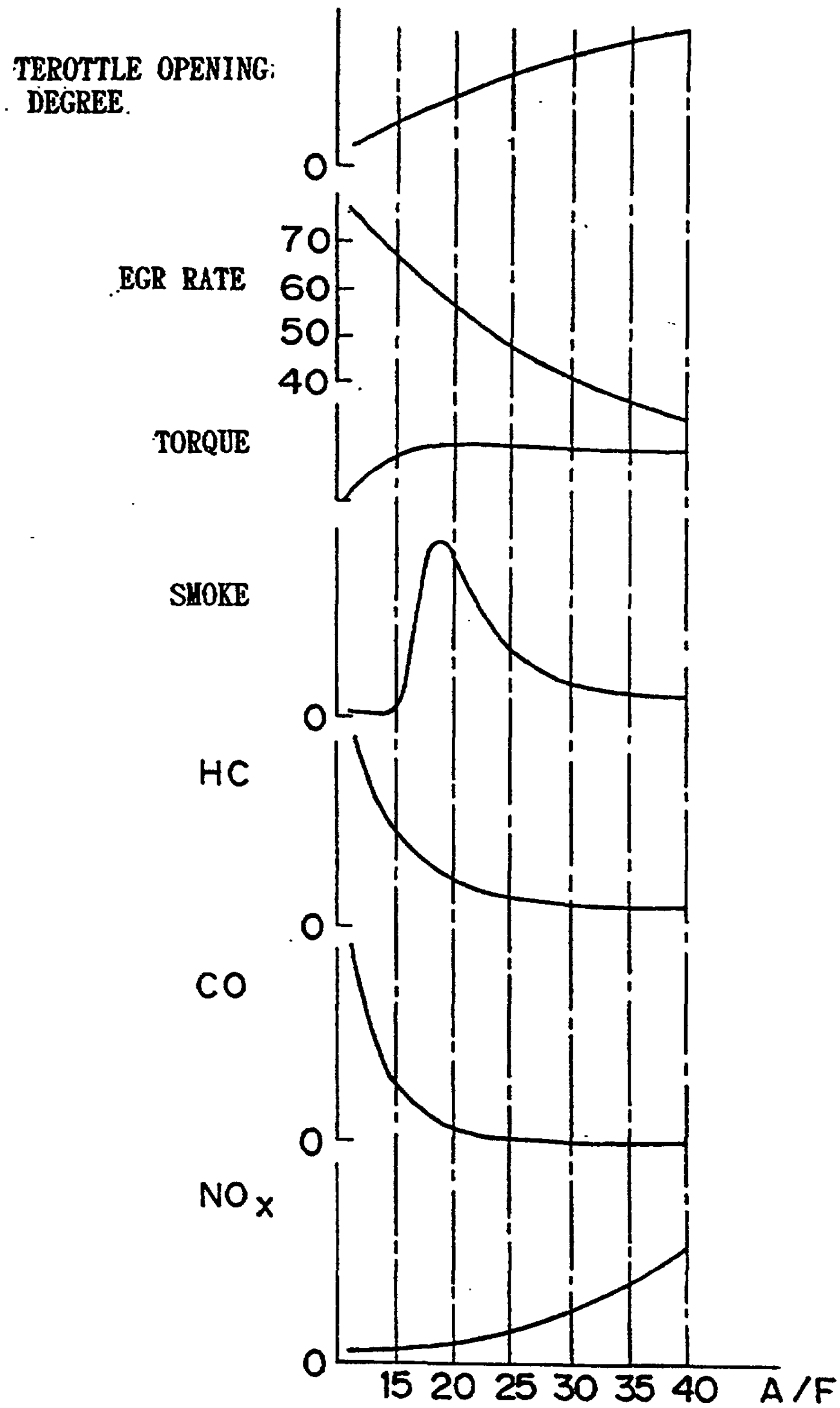
TEROTTLE OPENING DEGREE
0
EGR RATE
70
60
50
40
TORQUE
SMOKE
0
HC
0
CO
0
NOx
0
15
20
25
30
35
40
A/F

FIG. 3A

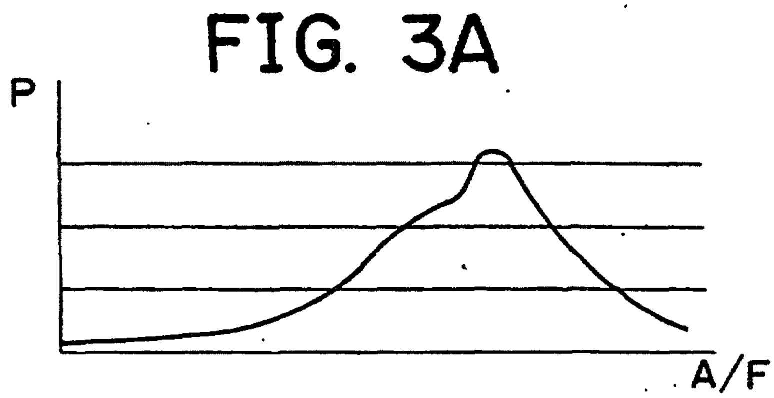


FIG. 3B

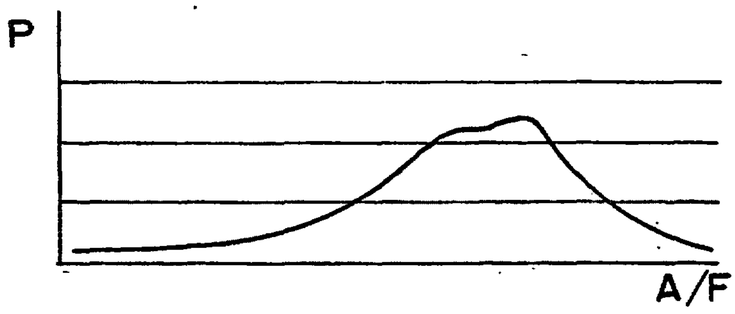

FIG. 4

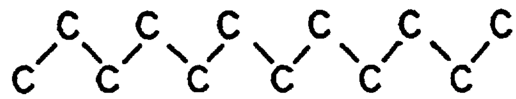

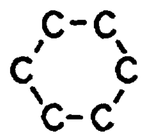

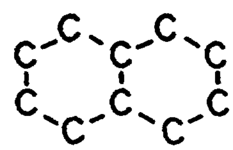

FIG. 5

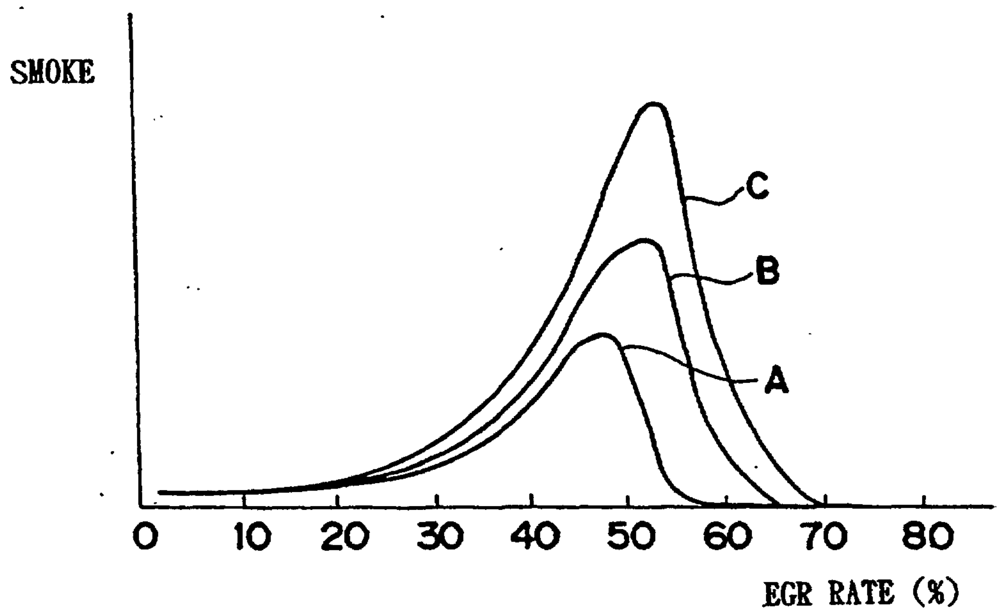

FIG. 6

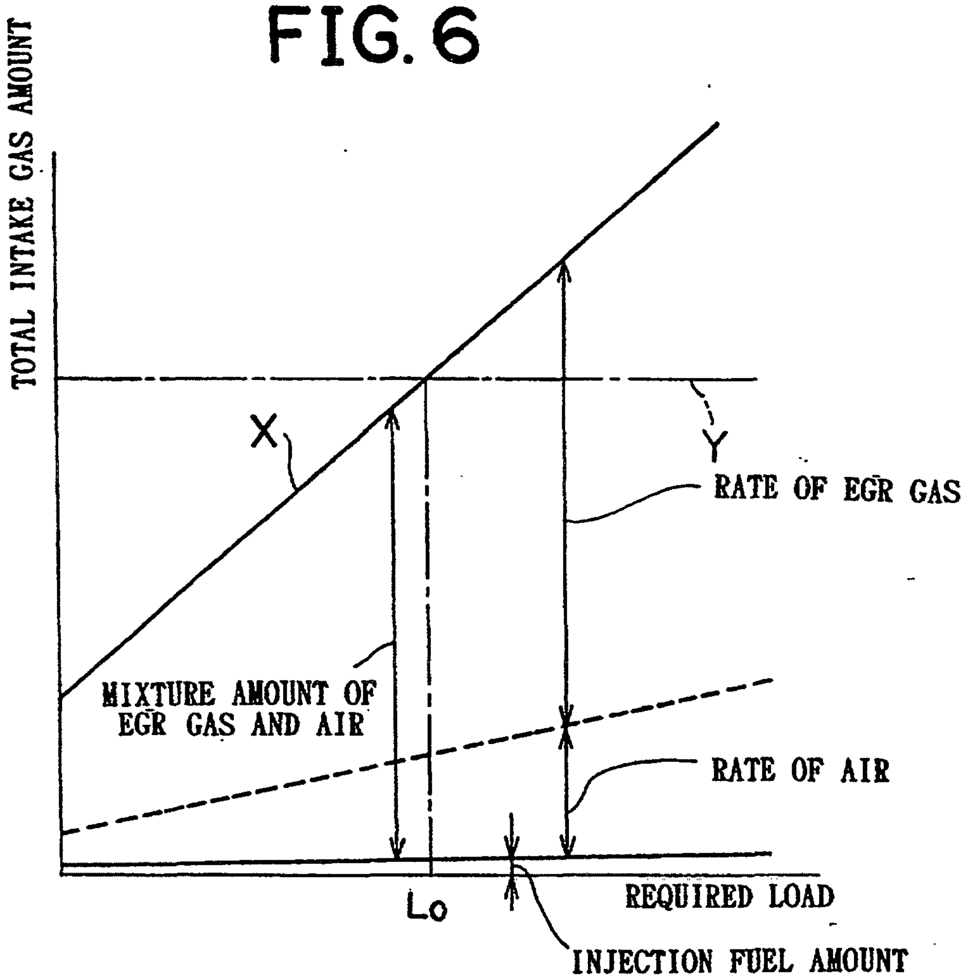
TOTAL INTAKE GAS AMOUNT
X
Y
RATE OF EGR GAS
MIXTURE AMOUNT OF EGR GAS AND AIR
RATE OF AIR
Lo
REQUIRED LOAD
INJECTION FUEL AMOUNT

FIG. 7

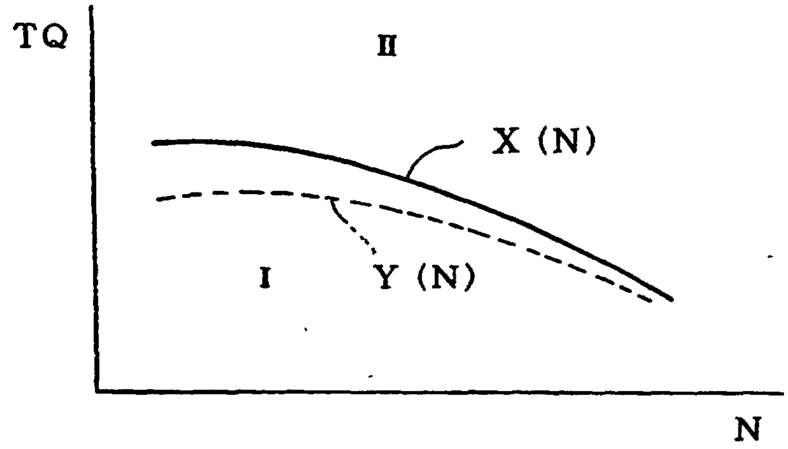


FIG. 8

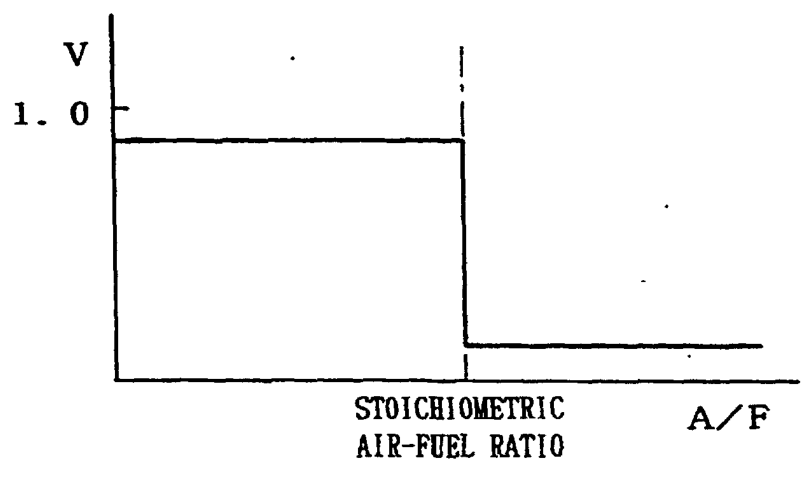

FIG. 9

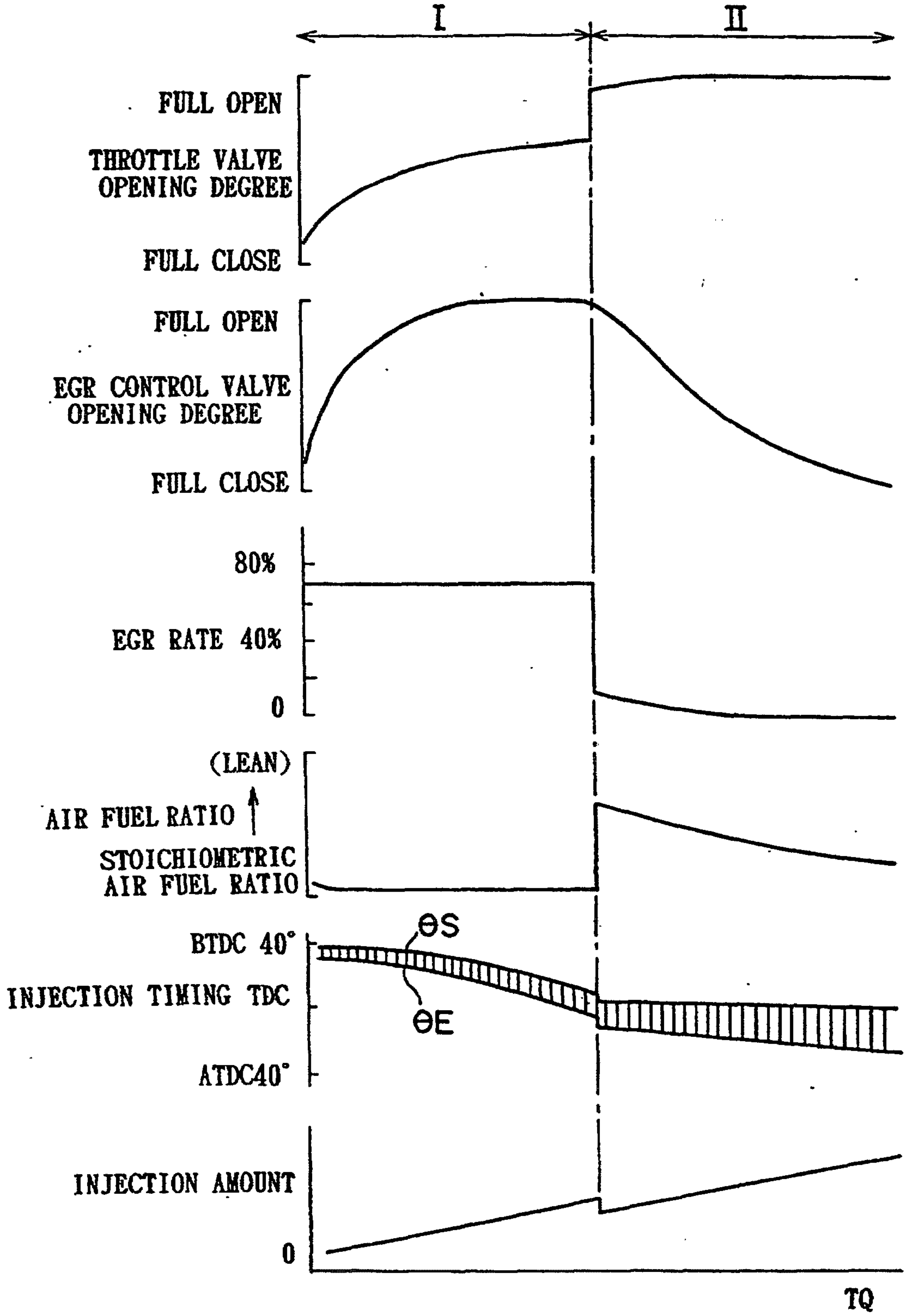
I
II
FULL OPEN
THROTTLE VALVE
OPENING DEGREE
FULL CLOSE
FULL OPEN
EGR CONTROL VALVE
OPENING DEGREE
FULL CLOSE
80%
EGR RATE 40%
0
(LEAN)
AIR FUEL RATIO
STOICHIOMETRIC
AIR FUEL RATIO
θS
BTDC 40°
INJECTION TIMING TDC
θE
ATDC40°
INJECTION AMOUNT
0
TQ

FIG. 10A

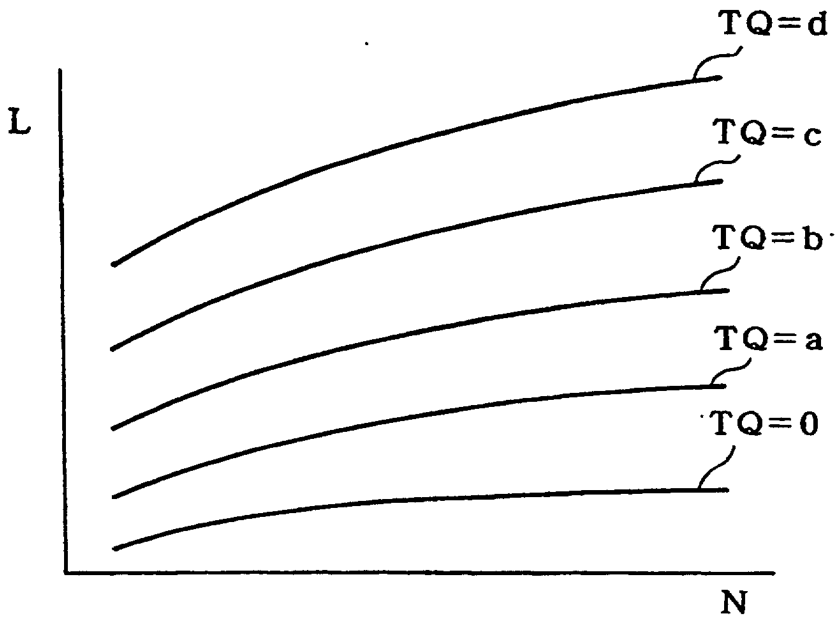


FIG. 10B

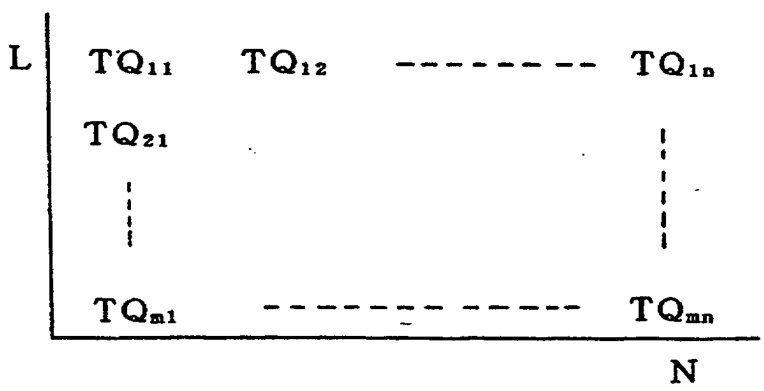

FIG. 11

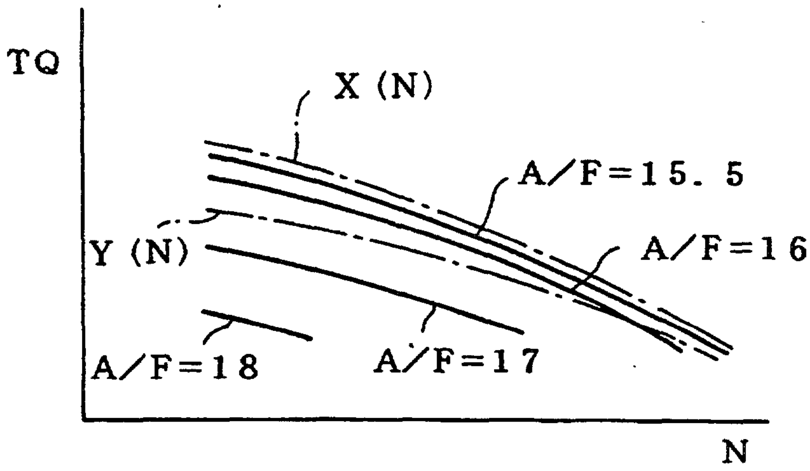


FIG. 12A

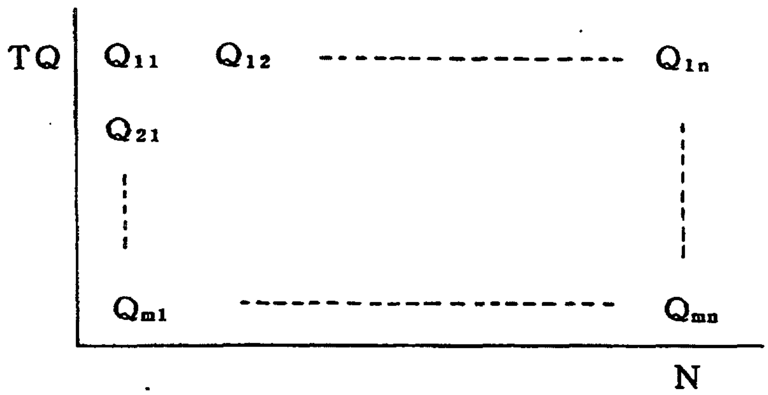


FIG. 12B

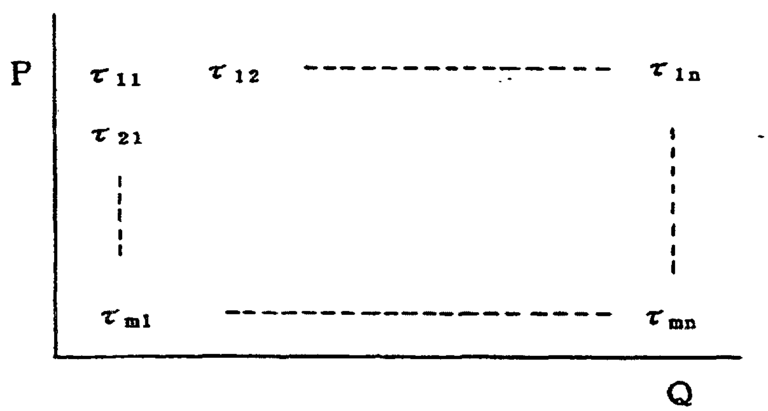

FIG.13A

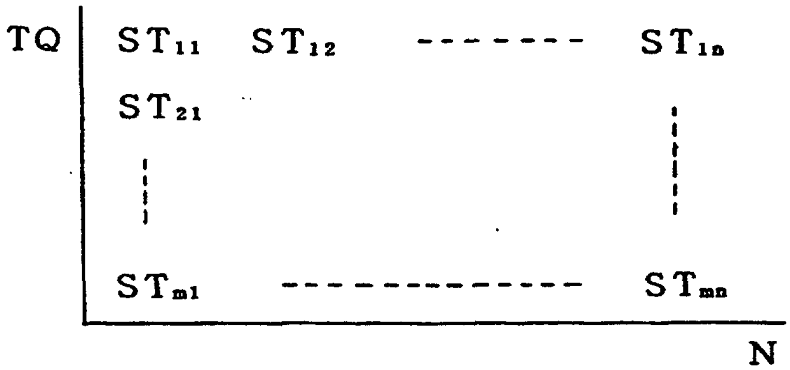


FIG.13B

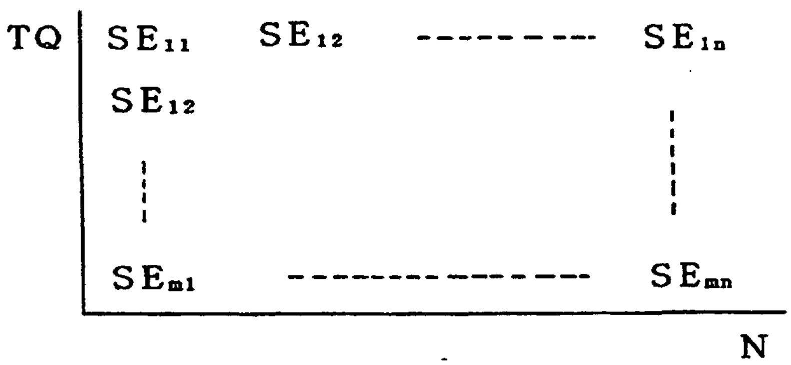


FIG.13C

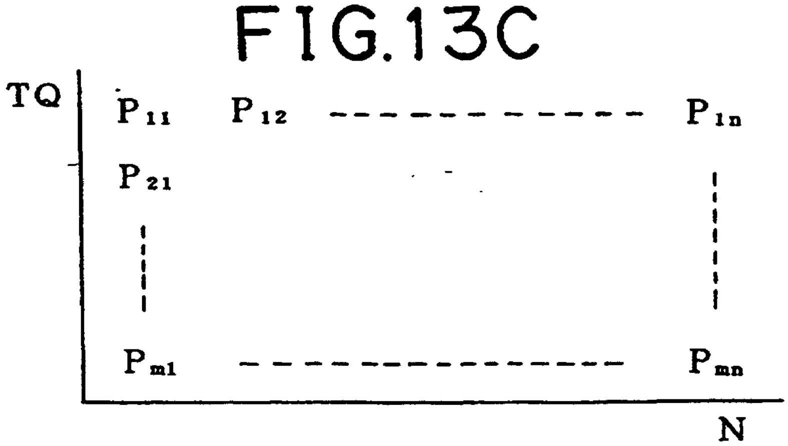

FIG. 14

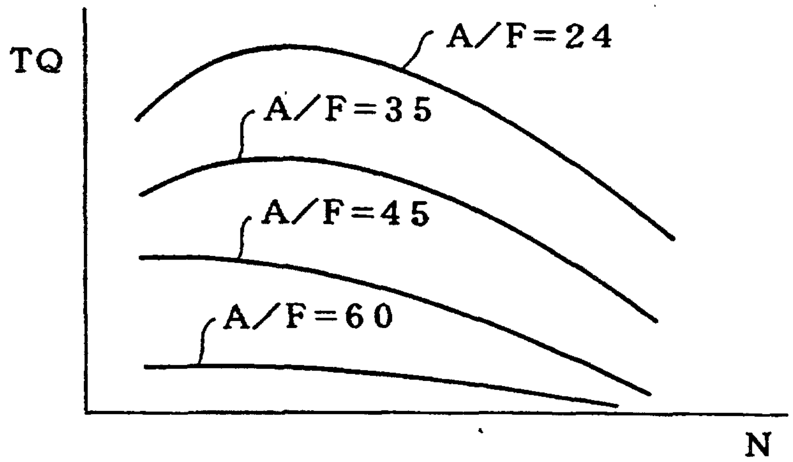


FIG. 15A

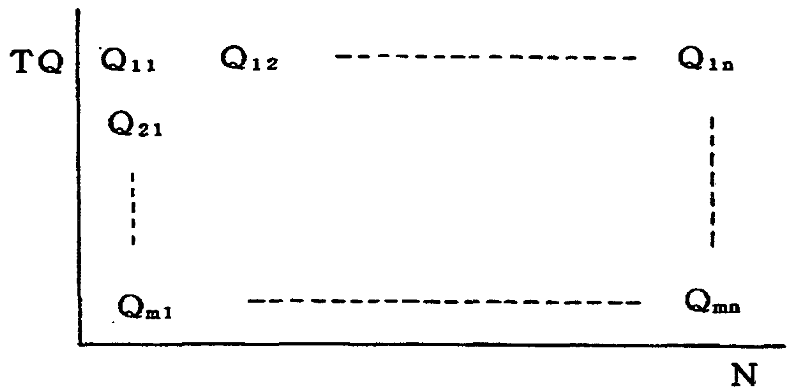


FIG. 15B

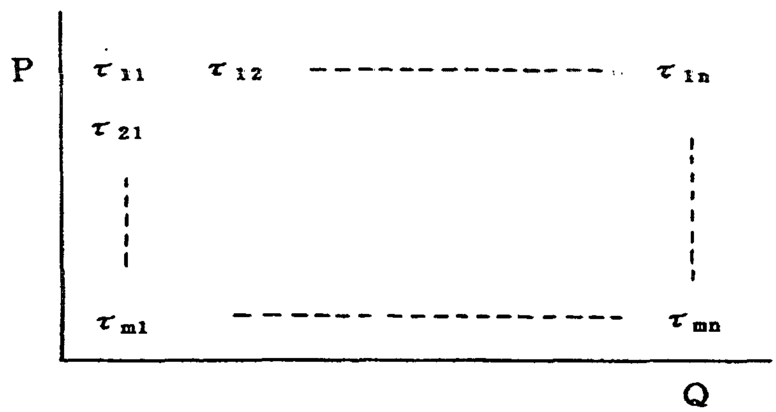

FIG. 16A

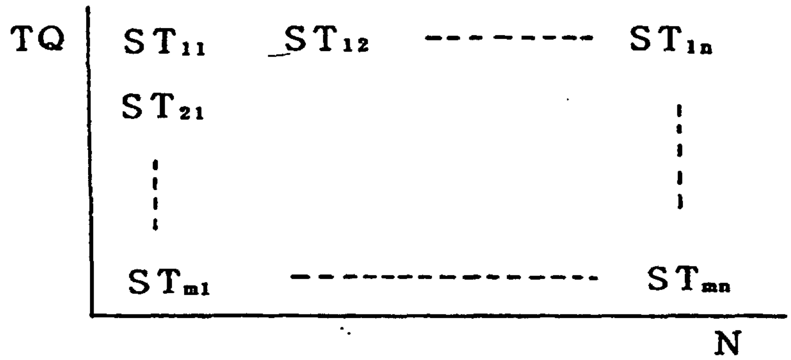


FIG. 16B

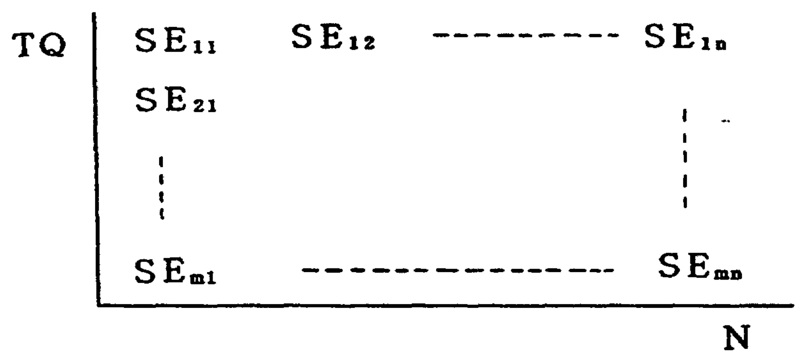


FIG. 16C

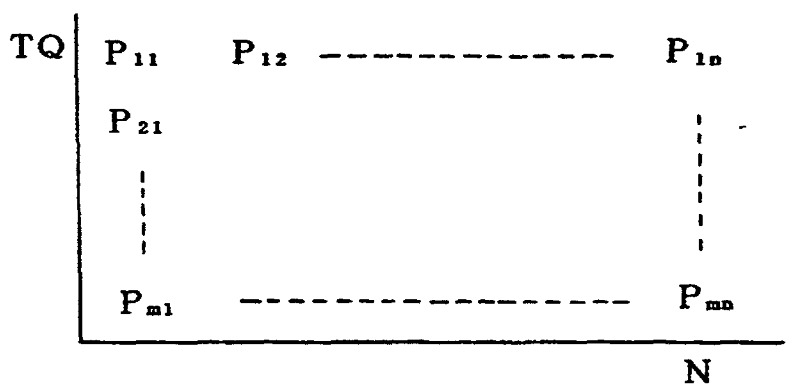

FIG. 17A

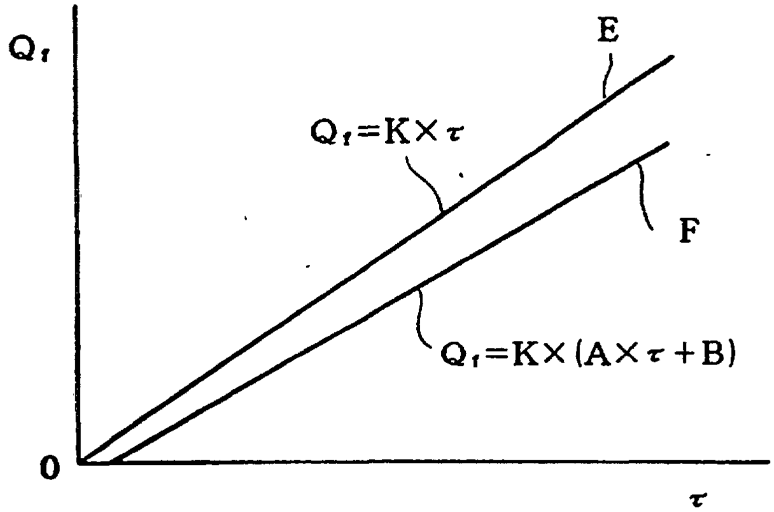


FIG. 17B

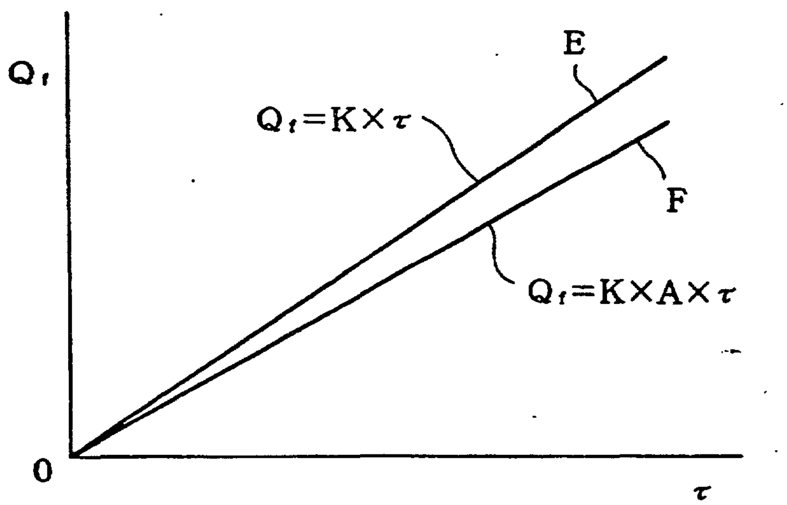

FIG. 18

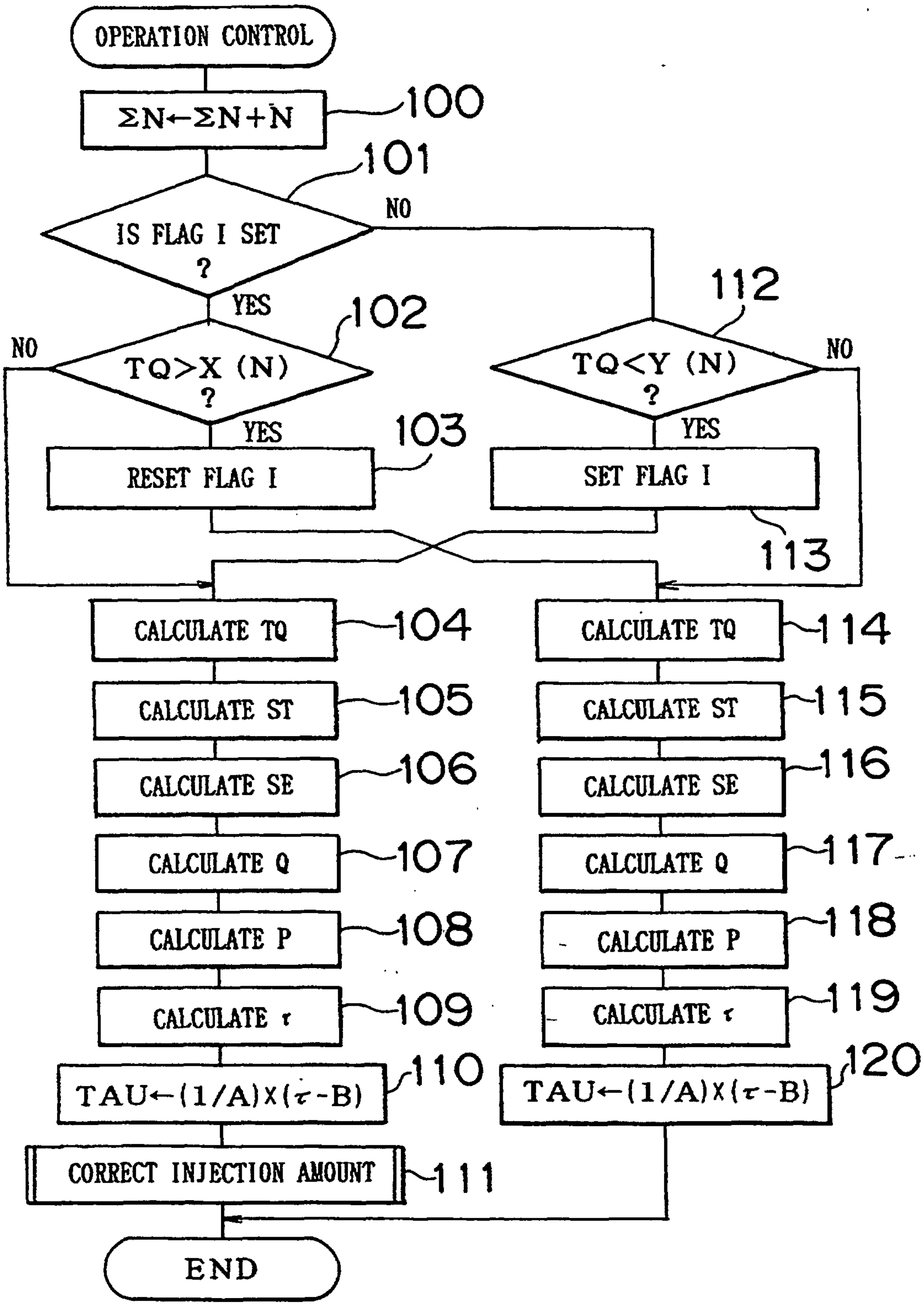
OPERATION CONTROL
ΣN←ΣN+N
100
101
IS FLAG I SET ?
NO
YES
112
102
NO
TQ>X (N) ?
TQ<Y (N) ?
NO
YES
103
YES
RESET FLAG I
SET FLAG I
113
CALCULATE TQ
104
CALCULATE TQ
114
CALCULATE ST
105
CALCULATE ST
115
CALCULATE SE
106
CALCULATE SE
116
CALCULATE Q
107
CALCULATE Q
117
CALCULATE P
108
CALCULATE P
118
CALCULATE τ
109
CALCULATE τ
119
TAU←(1/A)X(τ-B)
110
TAU←(1/A)X(τ-B)
120
CORRECT INJECTION AMOUNT
111
END

FIG. 19

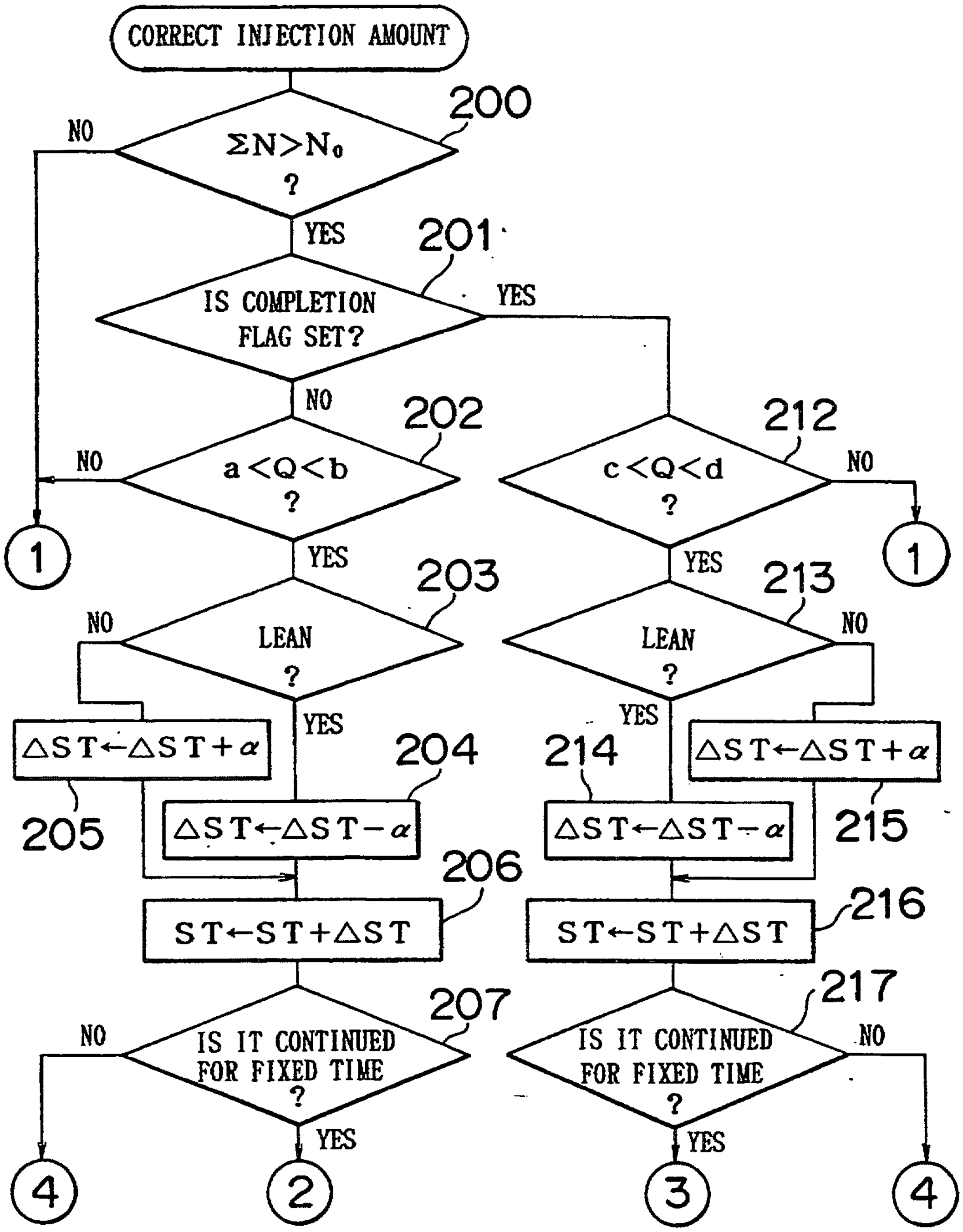
CORRECT INJECTION AMOUNT
200
ΣN>N₀ ?
NO
YES
201
IS COMPLETION FLAG SET?
YES
NO
202
a<Q<b ?
NO
YES
212
c<Q<d ?
NO
YES
1
1
203
LEAN ?
NO
YES
213
LEAN ?
NO
YES
ΔST←ΔST+α
205
204
ΔST←ΔST−α
214
ΔST←ΔST−α
ΔST←ΔST+α
215
206
ST←ST+ΔST
216
ST←ST+ΔST
207
IS IT CONTINUED FOR FIXED TIME ?
NO
YES
217
IS IT CONTINUED FOR FIXED TIME ?
NO
YES
4
2
3
4

FIG. 20

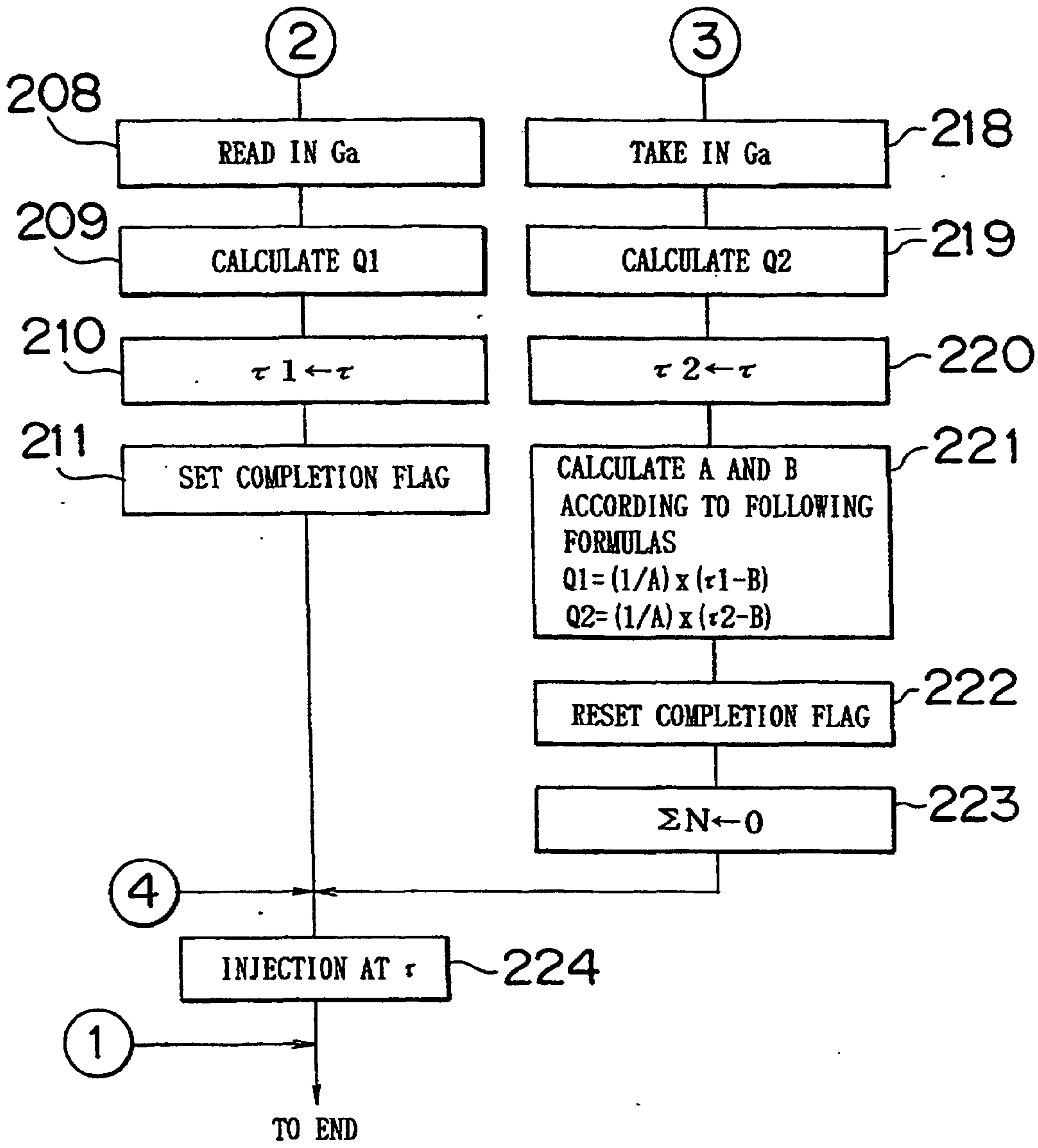
2
3
208
READ IN Ga
209
CALCULATE Q1
210
τ 1←τ
211
SET COMPLETION FLAG
TAKE IN Ga
218
CALCULATE Q2
219
τ 2←τ
220
CALCULATE A AND B ACCORDING TO FOLLOWING FORMULAS
Q1=(1/A) x (τ1-B)
Q2=(1/A) x (τ2-B)
221
RESET COMPLETION FLAG
222
ΣN←0
223
4
INJECTION AT τ
224
1
TO END

FIG. 21

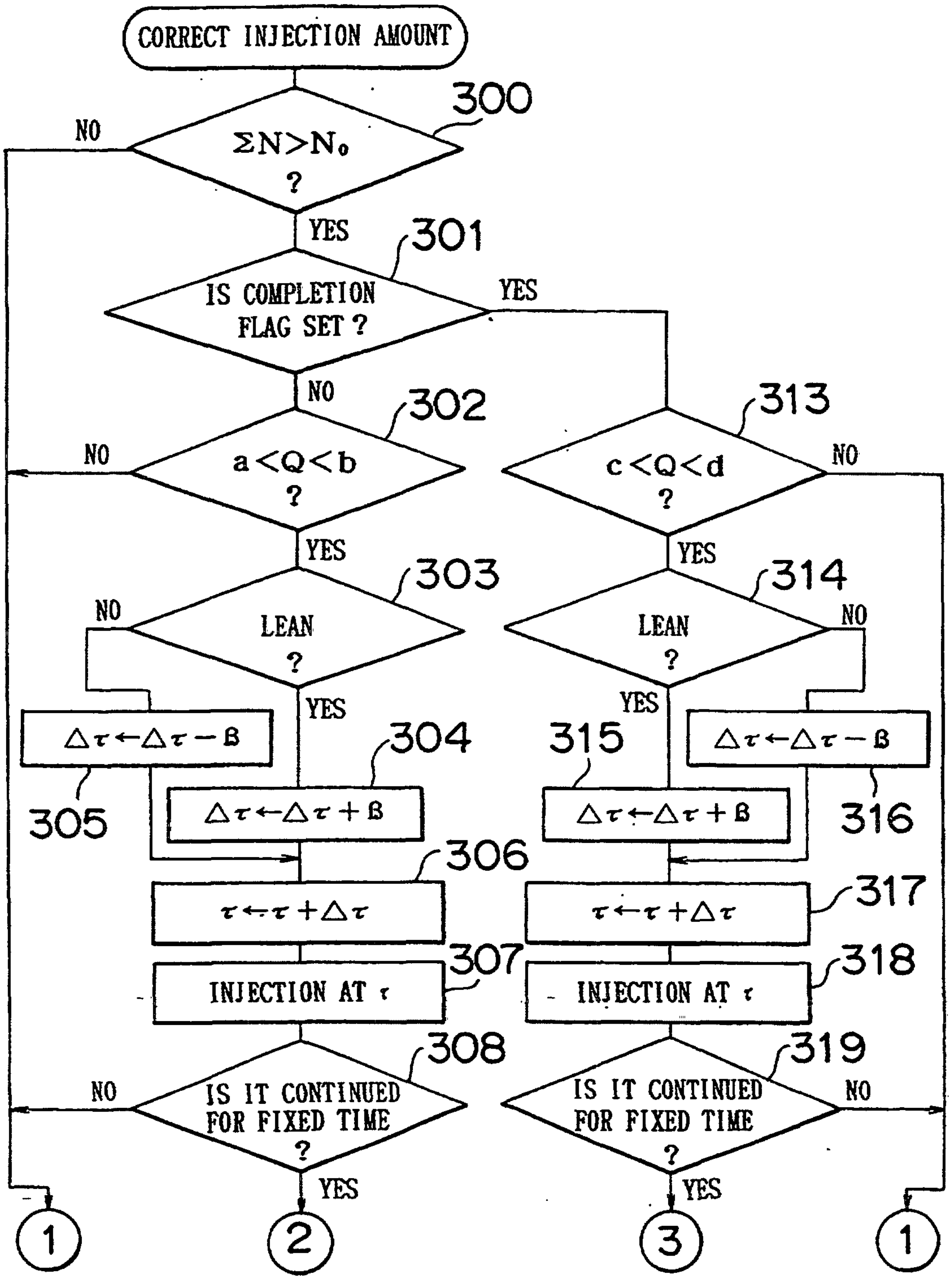
CORRECT INJECTION AMOUNT
300
ΣN>N₀ ?
NO
YES
301
IS COMPLETION FLAG SET ?
YES
NO
302
a<Q<b ?
NO
YES
303
LEAN ?
NO
YES
Δτ←Δτ−β
305
304
Δτ←Δτ+β
306
τ←τ+Δτ
307
INJECTION AT τ
308
IS IT CONTINUED FOR FIXED TIME ?
NO
YES
1
2
313
c<Q<d ?
NO
YES
314
LEAN ?
NO
YES
315
Δτ←Δτ+β
Δτ←Δτ−β
316
317
τ←τ+Δτ
318
INJECTION AT τ
319
IS IT CONTINUED FOR FIXED TIME ?
NO
YES
3
1

FIG. 22

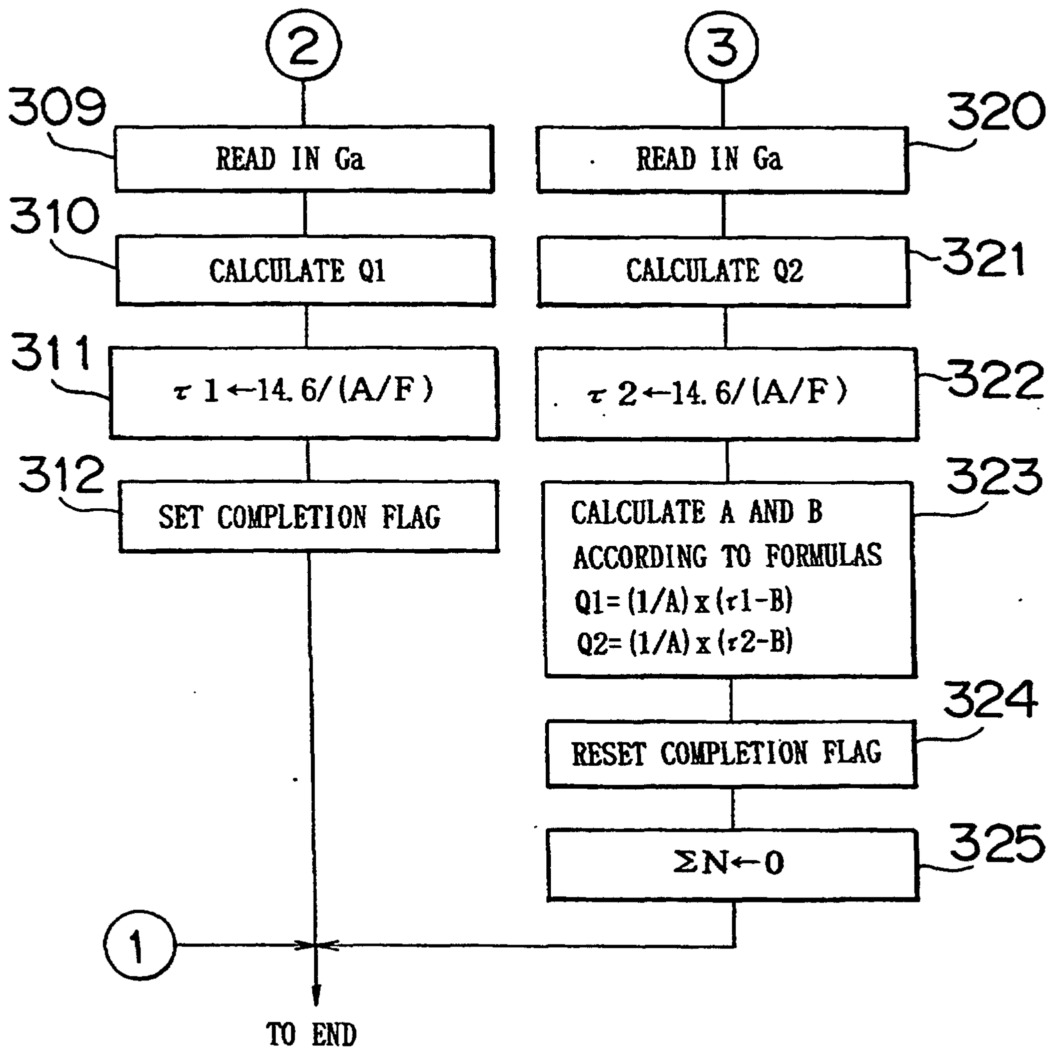
2
3
309
READ IN Ga
320
READ IN Ga
310
CALCULATE Q1
CALCULATE Q2
321
311
τ 1←14.6/(A/F)
τ 2←14.6/(A/F)
322
312
SET COMPLETION FLAG
323
CALCULATE A AND B
ACCORDING TO FORMULAS
Q1=(1/A)x(τ1-B)
Q2=(1/A)x(τ2-B)
324
RESET COMPLETION FLAG
325
ΣN←0
1
TO END

FIG. 23

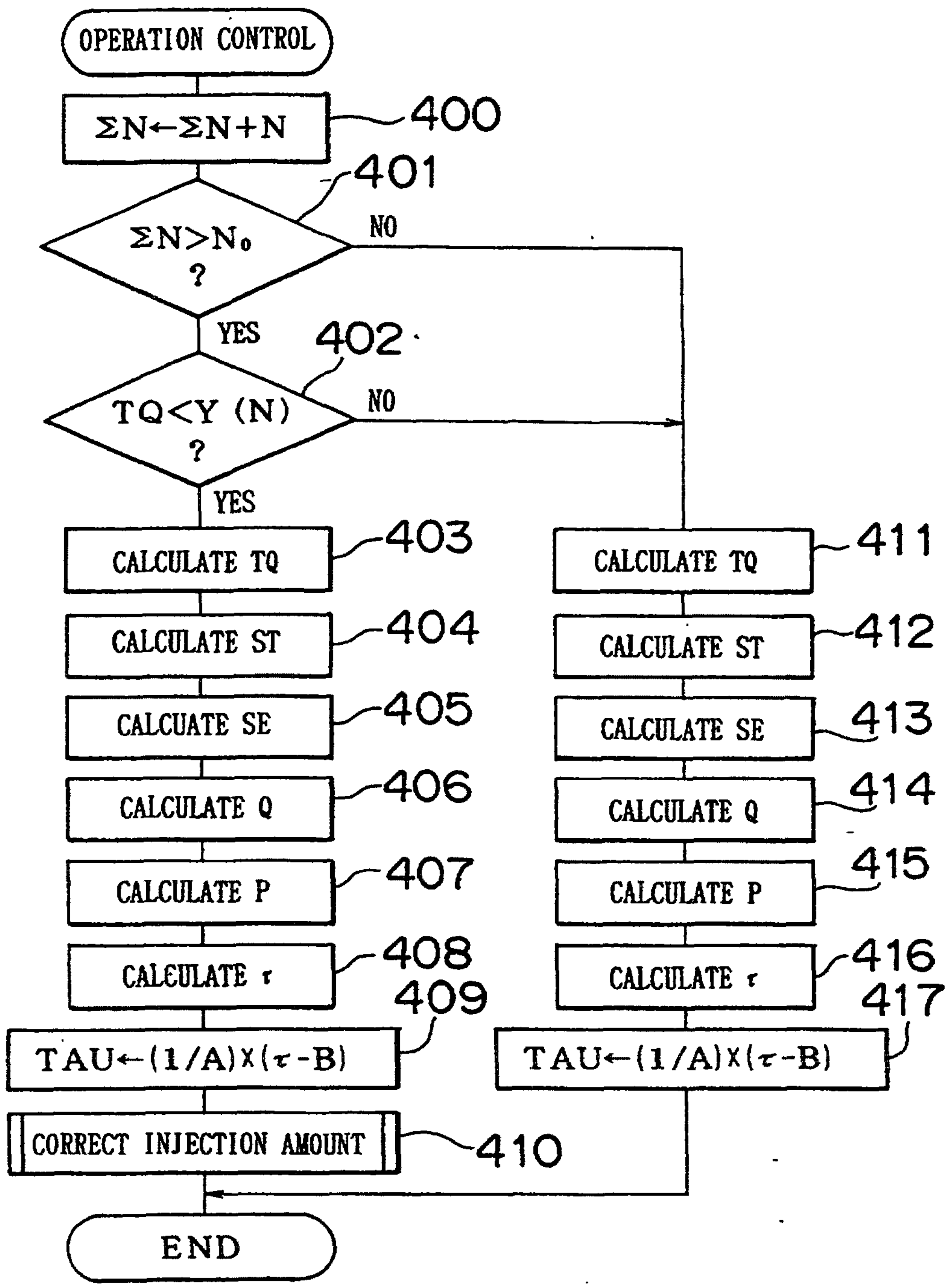
OPERATION CONTROL
ΣN←ΣN+N
400
ΣN>N₀ ?
401
NO
YES
TQ<Y (N) ?
402
NO
YES
CALCULATE TQ
403
CALCULATE ST
404
CALCUATE SE
405
CALCULATE Q
406
CALCULATE P
407
CALCULATE τ
408
TAU←(1/A)X(τ-B)
409
CORRECT INJECTION AMOUNT
410
CALCULATE TQ
411
CALCULATE ST
412
CALCULATE SE
413
CALCULATE Q
414
CALCULATE P
415
CALCULATE τ
416
TAU←(1/A)X(τ-B)
417
END

FIG. 24

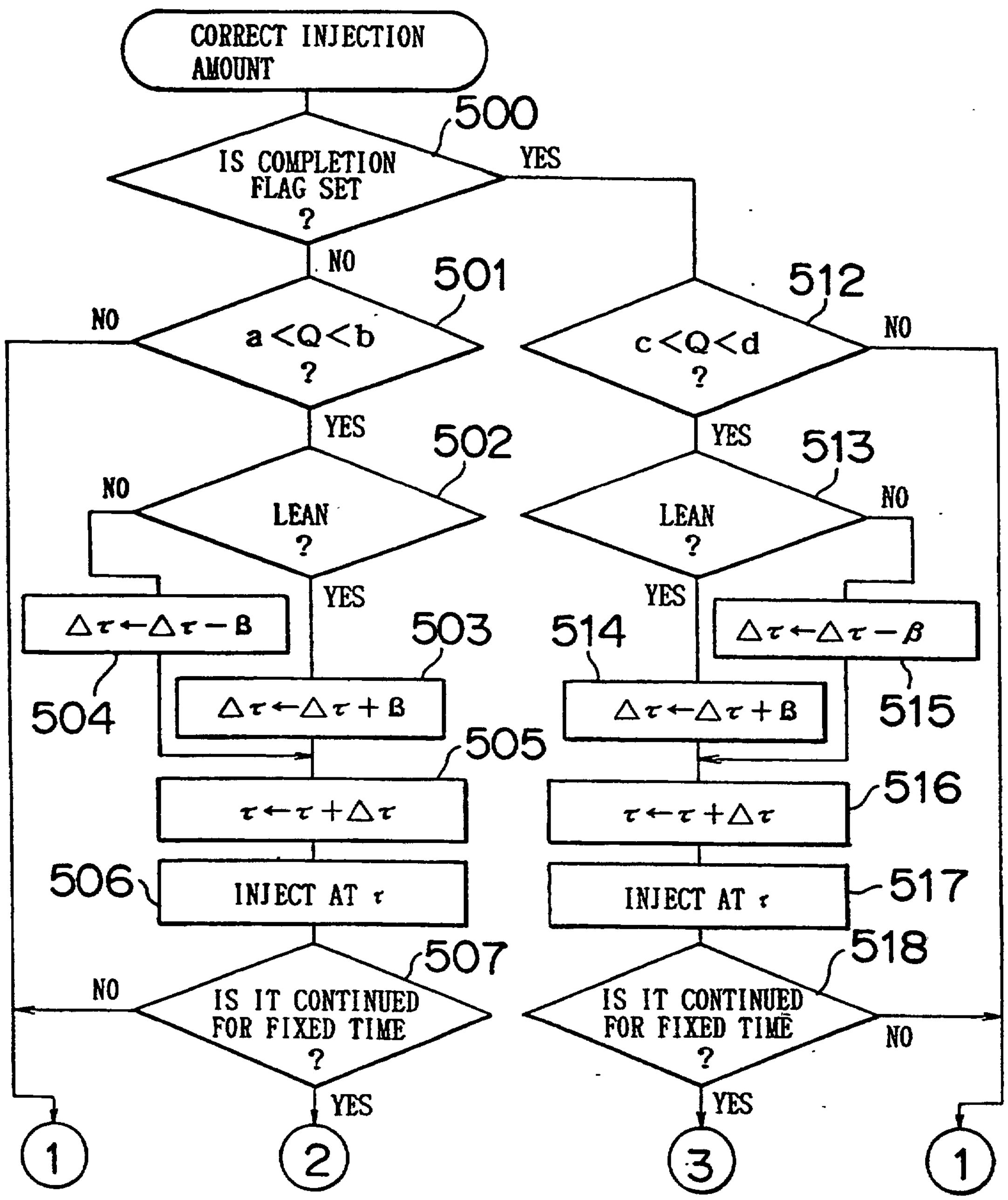
CORRECT INJECTION AMOUNT
500
IS COMPLETION FLAG SET ?
YES
NO
501
a<Q<b ?
NO
YES
502
LEAN ?
NO
YES
Δτ←Δτ−B
504
503
Δτ←Δτ+B
505
τ←τ+Δτ
506
INJECT AT τ
507
IS IT CONTINUED FOR FIXED TIME ?
NO
YES
1
2
512
c<Q<d ?
NO
YES
513
LEAN ?
NO
YES
Δτ←Δτ−β
514
Δτ←Δτ+B
515
τ←τ+Δτ
516
INJECT AT τ
517
518
IS IT CONTINUED FOR FIXED TIME ?
NO
YES
3
1

FIG. 25

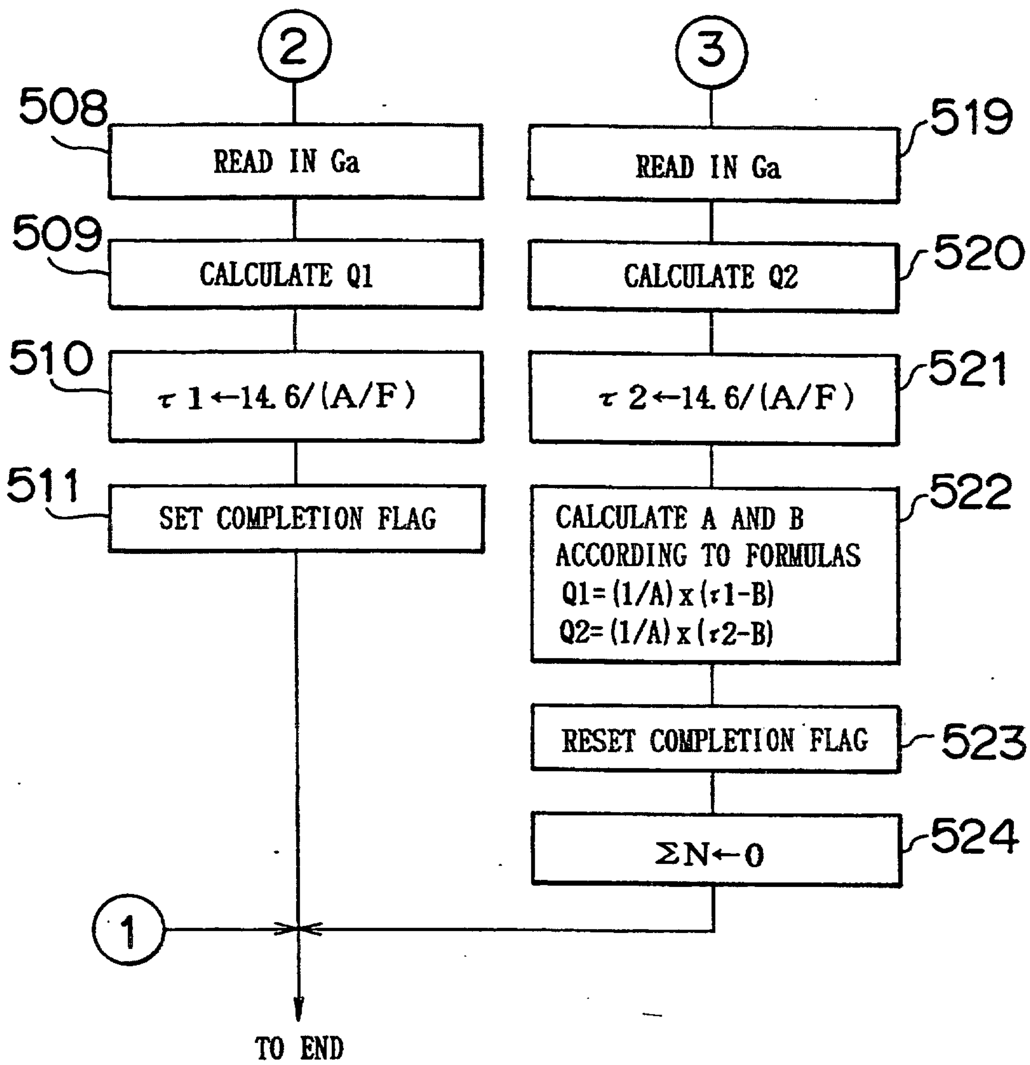
2
3
508
READ IN Ga
509
CALCULATE Q1
510
τ 1←14.6/(A/F)
511
SET COMPLETION FLAG
519
READ IN Ga
520
CALCULATE Q2
521
τ 2←14.6/(A/F)
522
CALCULATE A AND B ACCORDING TO FORMULAS
Q1=(1/A)x(τ1-B)
Q2=(1/A)x(τ2-B)
523
RESET COMPLETION FLAG
524
ΣN←0
1
TO END

FIG. 26

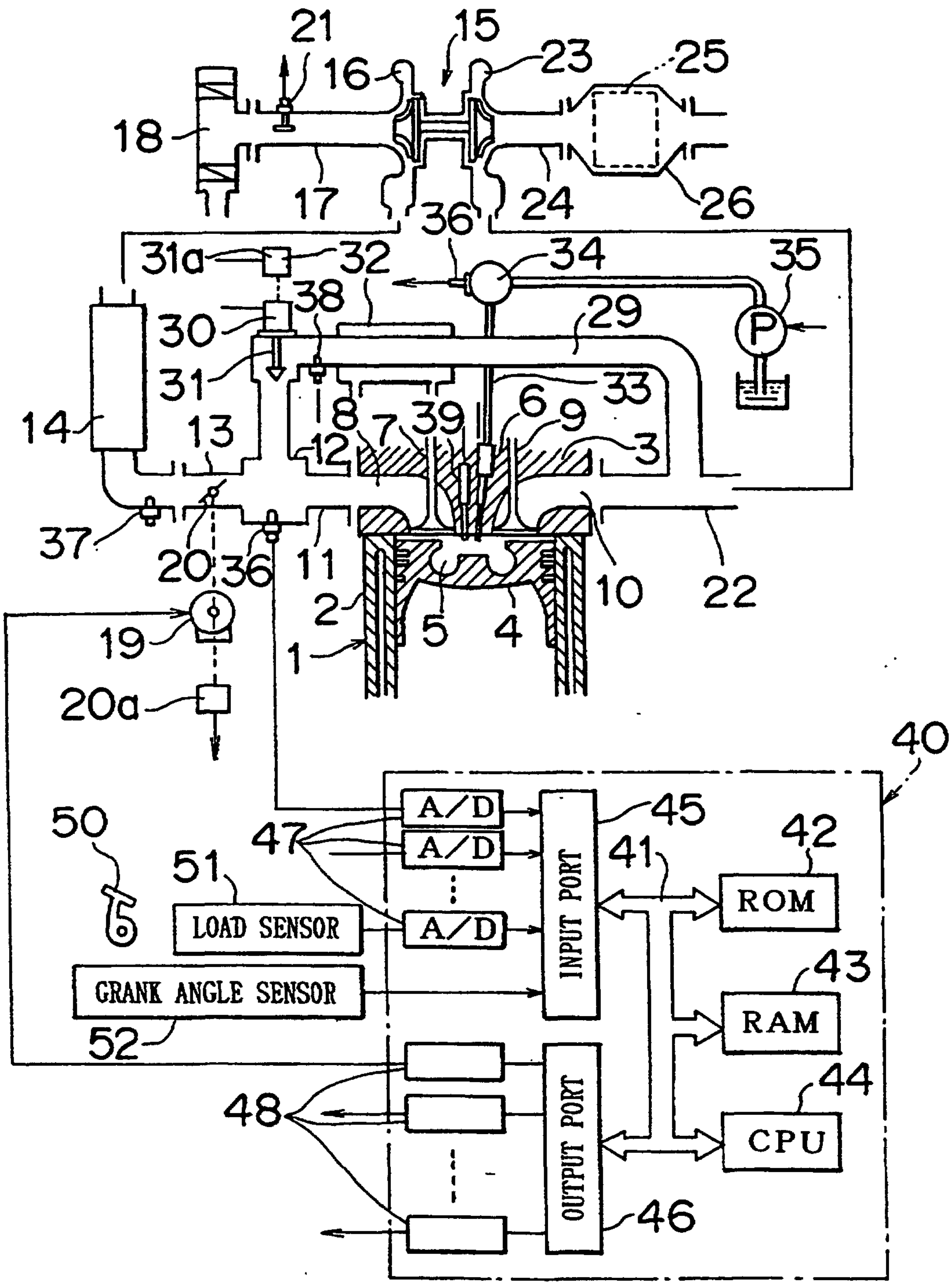
21
15
16
23
25
18
17
24
26
36
31a
32
34
35
P
38
30
29
31
33
14
13
8
7
39
6
9
3
12
37
20
36
11
10
22
2
5
4
1
19
20a
40
A/D
A/D
A/D
45
47
42
41
50
51
LOAD SENSOR
INPUT PORT
ROM
43
GRANK ANGLE SENSOR
RAM
52
44
48
CPU
OUTPUT PORT
46

FIG. 27

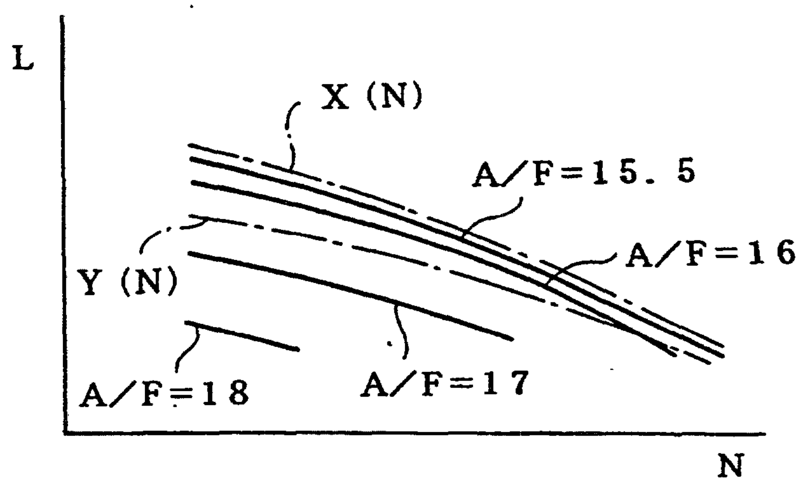


FIG. 28A

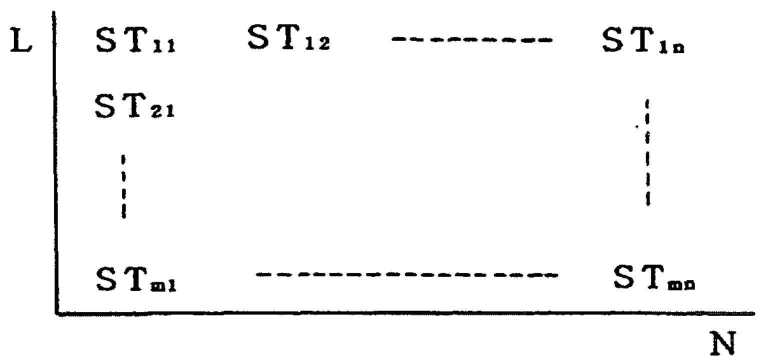


FIG. 28B

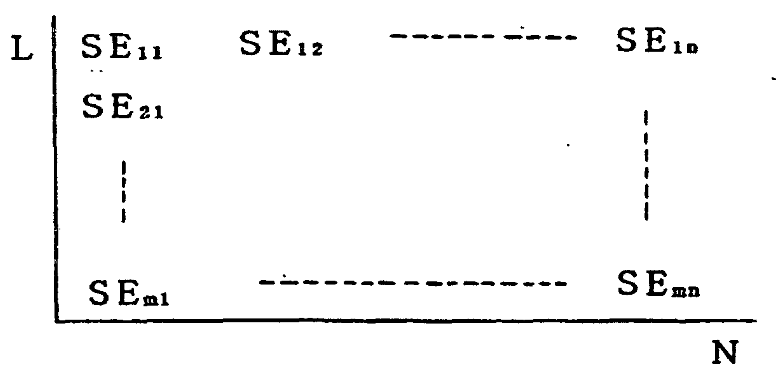

FIG. 29

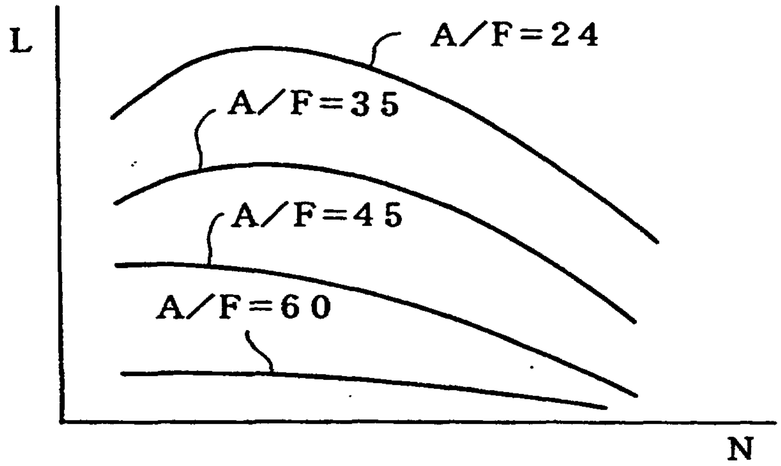


FIG. 30A

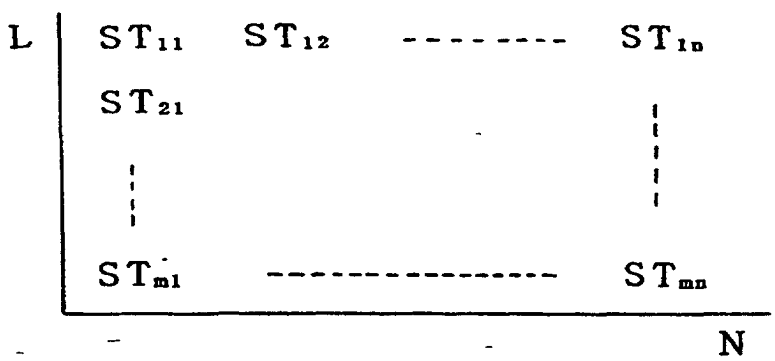


FIG. 30B

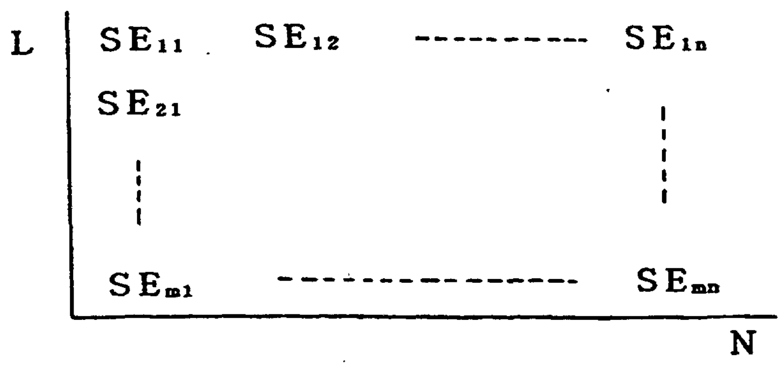

FIG. 31

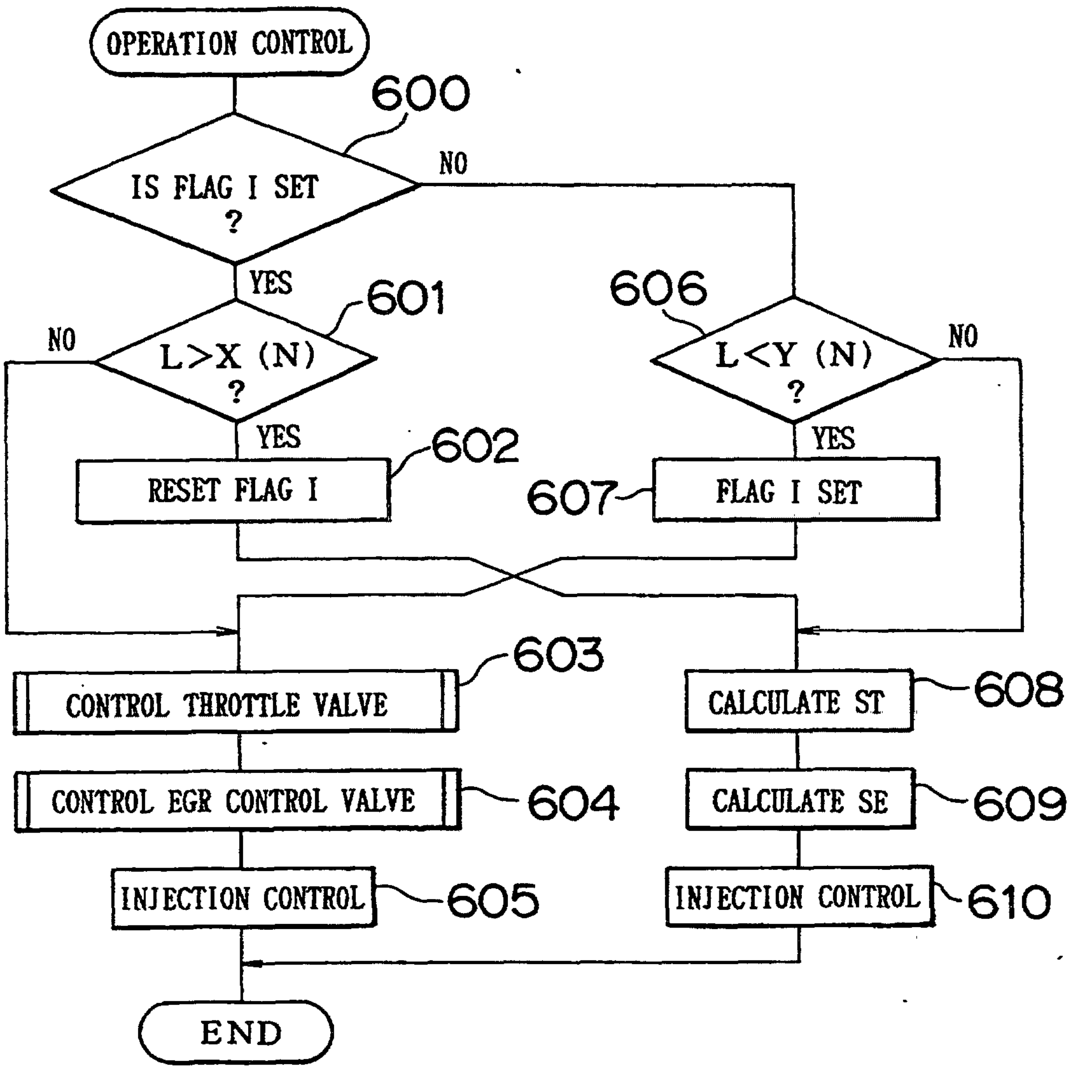
OPERATION CONTROL
600
IS FLAG I SET ?
NO
YES
601
L>X (N) ?
NO
YES
602
RESET FLAG I
606
L<Y (N) ?
NO
YES
607
FLAG I SET
603
CONTROL THROTTLE VALVE
604
CONTROL EGR CONTROL VALVE
605
INJECTION CONTROL
608
CALCULATE ST
609
CALCULATE SE
610
INJECTION CONTROL
END

FIG. 32

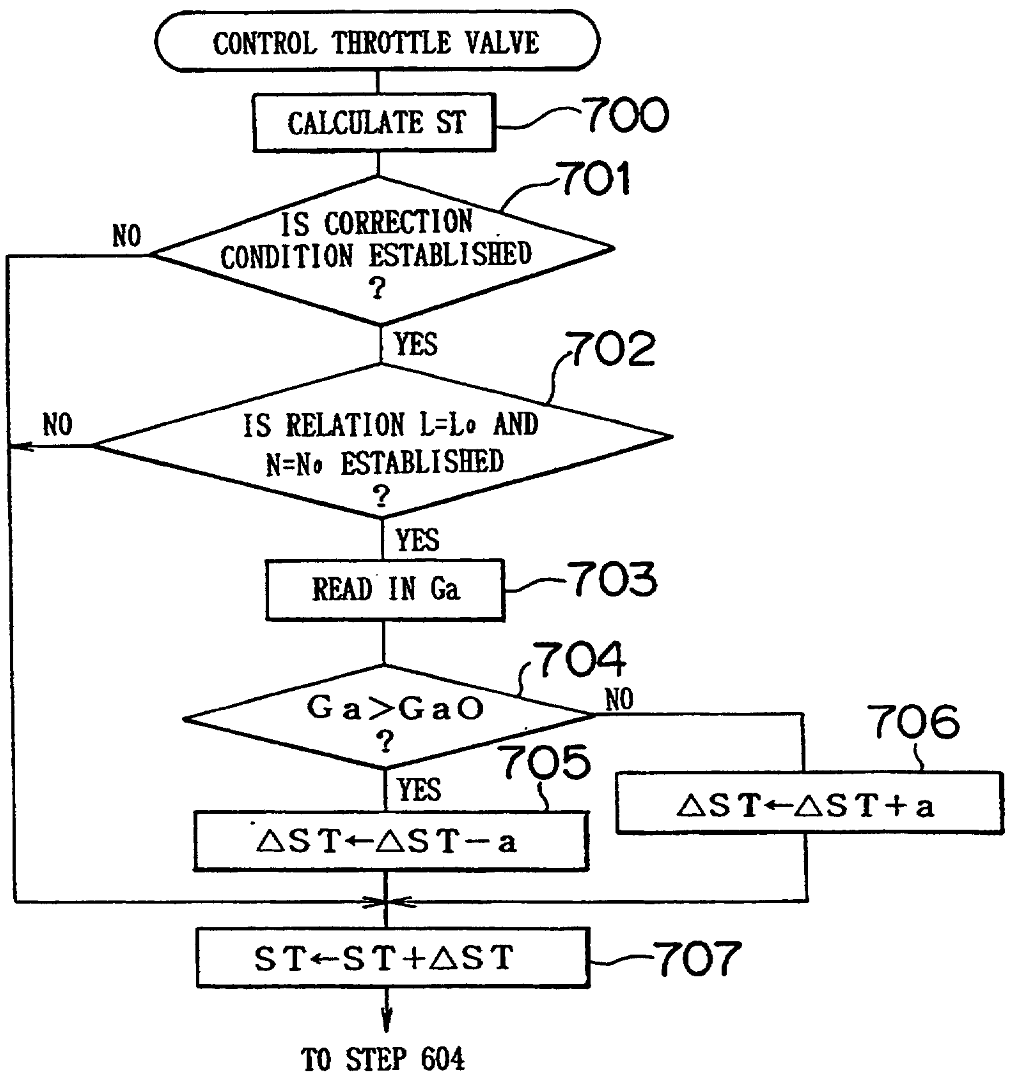
CONTROL THROTTLE VALVE
CALCULATE ST
700
701
IS CORRECTION CONDITION ESTABLISHED ?
NO
YES
702
IS RELATION L=Lo AND N=No ESTABLISHED ?
NO
YES
READ IN Ga
703
704
Ga>GaO ?
NO
YES
705
706
ΔST←ΔST−a
ΔST←ΔST+a
ST←ST+ΔST
707
TO STEP 604

FIG.33

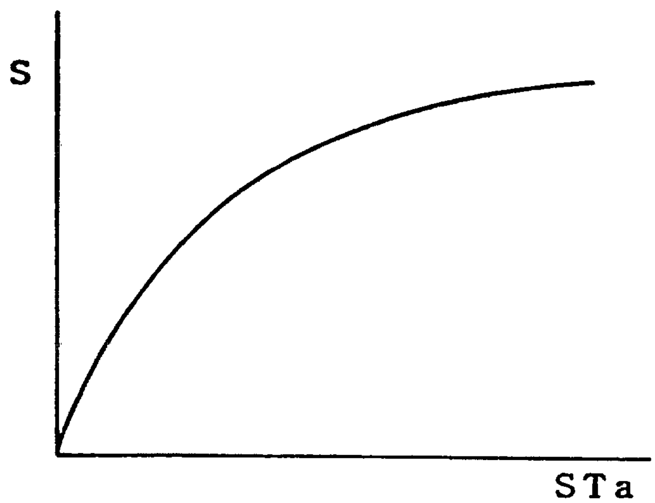

# FIG. 34

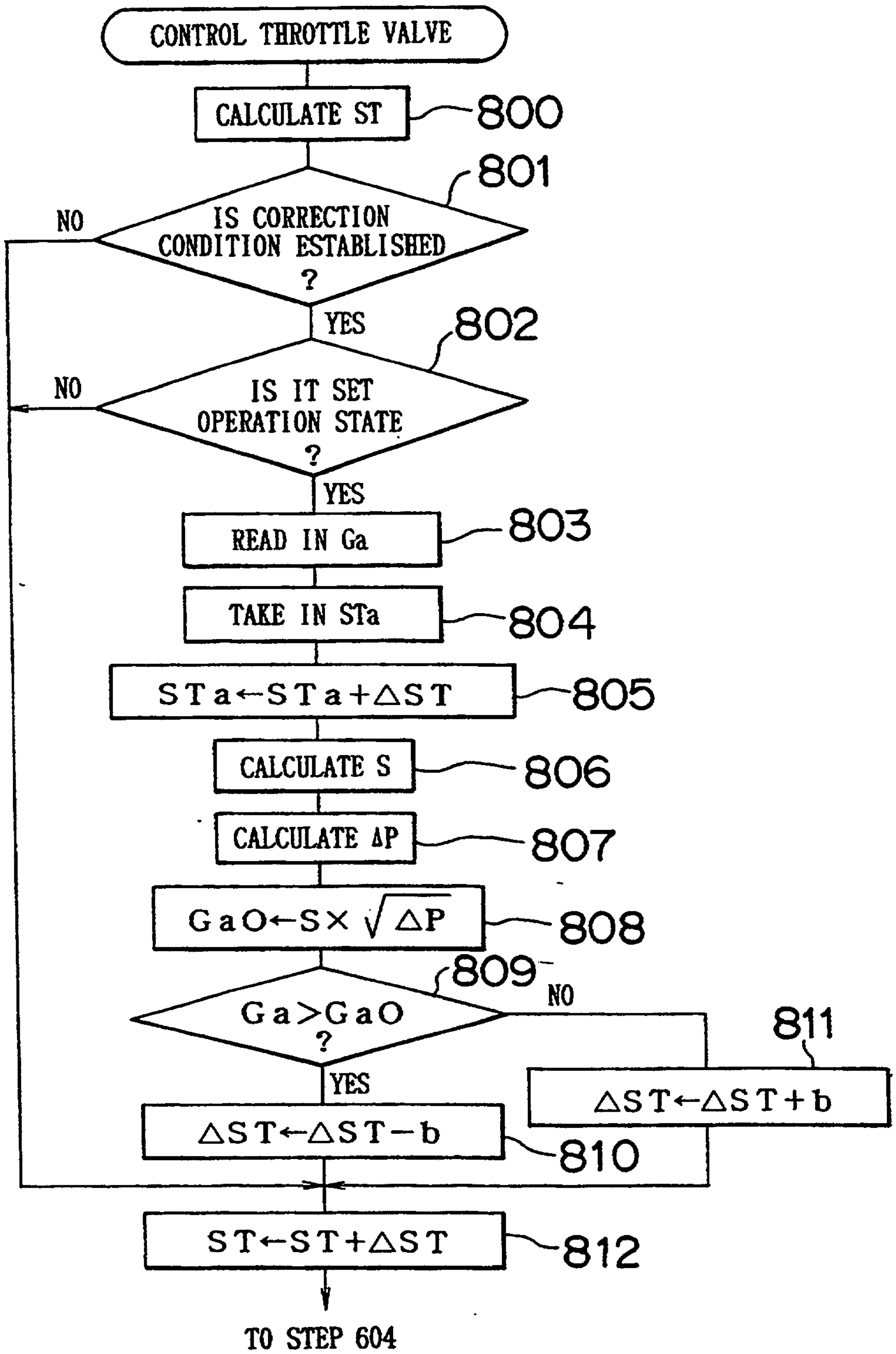
CONTROL THROTTLE VALVE
CALCULATE ST
800
801
IS CORRECTION CONDITION ESTABLISHED ?
NO
YES
802
IS IT SET OPERATION STATE ?
NO
YES
READ IN Ga
803
TAKE IN STa
804
STa←STa+ΔST
805
CALCULATE S
806
CALCULATE ΔP
807
GaO←S×√ΔP
808
809
Ga>GaO ?
NO
YES
ΔST←ΔST+b
811
ΔST←ΔST−b
810
ST←ST+ΔST
812
TO STEP 604

FIG. 35

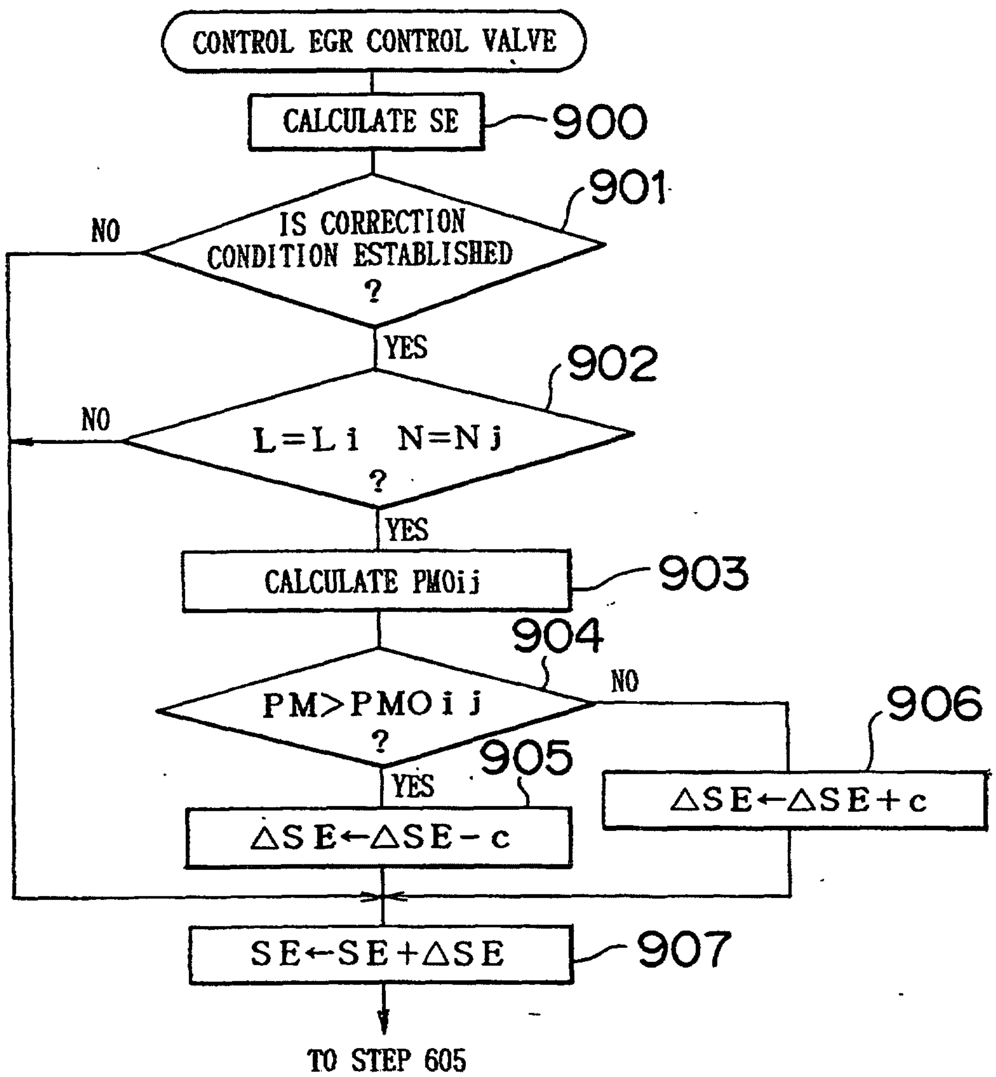
CONTROL EGR CONTROL VALVE
CALCULATE SE
900
IS CORRECTION CONDITION ESTABLISHED ?
901
NO
YES
L=Li N=Nj ?
902
NO
YES
CALCULATE PMOij
903
PM>PMOij ?
904
NO
YES
905
ΔSE←ΔSE−c
906
ΔSE←ΔSE+c
SE←SE+ΔSE
907
TO STEP 605

FIG. 36

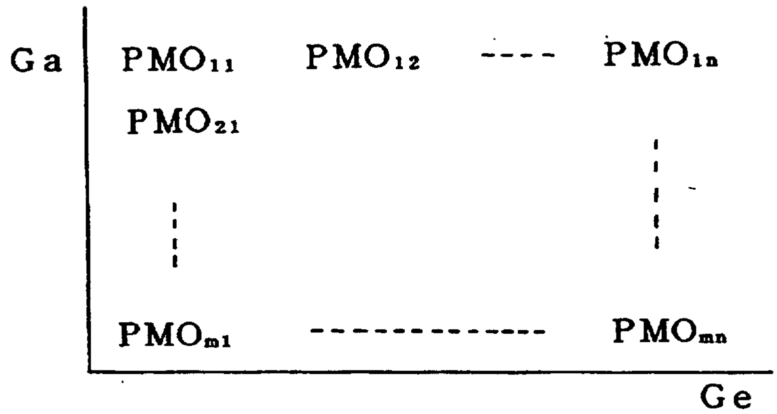


FIG. 37

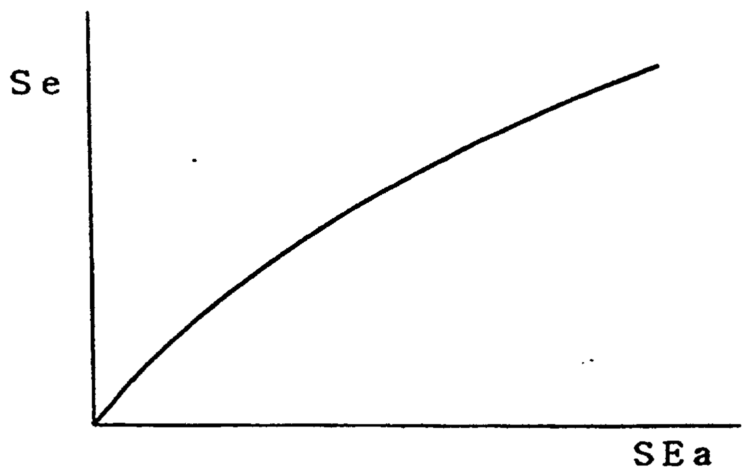

FIG. 38

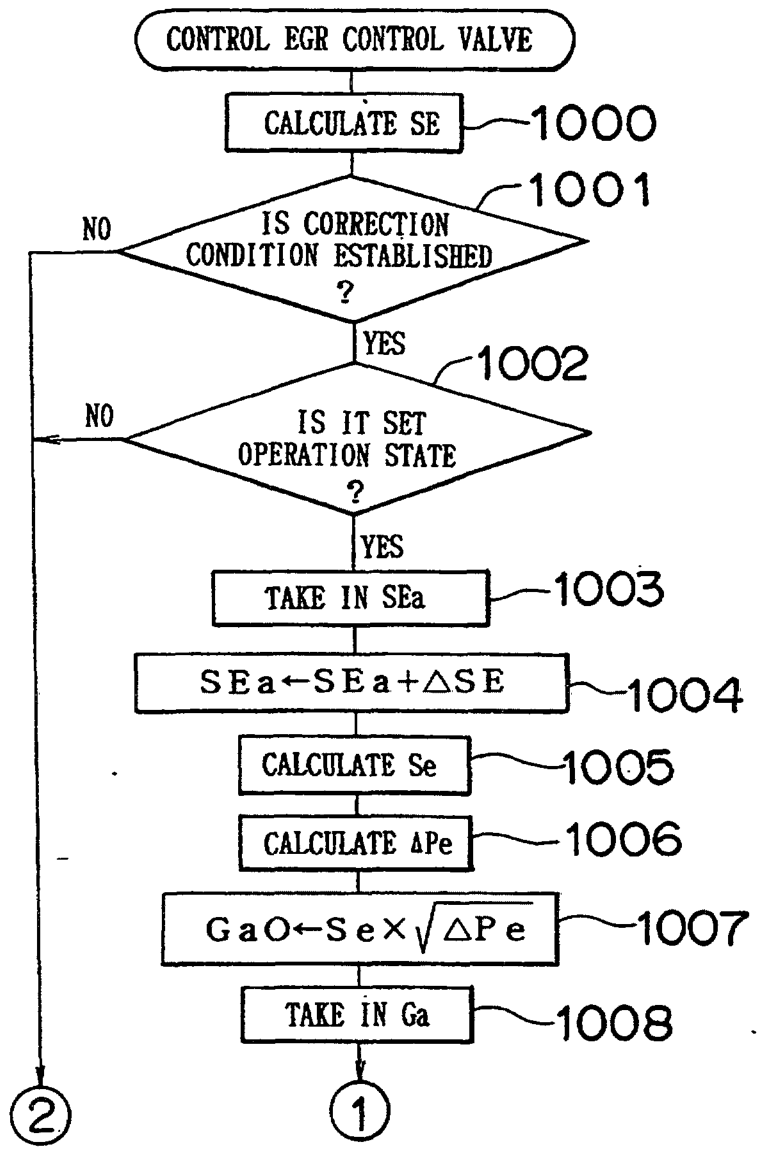
CONTROL EGR CONTROL VALVE
CALCULATE SE
1000
IS CORRECTION CONDITION ESTABLISHED ?
1001
NO
YES
IS IT SET OPERATION STATE ?
1002
NO
YES
TAKE IN SEa
1003
SEa←SEa+ΔSE
1004
CALCULATE Se
1005
CALCULATE ΔPe
1006
GaO←Se×√ΔPe
1007
TAKE IN Ga
1008
2
1

FIG. 39

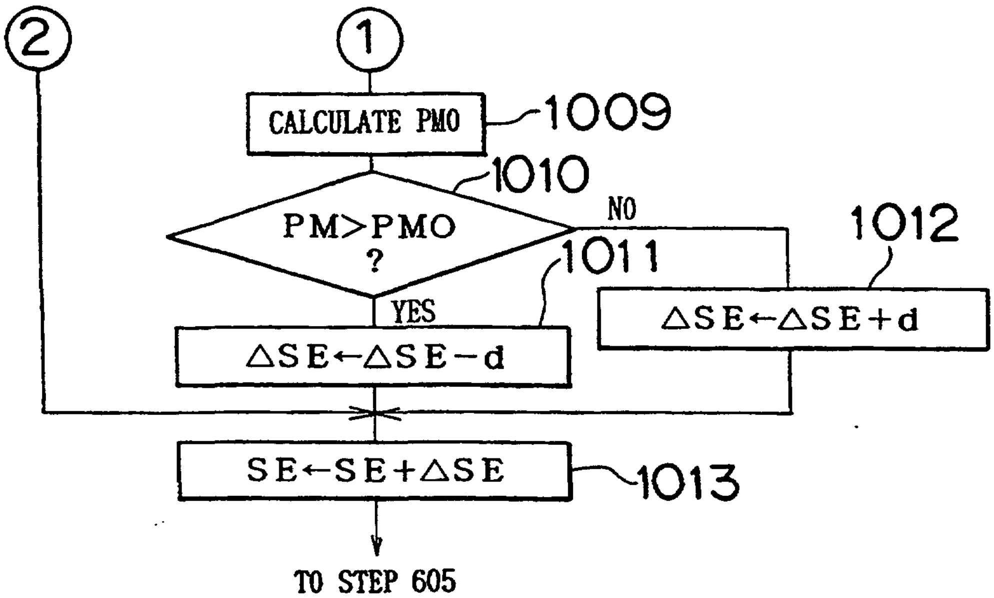

②
①
CALCULATE PMO
1009
1010
PM>PMO ?
NO
1012
1011
YES
△SE←△SE−d
△SE←△SE+d
SE←SE+△SE
1013
TO STEP 605

FIG. 40

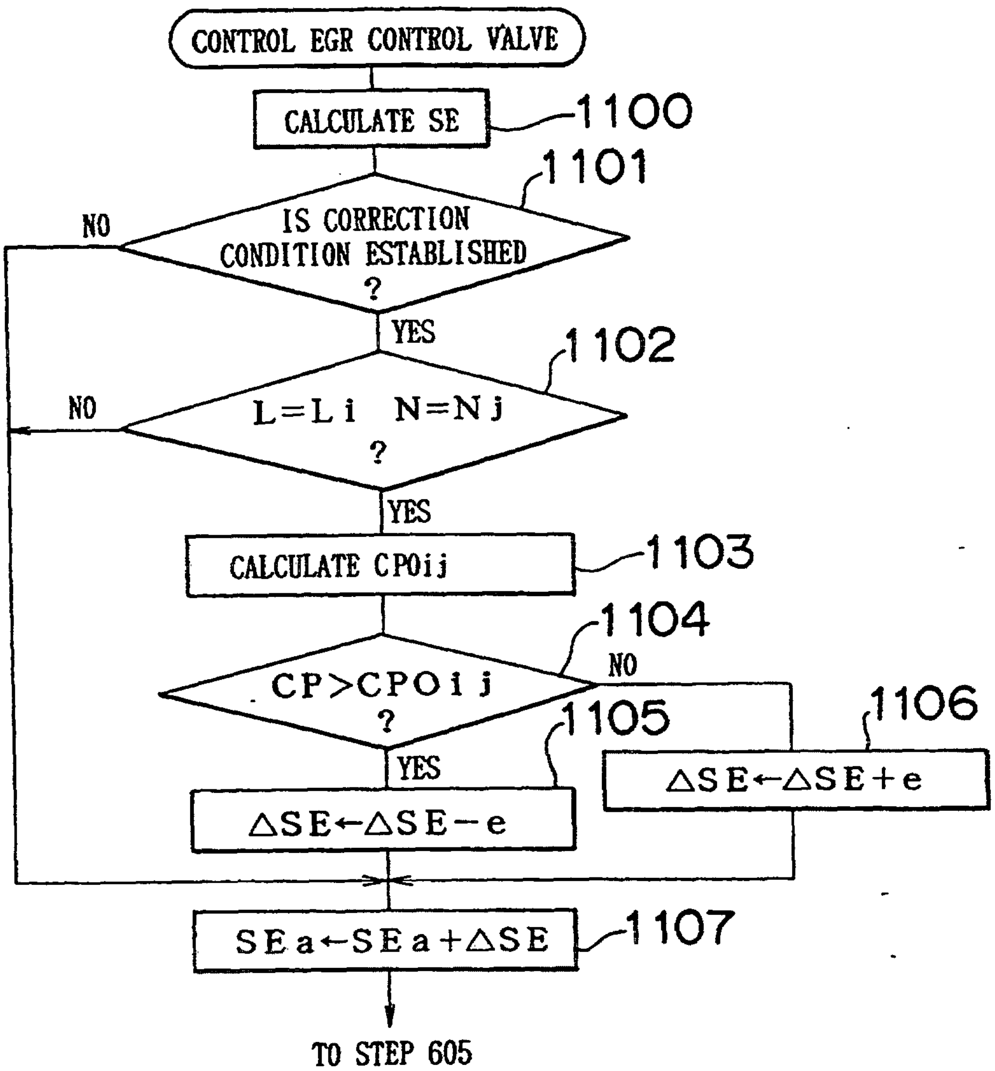
CONTROL EGR CONTROL VALVE
CALCULATE SE
1100
IS CORRECTION CONDITION ESTABLISHED ?
1101
NO
YES
L=Li N=Nj ?
1102
NO
YES
CALCULATE CP0ij
1103
CP>CP0ij ?
1104
NO
YES
1105
ΔSE←ΔSE−e
1106
ΔSE←ΔSE+e
SEa←SEa+ΔSE
1107
TO STEP 605

FIG.41

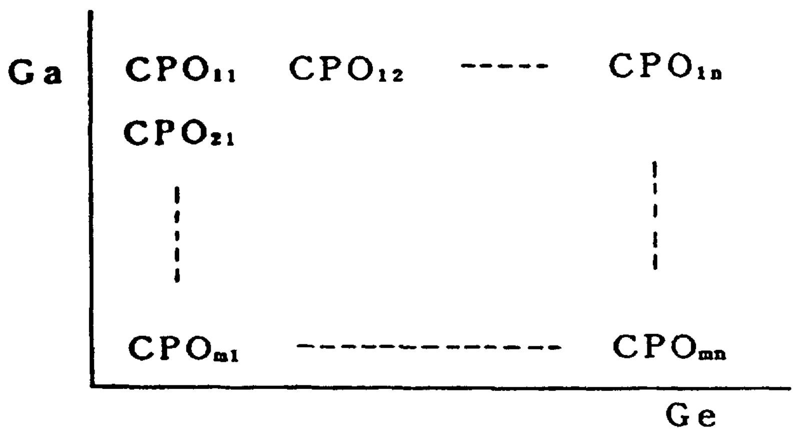

FIG. 42

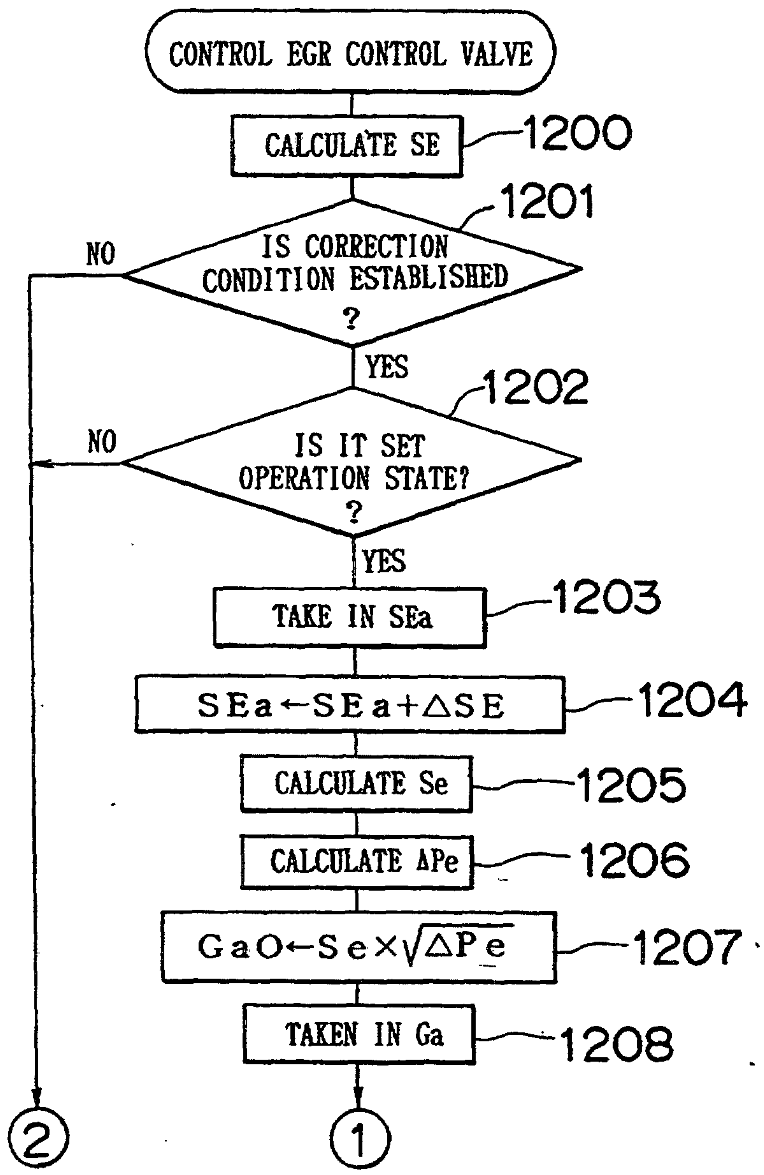
CONTROL EGR CONTROL VALVE
CALCULATE SE
1200
IS CORRECTION CONDITION ESTABLISHED ?
1201
NO
YES
IS IT SET OPERATION STATE? ?
1202
NO
YES
TAKE IN SEa
1203
SEa←SEa+ΔSE
1204
CALCULATE Se
1205
CALCULATE ΔPe
1206
GaO←Se×√ΔPe
1207
TAKEN IN Ga
1208
2
1

FIG. 43

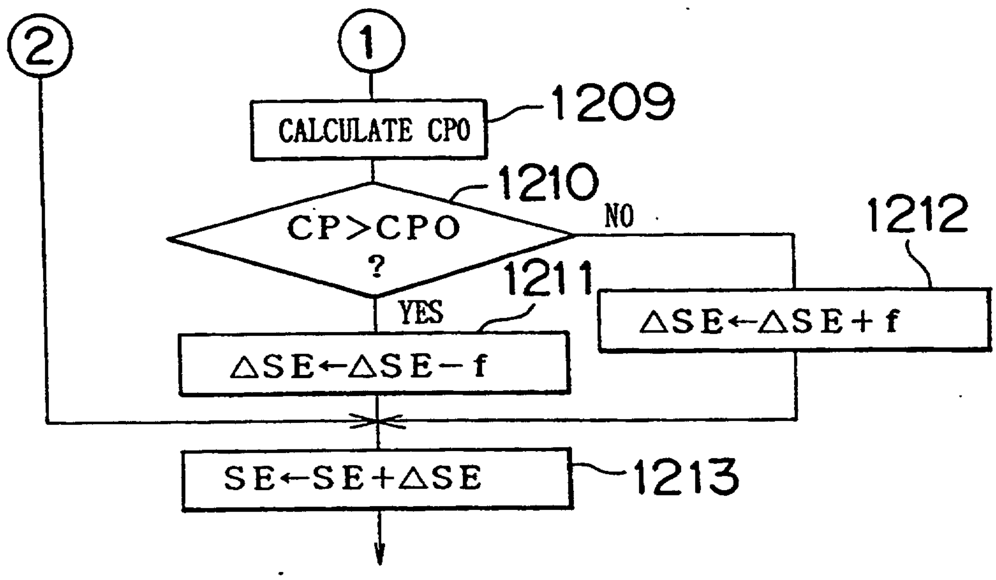

2
1
CALCULATE CPO
1209
1210
CP>CPO ?
NO
1212
1211
YES
ΔSE←ΔSE−f
ΔSE←ΔSE+f
SE←SE+ΔSE
1213